# EUROPEAN PATENT APPLICATION

(11) **EP 4 414 174 A1**
(43) Date of publication of application: **14.08.2024**
(21) Application number: 21959831.5
(22) Date of filing: 04.10.2021
(51) Int. Cl.: B33Y 50/00, B29C 64/386

(54) **DATA GENERATION METHOD, MANUFACTURING METHOD, PROCESSING METHOD, DATA GENERATION DEVICE, COMPUTER PROGRAM, RECORDING MEDIUM, AND DISPLAY METHOD**

(71) Applicant: NIKON CORPORATION, Minato-ku Tokyo 108-6290 (JP)
(72) Inventor: OKUNO, Satoshi, Tokyo 108-6290 (JP); SUGISHITA, Shigenori, Tokyo 108-6290 (JP); KURAMI, Toshimitsu, Tokyo 108-6290 (JP); ITO, Taiichi, Tokyo 140-0015 (JP); OGAWA, Eisaku, Tokyo 140-0015 (JP)
(74) Representative: Hoffmann Eitle
(86) International application number: PCT/JP2021/036616
(87) International publication number: WO 2023/058087

(57) **Abstract**

A data generation method includes: generating, based on an input of an input apparatus, model data representing a three-dimensional shape of an object that is additively built on a placement apparatus by using a build head; generating, based on the model data, display data for displaying a three-dimensional model related to the obj ect on a display apparatus; and generating, based on the model data, build data for additively building the object, the three-dimensional model related to the object includes a three-dimensional model of a build object before the additive building is completed, the display data includes interference information indicating an interference between the build head and at least one of the build object and the placement apparatus, when the re-input of the input apparatus is performed, the model data and the display data are re-generated based on the re-input, the interference information is updated based on the re-input.

## Description

### Technical Field

The present invention relates to a technical field of a data generation method, a data generation apparatus, a computer program, and a recording medium for generating data related to an interference of a build head for additively building an object or a processing head for processing an object, a build method for additively building an object, a processing metho for processing an object, and a display method and a display apparatus for displaying data related to an interference of a build head for additively building an object or a processing head for processing an object, for example.

### Background Art

A Patent literature 1 discloses an method for displaying a three-dimensional model in which a part that cannot be additively built by a 3D printer is visualized. However, the method disclosed in the Patent Literature 1 has such a technical problem that an interference of a build head for additively building an object or a processing head for processing an object is not considered.

### Citation List

### Patent Literature

Patent Literature 1: US2015/269289A1

### Summary of Invention

A first aspect provides a data generation method including: generating, based on an input of an input apparatus, model data representing a three-dimensional shape of an object that is additively built on a placement apparatus by using a build head; generating, based on the generated model data, display data for displaying a three-dimensional model related to the object on a display apparatus; and generating, based on the model data, build data for additively building the object, wherein the three-dimensional model related to the object includes a three-dimensional model of a build object before the additive building of the object is completed, the display data includes interference information indicating an interference between the build head and at least one of the build object and the placement apparatus, when a re-input of the input apparatus is performed, the model data and the display data are re-generated based on the re-input, the interference information is updated based on the re-input.

A second aspect provides a data generation method including: generating, based on an input of an input apparatus, model data representing a three-dimensional shape of an object that is additively built on a placement apparatus by using a build head; generating, based on the generated model data, display data for displaying a three-dimensional model related to the object on a display apparatus; and generating, based on the model data, build data for additively building the object, wherein the three-dimensional model related to the object includes a three-dimensional model of a build object before the additive building of the object is completed, the display data includes interference information indicating an interference between the build head and at least one of the build object and the placement apparatus, the generating the display data includes generating display data for displaying, on the display apparatus, the three-dimensional model representing the build obj ect at a designated point in a period from a start point to an end point of the additive building together with the interference information of the interference that is predicted to occur at the designated point.

A third aspect provides a build method for building the object by a build apparatus using the data generation method provided by the first or second aspect.

A fourth aspect provides a data generation method for generating data related to a display of an interference between a processing head and a second object that is predicted to occur when the processing head processes a first object, wherein the data generation method includes generating display data for displaying a three-dimensional model representing the second object on a display apparatus based on model data representing a three-dimensional shape of the first object, the display data includes, as interference information, interference depth information indicating a degree of the interference between the processing head and the second object.

A fifth aspect provides a data generation method for generating data related to a display of an interference between a processing head and a second object that is predicted to occur when the processing head processes a first object, wherein the data generation method includes generating display data for displaying a three-dimensional model representing the second object on a display apparatus based on model data representing a three-dimensional shape of the first object, the display data includes interference information indicating the interference between the processing head and the second object, the generating the display data includes generating display data for displaying, on the display apparatus, the three-dimensional model representing the second object at a designated point in a period from a start point to an end point of the processing together with the interference information of the interference that is predicted to occur at the designated point.

A sixth aspect provides a data generation method for generating data related to a display of an interference between a processing head and a second object that is predicted to occur when the processing head processes a first object, wherein the data generation method includes: setting a parameter designating a shape of the first object based on an input of an input apparatus; generating model data representing a three-dimensional shape of the first object based on the parameter; and generating display data for displaying a three-dimensional model representing the second object on a display apparatus based on the model data representing the three-dimensional shape of the first object, the display data includes interference information related to the interference between the processing head and the second object, the generating the display data includes generating display data for displaying, on the display apparatus, a display screen including a parameter display screen on which the parameter is displayable and an output screen on which the interference information is displayable.

A seventh aspect provides a data generation method for generating data related to a display of an interference between a processing head and a second object that is predicted to occur when the processing head processes a first object, wherein the data generation method includes: setting a parameter designating a shape of the first object based on an input of an input apparatus; generating model data representing a three-dimensional shape of the first object based on the parameter; and generating display data for displaying a three-dimensional model representing the second object on a display apparatus based on the model data representing the three-dimensional shape of the first object, the display data includes interference information indicating the interference between the processing head and the second object, the data generation method includes generating display data for displaying, on the display apparatus, a display object for suggesting a re-setting of the parameter to a user together with the interference information.

An eighth aspect provides a processing method for processing the object by a processing apparatus using the data generation method provided any one of the third to seventh aspects.

A ninth aspect provides a data generation method including: generating, based on an input of an input apparatus, model data representing a three-dimensional shape of an object that is processed on a placement apparatus by using a processing head; generating, based on the generated model data, display data for displaying a three-dimensional model related to the object on a display apparatus; and generating, based on the model data, processing data for processing the object, wherein the three-dimensional model related to the object includes a three-dimensional model of a processed object before the processing of the object is completed, the display data includes interference information indicating an interference between the processing head and at least one of the processed object and the placement apparatus, when a re-input of the input apparatus is performed, the model data and the display data are re-generated based on the re-input, the interference information is updated based on the re-input.

A tenth aspect provides a data generation method including: generating, based on an input of an input apparatus, model data representing a three-dimensional shape of an object that is processed on a placement apparatus by using a processing head; generating, based on the generated model data, display data for displaying a three-dimensional model related to the object on a display apparatus; and generating, based on the model data, processing data for processing the object, wherein the three-dimensional model related to the object includes a three-dimensional model of a processed object before the processing of the object is completed, the display data includes interference information indicating an interference between the processing head and at least one of the processed object and the placement apparatus, the generating the display data includes generating display data for displaying, on the display apparatus, the three-dimensional model representing the processed object at a designated point in a period from a start point to an end point of the processing together with the interference information of the interference that is predicted to occur at the designated point.

A eleventh aspect provides a data generation apparatus configured to: generate, based on an input of an input apparatus, model data representing a three-dimensional shape of an object that is additively built on a placement apparatus by using a build head; generate, based on the generated model data, display data for displaying a three-dimensional model related to the object on a display apparatus; and generate, based on the model data, build data for additively building the object, wherein the three-dimensional model related to the object includes a three-dimensional model of a build object before the additive building of the object is completed, the display data includes interference information indicating an interference between the build head and at least one of the build object and the placement apparatus, when a re-input of the input apparatus is performed, the model data and the display data are re-generated based on the re-input, the interference information is updated based on the re-input.

A twelfth aspect provides a data generation apparatus configured to: generate, based on an input of an input apparatus, model data representing a three-dimensional shape of an object that is additively built on a placement apparatus by using a build head; generate, based on the generated model data, display data for displaying a three-dimensional model related to the object on a display apparatus; and generate, based on the model data, build data for additively building the object, wherein the three-dimensional model related to the object includes a three-dimensional model of a build object before the additive building of the object is completed, the display data includes interference information indicating an interference between the build head and at least one of the build object and the placement apparatus, the data generation apparatus includes generating display data for displaying, on the display apparatus, the three-dimensional model representing the build obj ect at a designated point in a period from a start point to an end point of the additive building together with the interference information of the interference that is predicted to occur at the designated point.

A thirteenth aspect provides a data generation apparatus configured to generate data related to a display of an interference between a processing head and a second object that is predicted to occur when the processing head processes a first object, wherein the data generation apparatus generates display data for displaying a three-dimensional model representing the second object on a display apparatus based on model data representing a three-dimensional shape of the first object, the display data includes interference depth information indicating a degree of the interference between the processing head and the second object.

A fourteenth aspect provides a data generation apparatus configured to generate data related to a display of an interference between a processing head and a second object that is predicted to occur when the processing head processes a first object, wherein the data generation apparatus generates display data for displaying a three-dimensional model representing the second object on a display apparatus based on model data representing a three-dimensional shape of the first object, the display data includes interference information indicating the interference between the processing head and the second object, the data generation apparatus generates display data for displaying, on the display apparatus, the three-dimensional model representing the object at a designated point in a period from a start point to an end point of the processing together with the interference information of the interference that is predicted to occur at the designated point.

A fifteenth aspect provides a data generation apparatus configured to generate data related to a display of an interference between a processing head and a second object that is predicted to occur when the processing head processes a first object, wherein the data generation apparatus is configured to: set a parameter designating a shape of the first object based on an input of an input apparatus; generate model data representing a three-dimensional shape of the first object based on the parameter; and generate display data for displaying a three-dimensional model representing the second object on a display apparatus based on the model data representing the three-dimensional shape of the first object, the display data includes interference information related to the interference between the processing head and the second object, the data generation apparatus generates display data for displaying, on the display apparatus, a display screen including a parameter display screen on which the parameter is displayable and an output screen on which the interference information is displayable.

A sixteenth aspect provides a data generation apparatus configured to generate data related to a display of an interference between a processing head and a second object that is predicted to occur when the processing head processes a first object, wherein the data generation apparatus is configured to: set a parameter designating a shape of the first object based on an input of an input apparatus; generate model data representing a three-dimensional shape of the first object based on the parameter; and generate display data for displaying a three-dimensional model representing the second object on a display apparatus based on the model data representing the three-dimensional shape of the first object, the display data includes interference information indicating the interference between the processing head and the second object, the data generation apparatus generates display data for displaying, on the display apparatus, a display object for suggesting a re-setting of the parameter to a user together with the interference information.

A seventeenth aspect provides a computer program that allows a computer to perform the data generation method provided any one of the first to second fourth to seventh and ninth to tenth aspects.

An eighteenth aspect provides a recording medium on which the computer program provided by the seventeenth aspect is recorded.

A nineteenth aspect provides a display method including: generating display data based on model data representing a three-dimensional shape of an object that is additively built on a placement apparatus by using a build head, model data of the build head, and model data of the placement apparatus; and displaying, based on the display data, a three-dimensional model related to the object, a three-dimensional model of the build head, and a three-dimensional model of the placement apparatus on a display apparatus, wherein the three-dimensional model related to the object includes a three-dimensional model of a build object before the additive building of the object is completed, the display method displays, on the display apparatus, interference information indicating an interference between the build head and at least one of the build object and the placement apparatus together with the three-dimensional model of the build object, the three-dimensional model of the build head, and the three-dimensional model of the placement apparatus.

An operation and another advantage of the present invention will be apparent from an example embodiment described below.

### Brief Description of Drawings

[FIG. 1] FIG. 1 is a block diagram that illustrates a configuration of a build system in a present example embodiment.
[FIG. 2] FIG. 2 is a cross-sectional view that illustrates a configuration of the build apparatus in the present example embodiment.
[FIG. 3] FIG. 3 is a system configuration diagram that illustrates a system configuration of the build apparatus in the present example embodiment.
[FIG. 4] FIG. 4 is a block diagram that illustrates a configuration of a data generation server in the present example embodiment.
[FIG. 5] FIG. 5 is a block diagram that illustrates a configuration of a terminal apparatus in the present example embodiment.
[FIG. 6] FIG. 6 is a flowchart that illustrates a flow of an operation (namely, an operation for additively building a three-dimensional structural object, and for example, a build contract operation) performed by the build system.
[FIG. 7] FIG. 7 is a planar view that illustrates one example of a setting GUI.
[FIG. 8] FIG. 8 is a planar view that illustrates one example of an input screen for setting shape information related to a shape of a pipe.
[FIG. 9] FIG. 9 is a planar view that illustrates a wire frame model of the pipe.
[FIG. 10] FIG. 10 is a planar view that illustrates a surface model of the pipe associated with a plurality of points through which the pipe passes.
[FIG. 11] FIG. 11 is a cross-sectional view that illustrates a head model, a stage model, a workpiece model, and a uncompleted build model.
[FIG. 12] FIG. 12 is a cross-sectional view that illustrates the head model, the stage model, the workpiece model, and the uncompleted build model.
[FIG. 13] FIG. 13 illustrates an interference depth.
[FIG. 14] FIG. 14 illustrates a display example of interference information.
[FIG. 15] FIG. 15 illustrates a display example of the interference information.
[FIG. 16] FIG. 16 illustrates a display example of the interference information.
[FIG. 17] FIG. 17 illustrates a display example of the interference information.
[FIG. 18] FIG. 18 illustrates a display example of a progress object.
[FIG. 19] FIG. 19 illustrates a display example of the progress object to which an index indicating an interference time point is added.
[FIG. 20] FIG. 20 illustrates a display example of the interference information including information related to the interference depth.
[FIG. 21] FIG. 21 illustrates a display example of the progress object to which the index indicating the interference time point is added.
[FIG. 22] FIG. 22 illustrates a display example of the interference information.
[FIG. 23] FIG. 23 illustrates a display example of a suggestion object for suggesting a re-setting of the shape information to a terminal user.
[FIG. 24] Each of FIG. 24A and FIG. 24B is a perspective view that illustrates an positional relationship between the three-dimensional structural object and the suggestion object for suggesting the re-setting of the shape information to the terminal user.

### Description of Example embodiments

Next, with reference to drawings, an example embodiment of a data generation method, a build method, a processing method, a data generation apparatus, a computer program, a recording medium, and a display method will be described. In the below-described description, the example embodiment of the data generation method, the build method, the processing method, the data generation apparatus, the computer program, the recording medium, and the display method will be described by using a build system SYS. Note that the build system SYS may be referred to as a processing system.

### (1) Configuration of Build System SYS

Firstly, a configuration of the build system will be described.

### (1-1) Entire Configuration of Build System SYS

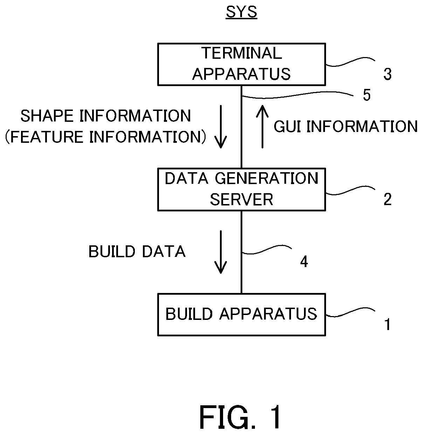

Firstly, with reference to FIG. 1, one example of an entire configuration of the build system SYS will be described. FIG. 1 is a block diagram that illustrates the entire configuration of the build system SYS.

The build system SYS includes a build apparatus 1 and a data generation server 2. The build apparatus 1 and the data generation server 2 are configured to communicate with each other through a communication network 4 that includes at least one of a wired communication network and a wireless communication network. The data generation server 2 is configured to communicate with a terminal apparatus 3 through a communication network 5 that includes at least one of a wired communication network and a wireless communication network. Note that the communication networks 4 and 5 may be different communication networks or the same communication network. However, the build apparatus 1 and the data generation server 2 may not be configured to communicate with each other. Namely, the build apparatus 1 may perform a below-described operation in an offline state in which it is disconnected from the data generation server 2. The data generation server 2 may perform a below-described operation in an offline state in which it is disconnected from the build apparatus 1.

The terminal apparatus 3 may be an apparatus that constitutes a part of the build system SYS. Namely, the build system SYS may include the terminal apparatus 3. Alternatively, the build system SYS may not include the terminal apparatus 3. In this case, any apparatus that is configured to communicate with the data generation server 2 of the build system SYS (for example, an information processing apparatus such as a computer of a below-described terminal user) may be used as the terminal apparatus 3.

The data generation server 2 may be installed at a location at which the build apparatus 1 is installed, or may be installed at a location different from the location at which the build apparatus 1 is installed. The data generation server 2 may be installed at a location at which the terminal apparatus 3 is installed, or may be installed at a location different from the location at which the terminal apparatus 3 is installed. As one example, the data generation server 2 may be installed at a business location different from a business location at which at least one of the build apparatus 1 and the terminal apparatus 3 is installed. As another example, the data generation server 2 may be installed in a country different from a country in which at least one of the build apparatus 1 and the terminal apparatus 3 is installed.

The build apparatus 1 is an apparatus that is configured to build a three-dimensional structural object (namely, a three-dimensional object that has a magnitude (a size) in each of three-dimensional directions). Especially, in the present example embodiment, the build apparatus 1 builds the three-dimensional structural object by performing an additive manufacturing. Namely, the build apparatus 1 additively builds the three-dimensional structural object. Note that the build apparatus 1 may be referred to as a processing apparatus.

The data generation server 2 is an apparatus that is configured to generate three-dimensional model data representing a three-dimensional model of the three-dimensional structural object to be additively built by the build apparatus 1. Incidentally, in the below-described description, the three-dimensional model of the three-dimensional structural object to be additively built is referred to as an "additive build model", and the three-dimensional model data representing the additive build model is referred to as "additive build model data". Note that the data generation server 2 may be referred to as a data generating apparatus. The data generation server 2 transmits (namely, outputs, the same may be applied to the below-described description) the generated additive build model data to the build apparatus 1 through the communication network 4. The build apparatus 1 builds the three-dimensional structural object based on the additive build model data transmitted from the data generation server 2.

The data generation server 2 is also an apparatus that is configured to predict whether or not an interference of a member of the build apparatus 1 (for example, a processing head 121 described below) will occur in a process of building the three-dimensional structural object by the build apparatus 1. Incidentally, a detail of an operation for predicting whether or not the interference of the member of the build apparatus 1 (for example, the processing head 121 described below) will occur will be described in detail later.

The terminal apparatus 3 is an apparatus that is operable by a user to set (namely, designate) feature information related to a feature of the three-dimensional structural object to be additively built by the build apparatus 1. In the below-describe description, the user who is allowed to operate the terminal apparatus 3 is referred to as the "terminal user". The terminal user may be typically a person who wants to build the three-dimensional structural object by using the build apparatus 1. In the present example embodiment, an example in which the terminal apparatus 3 is an apparatus that is operable by the terminal user to set, as one example of the feature information, shape information related to a shape of the three-dimensional structural object to be additively built by the build apparatus 1 will be described.

The terminal apparatus 3 transmits the shape information set by the terminal user to the data generation server 2 through the communication network 5. The data generation server 2 generates the additive build model data based on the shape information transmitted from the terminal apparatus 3. Namely, the data generation server 2 generates the additive build model data representing the additive build model of the three-dimensional structural object having the shape that is designated by the shape information set by the terminal user. As a result, the build apparatus 1 builds the three-dimensional structural object having the shape that is designed by the shape information set by the terminal user.

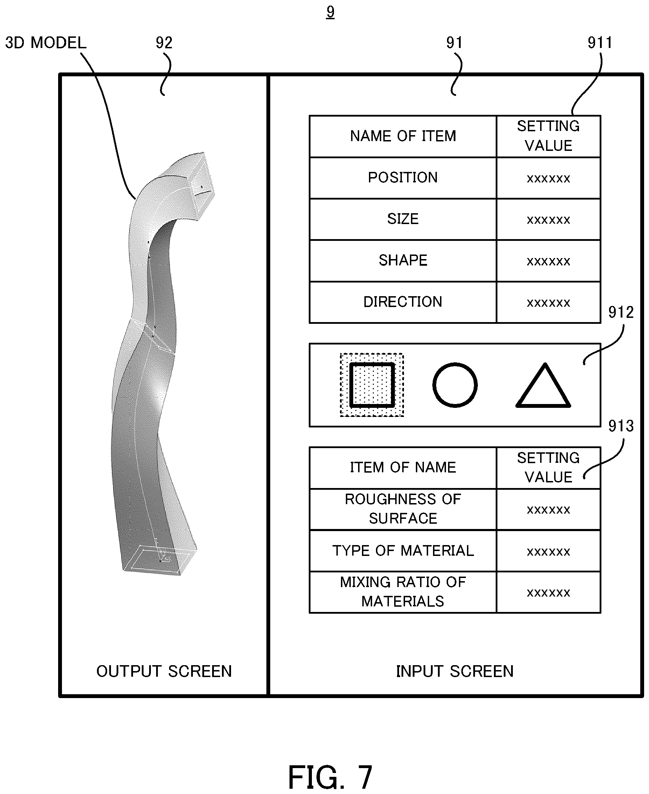

The terminal apparatus 3 may display a setting GUI (Graphical User Interface) 9 (see FIG. 7 and so on) that includes an input screen 91 that is operable by the user to set the shape information, as described in detail later. In this case, the data generation server 2 transmits GUI information related to the setting GUI 9 to the terminal apparatus 3 through the communication network 5. The terminal apparatus 3 displays the setting GUI 9 based on the GUI information. The terminal user sets the shape information by using the setting GUI 9 displayed by the terminal apparatus 3.

The terminal user may be the same as or different from a user who is allowed to operate the data generation server 2 (hereinafter, it is referred to as a "server user"). The terminal user may be the same as or different from a user who is allowed to operate the build apparatus 1 (hereinafter, it is referred to as a "build user"). In a case where the terminal user is different from the build user, the build system SYS may be considered to be equivalent to a build contract system in which the terminal user is a consignor who requires the build user to build the three-dimensional structural object and the build user is a consignee who is required to build the three-dimensional structural object required to be built by the terminal user. Namely, a below-described operation performed by the build system SYS may be considered to be equivalent to a build contract operation (a build contract method).

### (1-2) Configuration of Build Apparatus 1

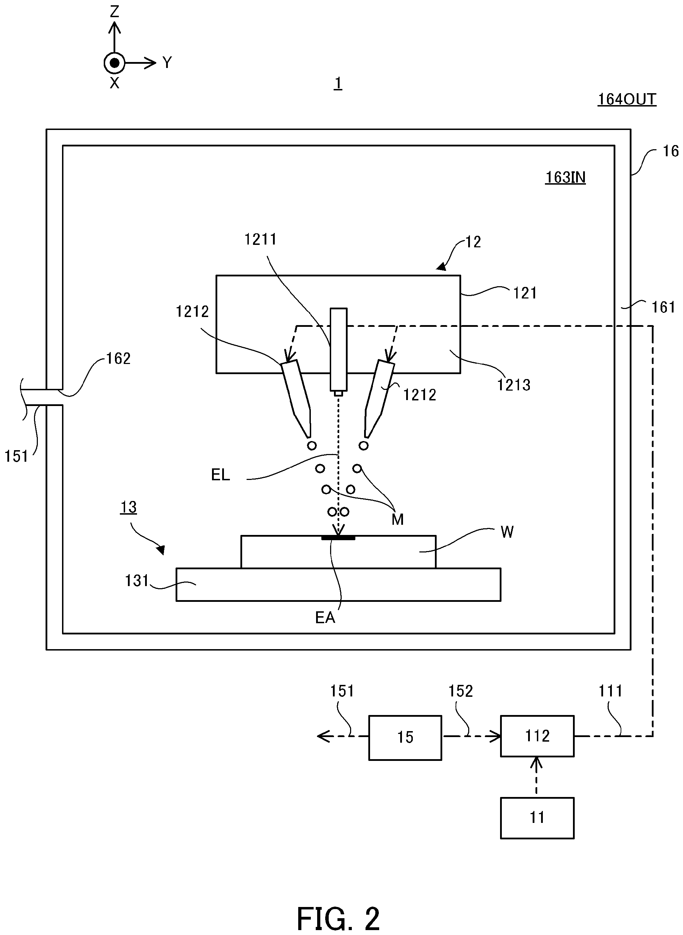

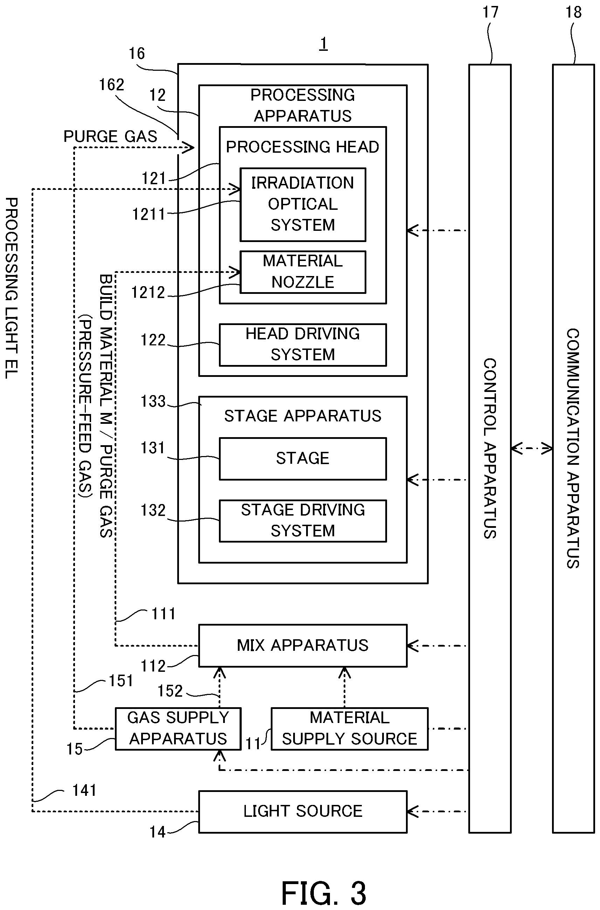

Next, with reference to FIG. 2 and FIG. 3, a configuration of the build apparatus 1 will be described. FIG. 2 is a cross-sectional view that illustrates one example of the configuration of the build apparatus 1 in the present example embodiment. FIG. 3 is a system configuration diagram that illustrates one example of a system configuration of the build apparatus 1 in the present example embodiment.

In the below-described description, a positional relationship of various components included in the build apparatus 1 will be described by using a build coordinate system corresponding to an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction or a gravity direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be the gravity direction. Moreover, an XY plane may be a horizontal direction.

The build apparatus 1 is configured to perform a build operation for forming the three-dimensional structural object. The build apparatus 1 is configured to form the three-dimensional structural object on a workpiece W that is a base member for forming the three-dimensional structural object. In a case where the workpiece W is a below-described stage 131, the build apparatus 1 is configured to form the three-dimensional structural object on the stage 131. In a case where the workpiece W is an existing object placed on the stage 131 (alternatively, placed on the stage 131), the build apparatus 1 may be configured to form the three-dimensional structural object on the existing object. In this case, the build apparatus 1 may form the three-dimensional structural object that is integrated with the existing object. An operation for forming the three-dimensional structural object that is integrated with the existing object may be considered to be equivalent to an operation for adding a new structural object to the existing object. Note that the existing structural object may be an item that needs to be repaired having a missing part, for example. The build apparatus 1 may form the three-dimensional structural object on the item that needs to be repaired to fill in the missing part of the item that needs to be repaired. Alternatively, the build apparatus 1 may form the three-dimensional structural object that is separable from the existing object. Note that FIG. 2 illustrates an example in which the workpiece W is the existing object held by the stage 131. Moreover, in the below-described description, the example in which the workpiece W is the existing object held by the stage 131 will be described.

In the present example embodiment, an example in which the build apparatus 1 is an apparatus that is configured to build the three-dimensional structural object by performing the additive manufacturing (the additive building) based on a Laser Metal Deposition (LMD). In this case, it can be said that the build apparatus 1 is a 3D printer that forms an object by using an Additive layer manufacturing technique. Note that the Additive layer manufacturing technique may be referred to as a Rapid Prototyping, a Rapid Manufacturing or an Additive Manufacturing. The Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Remelting, a Laser Direct Casting, a Laser Powder Deposition, a Laser Additive Manufacturing or a Laser Rapid Forming.

The build apparatus 1 forms the three-dimensional structural object by processing a build material M with a processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build material M is a powder-like or grain-like material. Namely, the build material M is a powdery material. However, the build material M may not be the powdery material. For example, a wired-like build material or a gas-like build material may be used as the build material M, for example.

In order to additively build the three-dimensional structural object, the build apparatus 1 includes a material supply source 11, a processing apparatus 12, a stage apparatus 13, a light source 14, a gas supply apparatus 15, a housing 16, a control apparatus 17, and a communication apparatus 18, as illustrated in FIG. 2 and FIG. 3. At least a part of each of the processing apparatus 12 and the stage apparatus 13 may be contained in a chamber space 163IN in the housing 16.

The material supply source 11 supplies the build material M to the processing apparatus 12. The material supply source 11 supplies, to the processing apparatus 12, the build material M the amount of which is necessary for forming the three-dimensional structural object per unit time by supplying the build material M the amount of which is based on the necessary amount.

The processing apparatus 12 forms the three-dimensional structural object by processing the build material M supplied from the material supply source 11. Namely, the processing apparatus 12 additively builds the three-dimensional structural object. Therefore, the processing apparatus 12 may be referred to as a build apparatus. In order to form the three-dimensional structural object, the processing apparatus 12 include a processing head 121 and a head driving system 122. Note that the processing head 121 may be referred to as a build head. Furthermore, the processing head 121 includes an irradiation optical system 1211 that is configured to emit the processing light EL, a material nozzle 1212 that is configured to supply the build material M, and a head housing 1213. At least part of the irradiation optical system 1211 and the material nozzle 1212 are contained in the head housing 1213. The processing head 121 and the head driving system 122 are contained in the chamber space 163IN. However, at least a part of the processing head 121 and the head driving system 122 may be disposed in an external space 164OUT that is a space outside the housing 16. Note that the external space 164OUT may be a space into which the build user is allowed to enter.

The head driving system 122 moves (namely, displaces) the processing head 121. The head driving system 122 moves the processing head 121 along at least one of the X-axis, the Y-axis, the Z-axis, the θX direction, the θY direction and the θZ direction, for example. When the head driving system 122 moves the processing head 121, a positional relationship between the processing head 121 and the stage 131 (furthermore, the workpiece W placed on the stage 131) changes. Furthermore, when the head driving system 122 moves the processing head 121, a positional relationship between the processing head 121 and a build object additively built on the workpiece W changes.

The build material M supplied from the material nozzle 1212 are irradiated with the processing light EL emitted from the irradiation optical system 1211. As a result, the build material M are molten. Namely, a melt pool including the molten build material M is formed. After the melt pool is no longer irradiated with the processing light EL due to the movement of the processing head 121, the build material M molten in the melt pool are solidified. Namely, a build object corresponding to a deposition of the solidified build material M is formed. The build apparatus 1 repeats a series of a build process including the formation of the melt pool by the irradiation with the processing light EL and the solidification of the molten build material M while relatively moving the processing head 121 along at least one of the X-axis direction and the Y-axis direction. As a result, a structural layer that is an aggregation of the build object formed in a pattern based on a movement trajectory of the melt pool is formed. The build apparatus 1 forms a plurality of structural layers in order so that the plurality of structural layers are laminated. As a result, the three-dimensional structural object that is an aggregation of the plurality of structural layers is formed.

The stage apparatus 13 includes the stage 131. The stage 131 is contained in the chamber space 163IN. The workpiece W may be placed on the stage 131. The stage 131 may be configured to hold the workpiece W placed on the stage 131. In this case, the stage 131 may include a mechanical chuck, an electro-static chuck, a vacuum chuck and the like in order to hold the workpiece W. Alternatively, the stage 131 may not be configured to hold the workpiece W placed on the stage 131. In this case, the workpiece W may be placed on the stage 131 without clamp.

The stage driving system 132 moves the stage 131. The stage driving system 132 moves the stage 131 along at least one of the X-axis, the Y-axis, the Z-axis, the θX direction, the θY direction and the θZ direction, for example. When the stage driving system 132 moves the stage 131, a positional relationship between the processing head 121 and the stage 131 (furthermore, the workpiece W placed on the stage 131) changes. Furthermore, when the stage driving system 132 moves the stage 131, a positional relationship between the processing head 121 and the build object additively built on the workpiece W changes.

The light source 14 is configured to emit at least one of an infrared light, a visible light and an ultraviolet light as the processing light EL, for example. However, other type of light may be used as the processing light EL. The processing light EL may include a plurality of pulsed lights (namely, a plurality of pulsed beams). The processing light EL may include a Continuous Wave (CW). The processing light EL may be a laser light. In this case, the light source 14 may include semiconductor laser such as a laser light source (for example, a Laser Diode (LD)). The laser light source may include at least one of a fiber laser, a CO₂ laser, a YAG laser, an Excimer laser and the like. However, the processing light EL may not be the laser light. The light source 14 may include any light source (for example, at least one of a LED (Light Emitting Diode), a discharge lamp and the like). The irradiation optical system 1211 is optically connected to the light source 14 through a light transmitting member 141 including at least one of an optical fiber, a light pipe and the like. The irradiation optical system 1211 emits the processing light EL transmitted from the light source 14 through the light transmitting member 141.

The gas supply apparatus 15 is a supply source of purge gas for purging the chamber space 163IN. The purge gas includes inert gas. At least one of Nitrogen gas and Argon gas is one example of the inert gas. The gas supply apparatus 15 is connected to the chamber space 163IN through a supply port 162 formed at a wall member 161 of the housing 16 and a supply pipe 151 that connects the gas supply apparatus 15 and the supply port 162. The gas supply apparatus 15 supplies the purge gas to the chamber space 163IN through the supply pipe 151 and the supply port 162. As a result, the chamber space 163IN is a space that is purged by the purge gas. The purge gas supplied to the chamber space 163IN may be discharged from a non-illustrated discharge port formed at the wall member 161. Note that the gas supply apparatus 15 may be a tank that stores the inert gas. In a case where the purge gas is the Nitrogen gas, the gas supply apparatus 15 may be a Nitrogen gas generation apparatus that generates the Nitrogen gas by using air as material.

Incidentally, in the above-described description, the purge gas supplied from the gas supply apparatus 15 is supplied to the supply port 162, which is open to the chamber space 163IN, in order to purge whole of the chamber space 163IN inside the housing 16. However, the purge gas may be supplied from a supply port (non-illustrated) formed in the processing head 121 in order to locally fill a space near an irradiation position of the processing light EL by the irradiation optical system 1211 with the purge gas, in addition to or instead of being supplied to the supply port 162 in order to purge whole of the chamber space 163IN. In this case, in a case where the build material M is pressure-fed by the purge gas as described below, the space near the irradiation position of the processing light EL may be locally filled with the purge gas by the material nozzle 1212 that supplies the purge gas, or the space near the irradiation position of the processing light EL may be locally filled with the purge gas by forming a supply port for supplying the purge gas in the nozzle member 1212.

The gas supply apparatus 15 may supply the purge gas to a mix apparatus 112 to which the build material M is supplied from the material supply source 11, in addition to the chamber space 163IN. Specifically, the gas supply apparatus 15 may be connected to the mix apparatus 112 through a supply pipe 152 that connects the gas supply apparatus 15 and the mix apparatus 112. As a result, the gas supply apparatus 15 supplies the purge gas to the mix apparatus 112 through the supply pipe 152. In this case, the build material M from the material supply source 11 may be supplied (specifically, pressure-fed) to the material nozzle 1212 through the supply pipe 111 by the purge gas supplied from the gas supply apparatus 15 through the supply pipe 152. In this case, the material nozzle 1212 supplies, from a material supply port, the build material M together with the purge gas for pressure-feeding the build material M.

The housing 16 is a housing apparatus that is configured to contain at least a part of each of at least the processing apparatus 12 and the stage apparatus 13 in the chamber space 163IN that is an internal space of the housing 16. The housing 16 includes the wall member 161 that defines the chamber space 163IN. The wall member 161 is a member that separates the chamber space 163IN from the external space 164OUT of the housing 16. In this case, a space surrounded by the wall member 161 is the chamber space 163IN. Note that an openable and closable door may be disposed at the wall member 161. The door may be opened when the workpiece W is to be placed on the stage 131. The door may be opened when the workpiece W and / or the three-dimensional structural object is unloaded from the stage 131. The door may be closed a period during which the build operation is performed. Note that an observation window (not illustrated) for visually observing the chamber space 163IN from the external space 164OUT of the housing 16 may be formed at the wall member 61.

The control apparatus 17 controls an operation of the build apparatus 1. The control apparatus 17 may include an calculation apparatus and a storage apparatus, for example. The calculation apparatus may include at least one of a CPU (Central Processing Unit) and a GPU (Graphic Processing Unit), for example. The storage apparatus may include a memory. The control apparatus 17 serves as an apparatus for controlling the operation of the build apparatus 1 by means of the calculation apparatus executing a computer program. The computer program is a computer program that allows the calculation apparatus to execute (namely, to perform) a below-described operation that should be executed by the control apparatus 17. Namely, the computer program is a computer program that allows the control apparatus 17 to function so as to make the build apparatus 1 execute the below-described operation. The computer program executed by the calculation apparatus may be recorded in the storage apparatus (namely, a recording medium) of the control apparatus 17, or may be recorded in any recording medium (for example, a hard disk or a semiconductor memory) that is built in the control apparatus 17 or that is attachable to the control apparatus 17. Alternatively, the calculation apparatus may download the computer program that should be executed from an apparatus disposed at the outside of the control apparatus 17 through the communication apparatus 18.

The control apparatus 17 may control the operation of the build apparatus 1 to additively build the three-dimensional structural object (namely, the three-dimensional structural object having the shape set by the terminal user) based on the additive build model data transmitted from the data generation server 2. For example, the control apparatus 17 may generate build data that specifies a detail of the operation of the build apparatus 1 based on the additive build model data. Specifically, the control apparatus 17 may generate, based on the additive build model data, the build data that specifies the detail of the operation of the build apparatus 1 for additively building the three-dimensional structural object represented by the additive build model data (namely, the three-dimensional structural object having the shape defined by the shape information set by the terminal user). Then, the control apparatus 17 may control the operation of the build apparatus 1 to additively build the three-dimensional structural object (namely, the three-dimensional structural object having the shape set by the terminal user) based on the build data.

The control apparatus 17 may not be disposed in the build apparatus 1. For example, the control apparatus 17 may be disposed at the outside of the build apparatus 1 as a server or the like. For example, the control apparatus 17 may be integrated with the data generation server 2. In this case, the control apparatus 17 may be connected to the build apparatus 1 through a wired and / or wireless network (for example, the communication network 4, alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 17 and the build apparatus 1 may be configured to transmit and receive various information through the communication network 4 or the like. Moreover, the control apparatus 17 may be configured to transmit information such as a command and a control parameter to the build apparatus 1 through the communication network 4 or the like. The communication apparatus 18 of the build apparatus 1 may serve as a reception apparatus that is configured to receive the information such as the command and the control parameter from the control apparatus 17 through the communication network 4 or the like. The communication apparatus 18 of the build apparatus 1 may serve as a transmission apparatus that is configured to transmit the information such as the command and the control parameter to the control apparatus 17 through the communication network 4 or the like. Alternatively, a first control apparatus that is configured to perform a part of the arithmetic processing performed by the control apparatus 17 may be disposed in the build apparatus 1 and a second control apparatus that is configured to perform another part of the arithmetic processing performed by the control apparatus 17 may be disposed at an outside of the build apparatus 1. For example, a part of the arithmetic processing performed by the control apparatus 17 may be performed by the data generation server 2.

An arithmetic model that is buildable by machine learning may be implemented in the control apparatus 17 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 17 may control the operation of the build system SYS by using the arithmetic model. Namely, the operation for controlling the operation of the build system SYS may include an operation for controlling the operation of the build system SYS by using the arithmetic model. Note that the arithmetic model that has been built by off-line machine learning using training data may be implemented in the control apparatus 17. Moreover, the arithmetic model implemented in the control apparatus 17 may be updated by online machine learning on the control apparatus 17. Alternatively, the control apparatus 17 may control the operation of the build system SYS by using the arithmetic model implemented in an apparatus external to the control apparatus 17 (namely, the arithmetic model implemented in an apparatus external to the build system SYS), in addition to or instead of the arithmetic model implemented in the control apparatus 17.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 17 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 17 by means of the control apparatus 17 (namely, a computer) executing the computer program, may be realized by a hardware such as a predetermined gate array (a FPGA, an ASIC) of the control apparatus 17, or may be realized in a form in which the logical process block and a partial hardware module that realizes a partial element of the hardware are combined.

The communication apparatus 18 is configured to communicate with the data generation server 2 through the communication network 4. In the present example embodiment, the communication apparatus 18 is configured to receive the additive build model data generated by the data generation server 2 from the data generation server 2.

### (1-3) Configuration of Data Generation Server 2

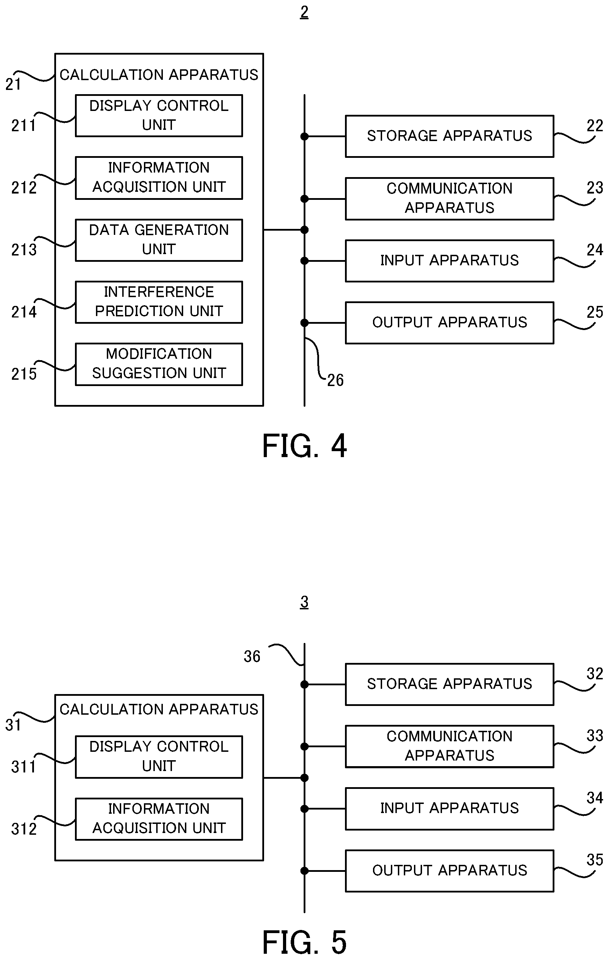

Next, with reference to FIG. 4, a configuration of the data generation server 2 will be described. FIG. 4 is a block diagram that illustrates the configuration of the data generation server 2.

As illustrated in FIG. 4, the data generation server 2 includes an calculation apparatus 21, a storage apparatus 22, and a communication apparatus 23. Furthermore, the data generation server 2 may include an input apparatus 24 and an output apparatus 25. However, the data generation server 2 may not include at least one of the input apparatus 24 and the output apparatus 25. The calculation apparatus 21, the storage apparatus 22, the communication apparatus 23, the input apparatus 24, and the output apparatus 25 may be connected through a data bus 26.

Note that the data generation server 2 and the terminal apparatus 3 may be an integrated apparatus (or an integrated system). At least two of the build apparatus 1, the data generation server 2, and the terminal apparatus 3 may be an integrated apparatus (or an integrated system). Here, a state in which "an apparatus X and an apparatus Y are the integrated apparatus" may include a state in which "the apparatus X and the apparatus Y are contained in the same housing and constitute an integrated apparatus". The state in which "the apparatus X and the apparatus Y are the integrated apparatus" may include a state in which "the apparatus X and the apparatus Y are contained in separate housings and constitute the integrated apparatus.

The calculation apparatus 21 may include at least one of a CPU and a GPU, for example. The calculation apparatus 21 reads a computer program. For example, the calculation apparatus 21 may read the computer program recorded in the storage apparatus 22. For example, the calculation apparatus 21 may read the computer program recorded in a non-transitory computer-readable recording medium by using a non-illustrated recording medium reading apparatus. The calculation apparatus 21 may obtain (namely, download or read) the computer program from a non-illustrated apparatus located outside the data generation server 2 through the communication apparatus 23. The calculation apparatus 21 executes the read computer program. As a result, a logical functional block for performing an operation that should be performed by the data generation server 2 (for example, an operation for generating the additive build model data and predicting whether or not the interference of the processing head 121 will occur) is implemented in the calculation apparatus 21. Namely, the calculation apparatus 21 is configured to serve as a controller for implementing the logical functional block for performing the operation that should be performed by the data generation server 2. In this case, any apparatus (typically, a computer) executing the computer program may be serve as the data generation server 2.

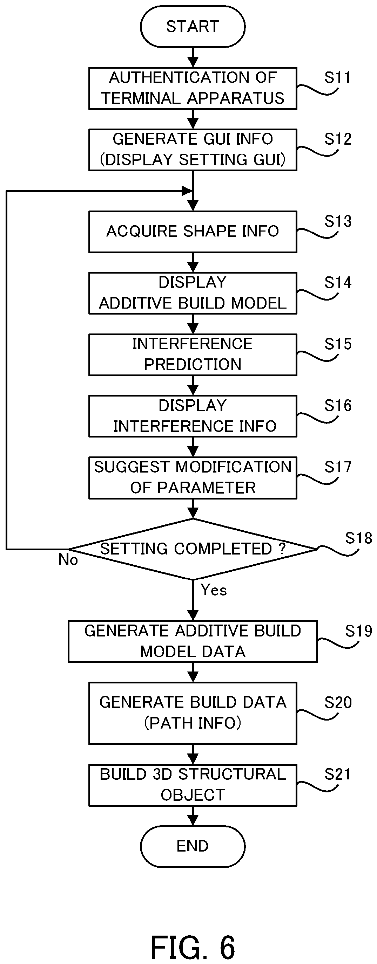

FIG. 4 illustrates one example of the logical functional block that is implemented in the calculation apparatus 21 to generate the additive build model data and predict whether or not the interference of the processing head 121 will occur. As illustrated in FIG. 4, a display control unit 211, an information acquisition unit 212, a data generation unit 213, an interference prediction unit 214, and a modification suggestion unit 215 are implemented in the calculation apparatus 21. Incidentally, although an operation of each of the display control unit 211, the information acquisition unit 212, the data generation unit 213, the interference prediction unit 214, and the modification suggestion unit 215 will be described in detail with reference to FIG. 6 and so on later, an overview thereof will be briefly described here. The display control unit 211 generates the GUI information for displaying the setting GUI 9. The information acquisition unit 212 acquires the shape information, which is set by the terminal user using the setting GUI 9, from the terminal apparatus 3 through the communication apparatus 23. The data generation unit 213 generates the additive build model data representing the three-dimensional model (namely the additive build model) of the three-dimensional structural object having the shape designated by the shape information set by the terminal user. Namely, the data generation unit 213 generates the additive build model data based on an input to the input apparatus 34 of the terminal apparatus 3 (namely, an input from the terminal user to set the shape information). The interference prediction unit 214 predicts whether or not the interference of the processing head 121 will occur when the build apparatus 1 additively builds the three-dimensional structural object. The interference prediction unit 214 generates interference information related to the interference of the processing head 121 that is predicted to occur when the build apparatus 1 additively builds the three-dimensional structural object. Namely, the interference prediction unit 214 generates the interference information related to the interference between the processing head 121 and an interfered object. The modification suggestion unit 215 suggests to the terminal user a modification of the shape information that has been set by the terminal user using the setting GUI 9. For example, the modification suggestion unit 215 may suggest a modification of the shape information to set the shape information that does not cause the interference of the processing head 121 in a case where the interference prediction unit 214 predicts that the interference of the processing head 121 will occur.

An arithmetic model that is buildable by machine learning may be implemented in the calculation apparatus 21 by the calculation apparatus 21 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The calculation apparatus 21 may generate the additive build model data and predict whether or not the interference of the processing head 121 will occur by using the arithmetic model. Namely, the operation for generating the additive build model data and predicting whether or not the interference of the processing head 121 will occur may include an operation for generating the additive build model data and predicting whether or not the interference of the processing head 121 will occur by using the arithmetic model. Namely, at least one of the display control unit 211, the information acquisition unit 212, the data generation unit 213, the interference prediction unit 214, and the modification suggestion unit 215 may be implemented by the arithmetic model. In other words, an operation performed by at least one of t the display control unit 211, the information acquisition unit 212, the data generation unit 213, the interference prediction unit 214, and the modification suggestion unit 215 may be performed by the arithmetic model. Note that the arithmetic model that has been built by off-line machine learning using training data may be implemented in the calculation apparatus 21. Moreover, the arithmetic model implemented in the calculation apparatus 21 may be updated by online machine learning on the calculation apparatus 21. Alternatively, the calculation apparatus 21 may generate the additive build model data and predict whether or not the interference of the processing head 121 will occur by using the arithmetic model implemented in an apparatus external to the calculation apparatus 21 (namely, the arithmetic model implemented in an apparatus external to the data generation server 2), in addition to or instead of the arithmetic model implemented in the calculation apparatus 21.

The calculation apparatus 21 (namely, the data generation server 2) may not include at least a part of the functional block (namely, the display control unit 211 to the correction suggestion unit 215) in the calculation apparatus 21 of the data generation server 2. For example, the terminal apparatus 3 (for example, a calculation apparatus 31 described below) may include at least a part of the functional block in the calculation apparatus 21 (namely, the display control unit 211 to the modification suggestion unit 215). For example, the build apparatus 1 (for example, the control apparatus 17) may include at least a part of the functional block in the calculation apparatus 21 (namely, the display control unit 211 to the modification suggestion unit 215). It may be disposed in the terminal apparatus 3 or the build apparatus 1.

The storage apparatus 22 is configured to store desired data. For example, the storage apparatus 22 may temporarily store the computer program that is executed by the calculation apparatus 21. The storage apparatus 22 may temporarily store data temporarily used by the calculation apparatus 21 in a case where the calculation apparatus 21 executes the computer program. The storage apparatus 22 may store data stored for a long term by the data generation server 2. Incidentally, the storage apparatus 22 may include at least one of a RAM (Random Access Memory), a ROM (Read Only Memory), a hard disk apparatus, a magneto-optical disc, a SSD (Solid State Drive) and a disk array apparatus. Namely, the storage apparatus 22 may include a non-transitory recording medium.

The communication apparatus 23 is configured to communicate with the build apparatus 1 through the communication network 4. In the present example embodiment, the communication apparatus 23 is configured to transmit the additive build model data generated by the data generation unit 213 to the build apparatus 1. Furthermore, the communication apparatus 23 is configured to communicate with the terminal apparatus 3 through the communication network 5. In the present example embodiment, the communication apparatus 23 is configured to transmit the GUI information related to the setting GUI 9 generated by the display control unit 211 to the terminal apparatus 3, and to receive the shape information set by the terminal user using the setting GUI 9 from the terminal apparatus 3.

The input apparatus 24 is an apparatus that is configured to receive an input of information from an outside of the data generation server 2 to the data generation server 2. For example, the input apparatus 24 may include an operating apparatus (for example, at least one of a keyboard, a mouse, and a touch panel) that is operable by the server user. For example, the input apparatus 24 may include a reading apparatus that is configured to read information recorded as data on a recording medium that is attachable to the data generation server 2.

The output apparatus 25 is an apparatus that outputs information to the outside of the data generation server 2. For example, the output apparatus 25 may output the information as an image. Namely, the output apparatus 25 may include a display apparatus (a so-called display) that is configured to display an image indicating the information to be output. For example, the output apparatus 25 may output the information as audio. Namely, the output apparatus 25 may include an audio apparatus (so-called a speaker) that is configured output the audio. For example, the output apparatus 25 may output the information on a paper. Namely, the output apparatus 25 may include a printing apparatus (so-called a printer) that is configured to print desired information on the paper.

### (1-4) Configuration of Terminal Apparatus 4

Next, with reference to FIG. 5, a configuration of the terminal apparatus 3 will be described. FIG. 5 is a block diagram that illustrates the configuration of the terminal apparatus 3.

As illustrated in FIG. 5, the terminal apparatus 3 includes an calculation apparatus 31, a storage apparatus 32, a communication apparatus 33, an input apparatus 34, and a display apparatus 35. The calculation apparatus 31, the storage apparatus 32, the communication apparatus 33, the input apparatus 34, and the display apparatus 35 may be connected through a data bus 36. Note that the terminal apparatus 3 may not include the storage apparatus 32. In this case, the storage apparatus 22 of the data generation server 2 may be used as the storage apparatus 32.

The calculation apparatus 31 may include at least one of a CPU and a GPU, for example. The calculation apparatus 31 reads a computer program. For example, the calculation apparatus 31 may read the computer program recorded in the storage apparatus 32. For example, the calculation apparatus 31 may read the computer program recorded in a non-transitory computer-readable recording medium by using a non-illustrated recording medium reading apparatus. The calculation apparatus 31 may obtain (namely, download or read) the computer program from a non-illustrated apparatus located outside the terminal apparatus 3 through the communication apparatus 33. The calculation apparatus 31 executes the read computer program. As a result, a logical functional block for performing an operation that should be performed by the terminal apparatus 3 is implemented in the calculation apparatus 31. Namely, the calculation apparatus 31 is configured to serve as a controller for implementing the logical functional block for performing the operation that should be performed by the terminal apparatus 3.

FIG. 5 illustrates one example of the logical functional block that is implemented in the calculation apparatus 31. As illustrated in FIG. 5, a display control unit 311 and an information acquisition unit 312 are implemented in the calculation apparatus 31. The display control unit 311 controls the display apparatus 35 to display the setting GUI 9 based on the GUI information transmitted from the data generation server 2. The information acquisition unit 312 acquires the shape information set by the terminal user using the setting GUI 9.

An arithmetic model that is buildable by machine learning may be implemented in the calculation apparatus 31 by the calculation apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The calculation apparatus 31 may perform the operation that should be performed by the terminal apparatus 3 by using the arithmetic model. Note that the arithmetic model that has been built by off-line machine learning using training data may be implemented in the calculation apparatus 31. Moreover, the arithmetic model implemented in the calculation apparatus 31 may be updated by online machine learning on the calculation apparatus 31. Alternatively, the calculation apparatus 31 may perform the operation that should be performed by the terminal apparatus 3 by using the arithmetic model implemented in an apparatus external to the calculation apparatus 31 (namely, the arithmetic model implemented in an apparatus external to the data generation server 2), in addition to or instead of the arithmetic model implemented in the calculation apparatus 31.

The calculation apparatus 31 (namely, the terminal apparatus 3) may not include at least a part of the functional block (namely, the display control unit 311 and the information acquisition unit 312) in the calculation apparatus 31 of the terminal apparatus 3. For example, the data generation server 2 (for example, the calculation apparatus 21) may include at least a part of the functional block in the calculation apparatus 31 (namely, the display control unit 311 and the information acquisition unit 312). For example, the build apparatus 1 (for example, the control apparatus 17) may include at least a part of the functional block in the calculation apparatus 31 (namely, the display control unit 311 and the information acquisition unit 312). It may be disposed in the terminal apparatus 3 or the build apparatus 1.

The storage apparatus 32 is configured to store desired data. For example, the storage apparatus 32 may temporarily store the computer program that is executed by the calculation apparatus 31. The storage apparatus 32 may temporarily store data temporarily used by the calculation apparatus 31 in a case where the calculation apparatus 31 executes the computer program. The storage apparatus 32 may store data stored for a long term by the terminal apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with the data generation server 2 through the communication network 5. In the present example embodiment, the communication apparatus 33 is configured to receive (namely, acquire) the GUI information related to the setting GUI 9 from the data generation server 2, and to transmit the shape information set by the terminal user using the setting GUI (namely, the shape information acquired by the information acquisition unit 312) to the data generation server 2.

The input apparatus 34 is an apparatus that is configured to receive an input of information from an outside of the terminal apparatus 3 to the terminal apparatus 3. For example, the input apparatus 34 may include an operating apparatus (for example, at least one of a keyboard, a mouse, and a touch panel) that is operable by the server user. For example, the input apparatus 34 may include a reading apparatus that is configured to read information recorded as data on a recording medium that is attachable to the terminal apparatus 3.

The display apparatus 35 is an apparatus that is configured to output information as an image. Namely, the display apparatus 35 is an apparatus that is configured to display the image indicating the information to be outputted. In the present example embodiment, the display apparatus 35 displays the setting GUI 9. The terminal user sets the shape information by using the setting GUI 9 displayed by the display apparatus 35. Namely, the terminal user sets the shape information by performing, through the setting GUI 9 displayed by the display apparatus 35, an operation for setting the shape information by using the input apparatus 34.

In a case where the display apparatus 35 is configured to serve as an input apparatus (for example, the display apparatus 35 includes a touch panel), the display apparatus 35 may be referred to as an input apparatus. In this case, the terminal apparatus 3 may not include the input apparatus 34. The terminal user may operate the display apparatus 35 as the input apparatus 34. The terminal user may operate the input apparatus 34 while operating the display apparatus 35. Namely, the terminal user may use both of a function of inputting the information using the display apparatus 35 and a function of inputting the information using the input apparatus 34.

### (2) Operation performed by Build System SYS

Next, with reference to FIG. 6, the operation performed by the build system SYS (namely, an operation for additively building the three-dimensional structural object, and for example, the build contract operation) will be described. FIG. 6 is a flowchart that illustrates a flow of the operation performed by the build system SYS.

As illustrated in FIG. 6, when the build system SYS starts the operation (for example, the build contract operation), the data generation server 2 performs an authentication operation for authenticating the terminal apparatus 3 (a step S11). The data generation server 2 may perform the authentication operation by using a desired authentication method. For example, the data generation server 2 may perform the authentication operation by using an authentication method based on ID information and password information. In this case, for example, the terminal user may use the input apparatus 34 of the terminal apparatus 3 to input the ID information to identify the terminal user and a password unique to the terminal user. The communication apparatus 33 of the terminal apparatus 3 may transmit the ID information and the password inputted by the terminal user to the data generation server 2 through the communication network 5. The data generation server 2 may perform the authentication operation for authenticating the terminal apparatus 3 by using the ID information and the password transmitted from the terminal apparatus 3. Alternatively, for example, the data generation server 2 may perform the authentication operation by using another authentication method different from the authentication method based on the ID information and the password information. At least one of an authentication method using a token and an authentication method using biometric information of the terminal user is one example of another authentication method.

After the authentication operation is completed (namely, after the data generation server 2 confirms that the terminal apparatus 3 is authorized to access the data generation server 2), the display control unit 211 of the data generation server 2 generates the GUI information (display information) to display the setting GUI 9 on the display apparatus 35 of the terminal apparatus 3 (a step S12). Namely, the display control unit 211 provides the setting GUI 9 to the terminal user. Then, the display control unit 211 transmits the generated GUI information to the terminal apparatus 3 by using the communication apparatus 23. The display apparatus 35 of the terminal apparatus 3 displays the setting GUI 9 based on the GUI information transmitted from the data generation server 2 (the step S12).

The display control unit 211 may generate the GUI information including information (for example, pixel information) related to a display screen constituting the setting GUI 9. In this case, the calculation apparatus 31 of the terminal apparatus 3 may control the display apparatus 35 to display the setting GUI 9 constituted by the display screen indicated by the GUI information. Alternatively, the display control unit 211 may generate the GUI information including information for controlling the display apparatus 35 of the terminal apparatus 3 to display the setting GUI 9. In this case, the display apparatus 35 of the terminal apparatus 3 may display the setting GUI 9 indicated by the GUI information under the control of the data generation server 2, independent of the control by the calculation apparatus 31. The display control unit 211 may control the display apparatus 35 to display the setting GUI 9.

An example of the setting GUI 9 is illustrated in FIG. 7. As illustrated in FIG. 7, the setting GUI 9 may include an input screen 91 and an output screen 92. Namely, the setting GUI 9 may constitute a display screen including the input screen 91 and the output screen 92. However, the setting GUI 9 may include the input screen 91 but may not include the output screen 92. Namely, the input screen 91 may be displayed on the display apparatus 35 while the output screen 92 may not be displayed on the display apparatus 35. Alternatively, the setting GUI 9 may include the output screen 92 but may not include the input screen 91. Namely, the output screen 92 may be displayed on the display apparatus 35 while the input screen 91 may not be displayed on the display apparatus 35.

The input screen 91 is a screen (in other words, an input part , the same may be applied to the below-described description) including a GUI that is operable by the terminal user to set (designate, the same may be applied to the below-described description) the shape information related to the shape of the three-dimensional structural object. The terminal user may operate the input screen 91 by using the input apparatus 34. Namely, the terminal user may perform the operation for setting the shape information on the input screen 91 by using the input apparatus 34. As a result, the information acquisition unit 312 of the terminal apparatus 3 acquires the shape information set by the terminal user using the setting GUI 9 (a step S13 in FIG. 6). Then, the information acquisition unit 312 transmits the shape information set by the terminal user to the data generation server 2 through the communication network 5 by using the communication apparatus 33 of the terminal apparatus 3. As a result, the communication apparatus 23 of the data generation server 2 receives (namely, acquires) the shape information transmitted from the terminal apparatus 3 (the step S13 in FIG. 6).

In order to set the shape information, the terminal user may use the input screen 91 to set (designate, the same may be applied to the below-described description) a value of a parameter that designates the shape of the three-dimensional structural object. In this case, the input screen 91 may include a parameter setting GUI 911 that is operable by the terminal user to set the value of the parameter. The information acquisition unit 312 may acquire, as at least part of the shape information, parameter information related to the parameter set by using the parameter setting GUI 911. The parameters may include a numerical parameter that quantitatively designates the shape of the three-dimensional structural object. In this case, the parameter setting GUI 911 may include a label displaying a name of a setting item of the numerical parameter, and a text box in which a setting value of the numerical parameter can be inputted (alternatively, a combo box, a drop-down list, or a radio button in which the setting value of the numerical parameter can be designated among a plurality of candidate values). Alternatively, the parameter may include a flag parameter for setting the shape of the three-dimensional structural object. The flag parameter is used to set the shape of the three-dimensional structural object to be one shape corresponding to the value of the flag parameter. For example, in a case where the flag value of the flag parameter is set to a flag value of 1, the shape of the three-dimensional structural object may be set to be a first shape corresponding to the flag value of 1, and in a case where the flag value of the flag parameter is set to a flag value of 2, the shape of the three-dimensional structural object may be set to be a second shape corresponding to the flag value of 2. In this case, the parameter setting GUI 911 may include the label displaying name of the setting item of the flag parameter, and the text box in which the setting value (the flag value) of the flag parameter can be inputted (alternatively, a combo box, a drop-down list, or a radio button in which the setting value of the flag parameter can be designated among a plurality of candidate values).

For example, when a position of at least a part of the three-dimensional structural object changes, the shape of the three-dimensional structural object changes. Therefore, the parameter may include a parameter that designates the position of at least a part of the three-dimensional structural object. For example, when a size of at least a part of the three-dimensional structural object changes, the shape of the three-dimensional structural object changes. Therefore, the parameter may include a parameter that designates the size of at least a part of the three-dimensional structural object. For example, when a shape of at least a part of the three-dimensional structural object changes, the shape of the three-dimensional structural object changes. Therefore, the parameter may include a parameter that designates the shape of at least a part of the three-dimensional structural object. For example, when a direction of at least a part of the three-dimensional structural object (for example, a direction in which at least a part of the three-dimensional structural object is directed or extends) changes, the shape of the three-dimensional structural object changes. Therefore, the parameters may include a parameter that designates the direction of at least a part of the three-dimensional structural object.

The setting value of the parameter set by the terminal user (namely, the value of the parameter that has been set) may be displayed in the parameter setting GUI 911. Namely, the input screen 91 including the parameter setting GUI 911 may display the value of the parameter that has been set. The value of the parameter that has been set may be provided to the input screen 91. The setting value of the parameter displayed in the parameter setting GUI 911 may be updated each time the terminal user re-sets the parameter. The setting value of the parameter displayed in the parameter setting GUI 911 may be updated periodically or at random cycles. The setting value of the parameter displayed on the parameter setting GUI 911 may be updated based on the terminal user's instruction (for example, triggered by the terminal user pressing a button that is included in the setting GUI 9 and that is for updating the setting value of the parameter). As a result, the terminal user can recognize the latest setting value of the parameter set by the terminal user himself. Note that the updating of the setting value of the parameter displayed in the parameter setting GUI 911 may be performed under the control of the display control unit 211 of the data generation server 2. In this case, the display control unit 211 may generate the GUI information so that the setting value of the parameter displayed in the parameter setting GUI 911 is updated based on the shape information acquired from the terminal apparatus 3. Alternatively, the updating of the setting value of the parameter displayed in the parameter setting GUI 911 may be performed under the control of the display control unit 311 of the terminal apparatus 3. In this case, the display control unit 311 may update the setting value of the parameter displayed in the parameter setting GUI 911 based on the shape information acquired by the information acquisition unit 312 of the terminal apparatus 3.

In order to set the shape information, the terminal user may select an icon that designates the shape of the three-dimensional structural object by using the input screen 91 in addition to or instead of setting the value of the parameter. The icon is associated with a specific shape that is allowed to be set as the shape of the three-dimensional structural object. In this case, the input screen 91 may include an icon selection GUI 912 including a plurality of icons (alternatively, at least one icon) that are selectable by the terminal user to set the shape of the three-dimensional structural object to be the specific shape. Each of the plurality of icons included in the icon selection GUI 912 is selectable by the terminal user. The terminal user may set the shape information by selecting, from among the plurality of icons included in the icon selection GUI 912, one icon associated with the shape of the three-dimensional structural object which the terminal user wants to build. The information acquisition unit 312 may acquire, as at least a part of the shape information, icon information related to the icon selected by using the icon selection GUI 912 (namely, information related to the shape associated with the selected icon).

In the icon setting GUI 912, the icon selected by the terminal user may be displayed in a display aspect that is different from that of the icon not selected by the terminal user. FIG. 7 illustrates an example in which the icon selected by the terminal user is overlaid on a hatched area and the icon not selected by the terminal user is not overlaid on the hatched area. However, a state in which the display aspect of the icon selected by the terminal user is different from the display aspect of the icon not selected by the terminal user is not limited to a state illustrated in FIG. 7. For example, the icon selected by the terminal user may be displayed in a gray out state and the icon not selected by the terminal user may not be displayed in the gray out state. As a result, the terminal user can recognize the icon selected by the terminal user himself (namely, the shape of the three-dimensional structural object set by the terminal user himself).

Note that the terminal user may set the shape information by drawing the shape of the three-dimensional structural object on the setting GUI 9 (for example, on the input screen 91) in addition to or instead of selecting one icon from the plurality of icons. In this case, the setting GUI 9 may include a drawing GUI that allows the terminal user to draw the shape of the three-dimensional structural obj ect.

The input screen 91 may include a feature setting GUI 913 that is operable by the terminal user to set feature information related to any feature of the three-dimensional structural object that is different from the shape of the three-dimensional structural object. For example, as illustrated in FIG. 7, the feature setting GUI 913 may include a GUI that is operable by the terminal user to set roughness of a surface of the three-dimensional structural object. The feature setting GUI 913 may include a GUI that is operable by the terminal user to set a type of a material for additively building the three-dimensional structural object. In a case where a plurality of types of materials are used to additively build the three-dimensional structural object, the feature setting GUI 913 may include a GUI that is operable by the terminal user to set a mixing ratio of the plurality of types of materials. The feature information set by using the feature setting GUI 913 may be transmitted from the terminal apparatus 3 to the data generation server 2, as with the shape information. The above described build data may be generated by using the feature information transmitted from the terminal apparatus 3. Namely, the build data for controlling the build apparatus 1 to additively build the three-dimensional build object having the feature designated by the feature information may be generated. Namely, the build apparatus 1 may additively build the three-dimensional build object having the feature designated by the feature information based on the feature information set by using the feature setting GUI 913.

A setting value of the feature information set by the terminal user may be displayed in the feature setting GUI 913. The setting value of the feature information displayed in the feature setting GUI 913 may be updated each time the terminal user re-sets the feature information. The setting value of the feature information displayed in the feature setting GUI 913 may be updated periodically or at random cycles. The setting value of the feature information displayed in the feature setting GUI 913 may be updated based on the terminal user's instruction (for example, triggered by the terminal user pressing a button included in the setting GUI 9 to update the setting value of the feature information). As a result, the terminal user can recognize the latest setting value of the feature information set by the terminal user himself. Incidentally, a method of displaying the setting value of feature information may be the same as a method of displaying the setting value of the parameter described above, so a detailed description of this method is omitted.

Note that the shape information set by using the parameter setting GUI 911 may be set by using the icon selection GUI 912. Similarly, the shape information set by using the icon selection GUI 912 may be set by using the parameter setting GUI 911. In short, the method of setting the shape information is not limited as long as the shape information is set by using the input screen 91. The same is true for the feature information.

The output screen 92 is a screen (in other words, an output unit) that is capable of displaying the three-dimensional model (namely, the additive build model) based on the shape information set by the terminal user using the input screen 91. For example, the output screen 92 may be capable of displaying the additive build model based on the value of the parameter set by the terminal user using the parameter setting GUI 911 included in the input screen 91 (namely, the additive build model of the three-dimensional structural object having the shape designated by the value of the parameter set by the terminal user). For example, the output screen 92 may be capable of displaying the additive build model based on the icon selected by the terminal user using the icon selection GUI 912 included in the input screen 91 (namely, the additive build model of the three-dimensional structural object having the specific shape associated with the icon selected by the terminal user). For example, the output screen 92 may be capable of displaying the additive build model based on the feature information set by the terminal user using the feature setting GUI 913 included in the input screen 91 (namely, the additive build model of the three-dimensional structural object having the feature designated by the feature information set by the terminal user).

The data generation server 2 provides the additive build model based on the shape information set by the terminal user using the input screen 91 to the output screen 92 displayed by the display apparatus 35 of the terminal apparatus 3 (a step S14). Specifically, in order to generate the GUI information related to the setting GUI 9 including the output screen 92, the data generation unit 213 of the data generation server 2 generates, based on the shape information (furthermore, other feature information if necessary) acquired by the information acquisition unit 212 from the terminal apparatus 3, the additive build model data representing the additive build model based on the shape information set by the terminal user. Then, the display control unit 211 generates the GUI information related to the setting GUI 9 including the output screen 92 on which the additive build model represented by the additive build model data generated by the data generation unit 213 is displayed. Then, the GUI information generated by the display control unit 211 is transmitted to the terminal apparatus 3 by using the communication apparatus 23. The display apparatus 35 of the terminal apparatus 3 displays the setting GUI 9 based on the GUI information transmitted from the data generation server 2. Namely, the display apparatus 35 uses the output screen 92 to display the additive build model based on the shape information set by the terminal user. Namely, the display apparatus 35 displays, on the output screen 92, the additive build model based on the shape information set by the terminal user. As a result, the terminal user can relatively easily recognize the shape and so on of the additive build model based on the shape information set by the terminal user himself.

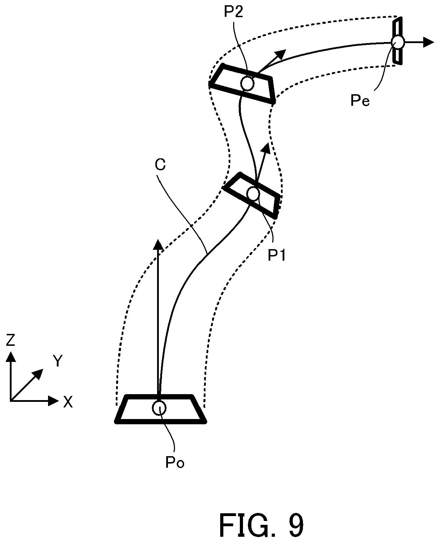

The additive build model displayed on the output screen 92 may be a three-dimensional model in any format. For example, the additive build model corresponding to a solid model or a surface model (see FIG. 7) may be displayed on the output screen 92. For example, the additive build model corresponding to a wire frame model (see FIG. 9 below) may be displayed on the output screen 92.

The display control unit 211 may generate the GUI information related to the setting GUI 9, which includes the output screen 92 on which the additive build model based on the reacquired shape information is displayed, each time the information acquisition unit 212 reacquires the shape information from the terminal apparatus 3. The display control unit 211 may generate the GUI information related to the setting GUI 9, which includes the output screen 92 on which the additive build model based on the shape information re-set by the terminal user is displayed, each time the shape information is re-set (for example, changed or updated) by the terminal user using the setting GUI 9. The display control unit 211 may update the additive build model displayed on the output screen 92 each time the shape information is re-set (for example, changed or updated) by the terminal user using the setting GUI 9. In this case, the additive build model that reflects the shape information set by using the input screen 91 in real time is displayed on the output screen 92. As a result, the terminal user can relatively easily recognize the shape and so on of the additive build model based on the latest shape information set by the terminal user himself. Alternatively, the display control unit 211 may generate the GUI information related to the setting GUI 9, which includes the output screen 92 on which the additive build model reflecting the shape information set by using the input screen 91 is displayed, periodically or in a random cycle. In this case, the output screen 92 updates the additive build model displayed on the output screen 92 periodically or at random cycles. Alternatively, the display control unit 211 may generate, based on the terminal user's instruction (for example, triggered by the terminal user pressing a button included in the setting GUI 9 to update the additive build model displayed on the output screen 92), the GUI information related to the setting GUI 9, which includes the output screen 92 on which the additive build model reflecting the shape information set by using the input screen 91. In this case, the output screen 92 updates the additive build model displayed on the output screen 92 at a timing desired by the terminal user.

The display control unit 211 may generate the setting GUI 9 including the input screen 91 according to a type of the three-dimensional structural object so that the terminal user can set appropriate shape information according to the type of the three-dimensional structural object that is additively built by the build apparatus 1. Namely, the display control unit 211 may control the display apparatus 35 to display the setting GUI 9 including the input screen 91 according to the type of the three-dimensional structural object. In the present example embodiment, an example in which the build apparatus 1 additively builds the three-dimensional structural object that includes a pipe corresponding to a member having a hollow structure (note that the pipe may be referred to as a tube). Therefore, in the below-described description, the input screen 91 that is displayed in a case where the three-dimensional structural object includes the pipe will be described as one example of the input screen 91. Namely, the input screen 91 for setting the shape information related to the shape of the pipe will be described.

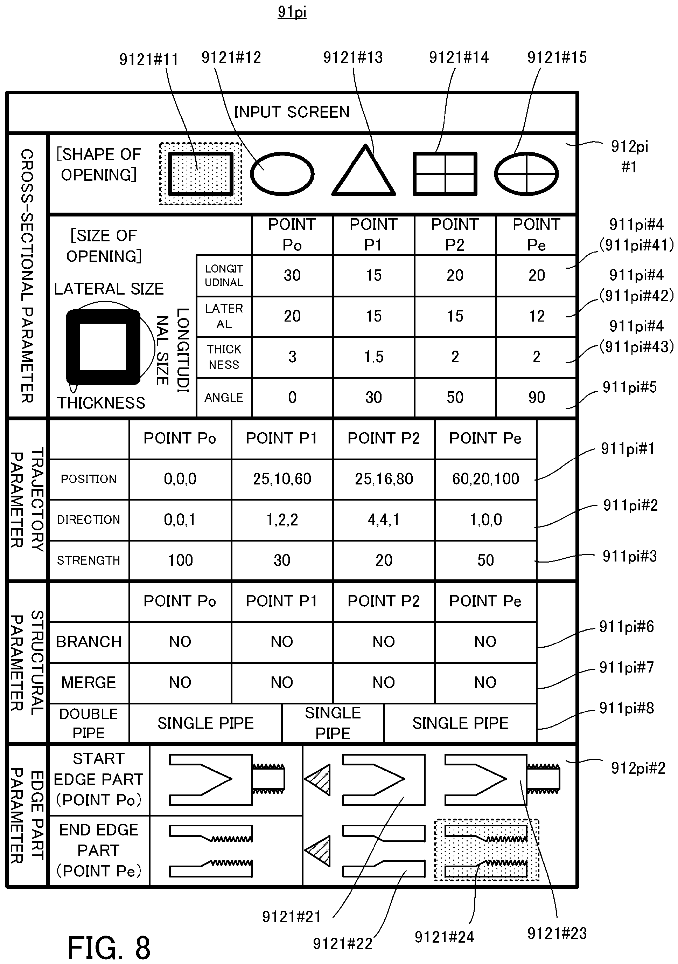

FIG. 8 illustrates an example of the input screen 91 for setting the shape information related to the shape of the pipe (hereinafter, it is referred to as an "input screen 91 pi").

As illustrated in FIG. 8, the input screen 91pi may include a parameter setting GUI 911pi (hereinafter, it is referred to as a "parameter setting GUI 911pi#1") for setting a value of a parameter that designates a position of at least a part of the pipe. Namely, the parameter that designates the shape of the pipe may include the parameter that designates the position of at least a part of the pipe. In the present example embodiment, the parameters that designate the positions (for example, the position in a display coordinate system that is same as or different from the build coordinate system, the same is applied to the below-described description) of a plurality of points P through which the pipe passes may be used as the parameters each of which designates the position of at least a part of the pipe. Specifically, in a case where a centerline C of the pipe passes from a start point Po through intermediate points P1 and P2 in sequence to thereby reach an end point Pe as illustrated in FIG. 9, the input screen 91pi may include the parameter setting GUI 911pi#1 by which the values of the parameters that designate the positions of the start point Po, the intermediate points P1 and P2 and the end point Pe can be set as illustrated in FIG. 8. Note that the number of points P is not limited to four illustrated in FIG. 9. Namely, the terminal user may set the position of the desired number of point P. The terminal user may add a new point P at a desired position or delete an existing point P by using the input screen 91pi. For example, in an example illustrated in FIG. 9, the terminal user may add other point P (for example, a point P located between the start point Po and the intermediate point P1) in addition to the start point Po, the intermediate points P1 and P2, and the end point Pe, and may set the position of the added other point P. For example, in the example illustrated in FIG. 9, the terminal user may not set the position of at least one of the start point Po, the intermediate points P1 and P2, and the end point Pe. Information related to the point P whose position is not set by the terminal user may not be displayed on the input screen 91.

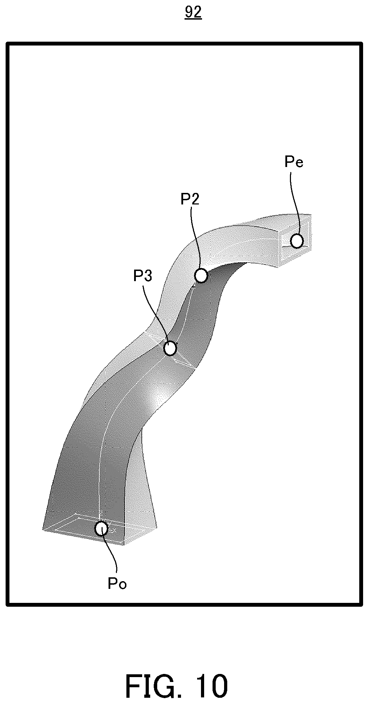

In a case where the shape information is set by using the plurality of points P through which the pipe passes, the additive build model with which the plurality of points P are associated may be displayed on the output screen 92, as illustrated in FIG. 10. In this case, the terminal user can relatively easily recognize how the shape of the additive build model changes by setting the positions and so on of the plurality of points P.

Again in FIG. 8, the input screen 91pi may include a parameter setting GUI 911pi (hereinafter, it is referred to as a "parameter setting GUI 911pi#2") for setting a value of a parameter that designates a direction of at least a part of the pipe (namely, a direction along which at least a part of the pipe extends (advances)). Namely, the parameter that designates the shape of the pipe may include the parameter that designates the direction of at least a part of the pipe. In the present example embodiment, the parameters that designates directions along which the pipe extends at the positions of the plurality of points P through which the pipe passes (for example, a direction along which the centerline C of the pipe at each point P extends, starting from point P) may be used as the parameters each of which designates the direction of at least a part of the pipe. Specifically, in a case where the pipe passes from the start point Po through the intermediate points P1 and P2 in sequence to thereby reach the end point Pe as illustrated in FIG. 9, the input screen 91pi may include the parameter setting GUI 911pi#2 by which the values of the parameters that designate a direction along which the pipe extends at the start point Po, a direction along which the pipe extends at the intermediate point P1, a direction along which the pipe extends at the intermediate point P2, and a direction along which the pipe extends at the end point Pe can be set.

As illustrated in FIG. 8, the input screen 91pi may include a parameter setting GUI 911pi (hereinafter, it is referred to as a "parameter setting GUI 911pi#3") for setting a value of a parameter that designates a magnitude (a strength) of a curvature of at least a part of the pipe. Namely, the parameter that designates the shape of the pipe may include the parameter that designates the strength of the curvature of at least a part of the pipe. In the present example embodiment, the parameters that designate the strengths of the curvature of the pipe at the positions of the plurality of points P through which the pipe passes may be used as the parameters each of which designates the strength of the curvature of at least a part of the pipe. Specifically, in a case where the pipe passes from the start point Po through the intermediate points P1 and P2 in sequence to thereby reach the end point Pe as illustrated in FIG. 9, the input screen 91pi may include the parameter setting GUI 911pi#3 by which the values of the parameters that designate the strength of the curvature of the pipe at the start point Po, the strength of the curvature of the pipe at the intermediate point P1, the strength of the curvature of the pipe at the intermediate point P2, and the strength of the curvature of the pipe at the end point Pe can be set.

Incidentally, when each of the position, the direction, and the strength of the curvature of at least a part of the pipe changes, a trajectory along which the pipe extends changes. Therefore, each of the parameter that designates the position of at least a part of the pipe, the parameter that designates the direction of at least a part of the pipe, and the parameter that designates the strength of the curvature of at least a part of the pipe may be referred to as a trajectory parameter that designates the trajectory along which the pipe extends.

As illustrated in FIG. 8, the input screen 91pi may include a parameter setting GUI 911pi (hereinafter, it is referred to as a "parameter setting GUI 911pi#4") for setting a value of a parameter that designates a size of at least a part of the pipe. Namely, the parameter that designates the shape of the pipe may include the parameter that designates the size of at least a part of the pipe. In the present example embodiment, the parameters that designate the sizes of the pipe at the positions of the plurality of points P through which the pipe passes may be used as the parameters each of which designates the size of at least a part of the pipe. Specifically, in a case where the pipe passes from the start point Po through the intermediate points P1 and P2 in sequence to thereby reach the end point Pe as illustrated in FIG. 9, the input screen 91pi may include the parameter setting GUI 911pi#4 by which the values of the parameters that designate the size of the pipe at the start point Po, the size of the pipe at the intermediate point P1, the size of the pipe at the intermediate point P2, and the size of the pipe at the end point Pe can be set.

In the present example embodiment, the parameter setting GUI 911pi#4 may be a GUI for setting a value of a parameter that designates the size of a cross-section of at least a part of the pipe. For example, as illustrated in FIG. 8, the parameter setting GUI 911pi#4 may be a GUI by which the values of parameters that designate the size of the cross-section of the pipe at the start point Po, the size of the cross-section of the pipe at the intermediate point P1, the size of the cross-section of the pipe at the intermediate point P2, and the size of the cross-section of the pipe at the end point Pe can be set. Note that the cross-section of at least a part of the pipe may mean a cross-section that intersects (typically, is orthogonal to) the direction along which the pipe extends.

The size of the cross-section of at least a part of the pipe may include a size of the cross-section along a first direction that is along the cross-section (in other words, a first direction that intersects the centerline C of the pipe). For example, as illustrated in FIG. 8, the parameter setting GUI 911pi#4 may include a parameter setting GUI 911pi#41 by which the values of the parameters that designate the size of the cross-section of the pipe along the first direction (in the example illustrated in FIG. 8, a longitudinal direction) at the start point Po, the size of the cross-section of the pipe along the first direction at the intermediate point P1, the size of the cross-section of the pipe along the first direction at the intermediate point P2, and the size of the cross section of the pipe along the first direction at the end point Pe can be set.

The size of the cross-section of at least a part of the pipe may include a size of the cross-section along a second direction that is along the cross-section and that intersects (typically, is orthogonal to) the first direction. For example, as illustrated in FIG. 8, the parameter setting GUI 911pi#4 may include a parameter setting GUI 911pi#42 by which the values of the parameters that designate the size of the cross-section of the pipe along the second direction (in the example illustrated in FIG. 8, a lateral direction) at the start point Po, the size of the cross-section of the pipe along the second direction at the intermediate point P1, the size of the cross-section of the pipe along the second direction at the intermediate point P2, and the size of the cross section of the pipe along the second direction at the end point Pe can be set.

Incidentally, in a case where the shape of the cross-section of the pipe is a rectangular shape, the size of the cross-section of the pipe along the first direction may mean a distance (a length) between two outer surfaces of the pipe (outer walls of the pipe) facing each other along the first direction, and the size of the cross-section of the pipe along the second direction may mean a distance (a length) between two outer surfaces of the pipe (outer walls of the pipe) facing each other along the second direction. In a case where the shape of the cross-section of the pipe is a circular shape, the size of the cross-section of the pipe along each of the first and second directions may mean a diameter of the outer surface of the pipe. In both cases, the size of the cross-section of the pipe along each of the first and second directions may be referred to as an outer diameter of the pipe.

The size of the cross-section of at least a part of the pipe may include a thickness of a wall (in other words, a pipe wall) of the pipe along the cross-section. For example, as illustrated in FIG. 8, the parameter setting GUI 911pi#4 may include a parameter setting GUI 911pi#43 by which the values of the parameters that designate the thickness of the wall of the pipe at the start point Po, the thickness of the wall of the pipe at the intermediate point P1, the thickness of the wall of the pipe at the intermediate point P2, and the thickness of the wall of the pipe at the end point Pe can be set. Note that the thickness of the wall of the pipe may mean a distance (a length) between an inner surface of the pipe (namely, a side surface of the pipe facing toward the centerline C side, and an inner wall) and an outer surface of the pipe (namely, a side surface of the pipe facing toward a side opposite to the centerline C side, and an outer wall).

When the size of the cross-section of at least a part of the pipe along the first direction, the size of the cross-section of at least a part of the pipe along the second direction, and the thickness of the wall of at least a part of the pipe are determined, each of an inner diameter of the pipe (namely, a diameter of the inner surface of the pipe or a distance (a length) between two inner side faces of the pipe facing each other) and the outer diameter of the pipe (namely, the diameter of the outer surface of the pipe) is determined. Therefore, setting the value of the parameter that designates the size of the cross-section of at least a part of the pipe along the first direction, the value of the parameter that designates the size of the cross-section of at least a part of the pipe along the second direction, and the value of the parameter that designates the thickness of the wall of at least a part of the pipe may be considered to be equivalent to setting a value of a parameter that designates the inner diameter of the pipe and a value of a parameter that designates the outer diameter of the pipe. Alternatively, the parameter setting GUI 911pi#4 may include a parameter setting GUI 911 for directly setting the value of the parameter that designates the inner diameter of at least a part of the pipe. The parameter setting GUI 911pi#4 may include a parameter setting GUI 911 for directly setting the value of the parameter that designates the outer diameter of at least a part of the pipe.

As illustrated in FIG. 8, the input screen 91pi may include a parameter setting GUI 911pi (hereinafter, it is referred to as a "parameter setting GUI 911pi#5") for setting a value of a parameter that designates an angle (a rotational angle) of at least a part of the pipe. Namely, the parameter that designates the shape of the pipe may include the parameter that designates the angle of at least a part of the pipe. In the present example embodiment, the rotational angles of the pipe at the positions of the plurality of points P through which the pipe passes are used as the parameters each of which designates the rotational angle of at least a part of the pipe. Here, the rotational angle of the pipe at the position of point P may mean the rotational angle (specifically, the rotational angle relative to a reference pose) of the cross-section of the pipe at the point P around an axis that is along the centerline C of the pipe at the position of the point P. Specifically, in a case where the pipe passes from the start point Po through the intermediate points P1 and P2 in sequence to thereby reach the end point Pe as illustrated in FIG. 9, the input screen 91pi may include the parameter setting GUI 911pi#5 by which the values of the parameters that designate the rotational angle of the cross-section of the pipe at the start point Po, the rotational angle of the cross-section of the pipe at the intermediate point P1, the rotational angle of the cross-section of the pipe at the intermediate point P2, and the rotational angle of the cross-section of the pipe at the end point Pe can be set. Incidentally, in a case where the cross-section of the pipe is an infinitely rotationally symmetric cross-section, such as an exact circle, the parameter setting GUI 911pi#5 may be displayed in a display aspect that does not allow the terminal user to set (input) the setting value of the parameter. For example, a part of the parameter setting GUI 911pi#5 may be displayed in a gray out state.

Incidentally, in the above-described example, when each of the size of at least a part of the pipe and the rotational angle of at least a part of the pipe each changes, the shape of the cross-section of at least a part of the pipe changes. Therefore, each of the parameter that designates the size of at least a part of the pipe and the parameter that designates the rotational angle of at least a part of the pipe may be referred to as a cross-sectional parameter (a section parameter) related to the cross-section of at least a part of the pipe.

As illustrated in FIG. 8, the input screen 91pi includes a parameter setting GUI 911pi (hereinafter, it is referred to as a "parameter setting GUI 911pi#6") for setting a value of a parameter that designates a presence or absence of a branch of at least a part of the pipe. Namely, the parameters that designates the shape of the pipe may include the parameter that designates the presence or absence of the branch of at least a part of the pipe. In the present example embodiment, the parameters that designate the presence or absence of the branch of the pipe at the positions of the plurality of points P through which the pipe passes may be used as the parameters each of which designates the presence or absence of the branch of at least a part of the pipe. Specifically, in a case where the pipe passes from the start point Po through the intermediate points P1 and P2 in sequence to thereby reach the end point Pe as illustrated in FIG. 9, the input screen 91pi may include the parameter setting GUI 911pi#6 by which the values of the parameters that designate the presence or absence of the branch of the pipe at the start point Po, the presence or absence of the branch of the pipe at the intermediate point P1, the presence or absence of the branch of the pipe at the intermediate point P2, and the presence or absence of the branch of the pipe at the end point Pe can be set. Namely, the input screen 91pi may include the parameter setting GUI 911pi#6 by which the parameters that designate whether or not the pipe is branched at the start point Po, whether or not the pipe is branched at the intermediate point P1, whether or not the pipe is branched at the intermediate point P2, and whether or not the pipe is branched at the end point Pe can be set. Incidentally, in a case where the setting value of the parameter that designates the presence or absence of the branch of the pipe is set to a value indicating the presence of the branch of the pipe in the parameter setting GUI 911pi#6, an input screen that is used by the terminal user to set at least one of the cross-sectional parameter, the trajectory parameter, and an edge part parameter related to the branched pipe may be displayed. In this case, the input screen for setting the edge part parameter may display at least one of a screen for setting the edge part parameter related to a start edge part and a screen for setting the edge part parameter related to an end edge part.

As illustrated in FIG. 8, the input screen 91pi may include a parameter setting GUI 911pi (hereinafter, it is referred to as a "parameter setting GUI 911pi#7") for setting a value of a parameter that designates a presence or absence of a merge of at least a part of the pipe (namely, the merge of plurality of branched pipe conduits). Namely, the parameters that designate the shape of the pipe may include the parameter that designates the presence or absence of the merge of at least a part of the pipe. In the present example embodiment, the parameters that designate the presence or absence of the merge of at least a part of the pipe at the positions of the plurality of points P through which the pipe passes are used as the parameters each of which designates the presence or absence of the merge of at least a part of the pipe. Specifically, in a case where the pipe passes from the start point Po through the intermediate points P1 and P2 in sequence to thereby reach the end point Pe as illustrated in FIG. 9, the input screen 91pi may include the parameter setting GUI 911pi#7 by which the values of the parameters that designate the presence or absence of the merge of the pipe at the start point Po, the presence or absence of the merge of the pipe at the intermediate point P1, the presence or absence of the merge of the pipe at the intermediate point P2, and the presence or absence of the merge of the pipe at the end point Pe can be set. Namely, the input screen 91pi may include the parameter setting GUI 911pi#7 by which the parameters that designate whether or not the plurality of branched pipe conduits are merged at the start point Po, whether or not the plurality of branched pipe conduits are merged at the intermediate point P1, whether or not the plurality of branched pipe conduits are merged at the intermediate point P2, and whether or not the plurality of branched pipe conduits are merged at the end point Pe can be set. Incidentally, in a case where the setting value of the parameter that designates the presence or absence of the merge of the pipe is set to a value indicating the presence of the merge of the pipe in the parameter setting GUI 911pi#7, an input screen that is used by the terminal user to set at least one of the cross-sectional parameter, the trajectory parameter, and the edge part parameter related to the merged pipe may be displayed. In this case, the input screen for setting the edge part parameter may display at least one of a screen for setting the edge part parameter related to the start edge part and a screen for setting the edge part parameter related to the end edge part.

As illustrated in FIG. 8, the input screen 91pi may include a parameter setting GUI 911pi (hereinafter, it is referred to as a "parameter setting GUI 911pi#8") for setting a value of a parameter that designates a multiple structure of at least a part of the pipe. Namely, the parameter that designates the shape of the pipe may include the parameter that designates the multiple structure of at least a part of the pipe. In the present example embodiment, the parameters that designate the multiple structure of the pipe at the positions of the plurality of points P through which the pipe passes are used as the parameters each of which designates the multiple structure of at least a part of the pipe. Specifically, in a case where the pipe passes from the start point Po through the intermediate points P1 and P2 in sequence to thereby reach the end point Pe as illustrated in FIG. 9, the input screen 91pi may include the parameter setting GUI 911pi#8 by which the values of the parameters that designate the multiple structure of the pipe between the start point Po and the intermediate point P1, the multiple structure of the pipe between the intermediate point P1 and the intermediate point P2, and the multiple structure of the pipe between the intermediate point P2 and the end point Pe can be set. Namely, the input screen 91pi may include the parameter setting GUI 911pi#8 by which the value of the parameter that designates whether the pipe is a multiple pipe (for example, a double pipe) or a single pipe between the start point Po and the intermediate point P1, the value of the parameter that designates whether the pipe is the multiple pipe or the single pipe between the intermediate point P1 and the intermediate point P2, and the value of the parameter that designates whether the pipe is the double pipe or the single pipe between the intermediate point P2 and the end point Pe can be set.

Incidentally, in the above-described example, the presence or absence of the branch, the presence or absence of the merge, and the multiple structure of at least a part of the pipe are all related to the structure of the pipe. Therefore, each of the parameter that designates the presence or absence of the branch of at least a part of the pipe, the parameter that designates the presence or absence of the merge of at least a part of the pipe, and the parameter that designates the multiple structure of at least a part of the pipe may be referred to as a structural parameter related to the structure of at least a part of the pipe.

As illustrated in FIG. 8, the input screen 91pi may include an icon selection GUI 912pi (hereinafter, it is referred to as an "icon selection GUI 912pi#1") including a plurality of icons each of which is selectable to set the shape of the cross-section of at least a part of the pipe (namely, a shape of an opening, and a shape of the pipe in a plane intersecting with the direction along which the pipe extends) to be a specific type of shape. For example, FIG. 8 illustrates an example in which the icon selection GUI 912pi#1 includes: an icon 9121#11 that is selectable to set the shape of the cross-section of at least a part of the pipe to be a rectangular shape; an icon 9121#12 that is selectable to set the shape of the cross-section of at least a part of the pipe to be an oval shape (alternatively, a circular shape); an icon 9121#13 that is selectable to set the shape of the cross-section of at least a part of the pipe to be a triangular shape; an icon 9121#14 that is selectable to set the shape of the cross-section of at least a part of the pipe to be a rectangular shape, wherein a pipe conduit is divided into a plurality of compartments by a compartment wall; and an icon 9121#15 that is selectable to set the shape of the cross-section of at least a part of the pipe to be an oval shape (alternatively, a circular shape), wherein a pipe conduit is divided into a plurality of compartments by a compartment wall. Namely, FIG. 8 illustrates an example in which the icon selection GUI 912pi#1 includes the plurality of icons related to the plurality of cross-sections of the pipe (namely, the plurality of icons related to a plurality different shapes of the cross-section). The terminal user may set the shape of the cross-section of at least a part of the pipe to be a specific type of shape corresponding to the selected icon by selecting any one of the icons 9121#11 through 9121#15. Namely, the terminal user sets the shape information related to the shape of the cross-section of at least a part of the pipe by using the icon selection GUI 912pi#1 to select the icon related to the plurality of cross-sections of the pipe (namely, to select a desired icon from the plurality of icons related to the plurality of different shapes of the cross-section).

In the present example embodiment, the shape of the cross-section of the pipe at each of the positions of the plurality of points P through which the pipe passes are used as the shape of the cross-section of at least a part of the pipe. Specifically, in a case where the pipe passes from the start point Po through the intermediate points P1 and P2 in sequence to thereby reach the end point Pe as illustrated in FIG. 9, the terminal user may use the icon selection GUI 912pi#1 to set the shape of the cross-section of the pipe at the start point Po, the shape of the cross-section of the pipe at the intermediate point P1, the shape of the pipe at the intermediate point P2, and the shape of the cross-section of the pipe at the end point Pe. Namely, the terminal user may use the icon selection GUI 912pi#1 to select the icon that designates each of the cross-sections of the pipe at the plurality of points.

Incidentally, in the above-described example, when the type of the shape of the cross-section of at least a part of the pipe each changes, the shape of the cross-section of at least a part of the pipe changes. Therefore, each of the parameter that designates the type of the shape of the cross-section of at least a part of the pipe may be referred to as the cross-sectional parameter (the section parameter) related to the cross-section of at least a part of the pipe.

The terminal user may set the shape information by using at least one of the parameter setting GUI 911 and the icon selection GUI 912 so that the shapes of the cross-sections of the pipe at the plurality of points P through which the pipe passes are all the same type of shapes. Note that the "type of shape" here may mean, for example, a type of shape of the cross-section that is selectable by using the icon selection GUI 912pi#1. Therefore, a state in which the shapes of the cross-sections of the pipe at the plurality of points P are all the same type of shape may mean a state in which the shapes of the cross-sections of the pipe at the plurality of points P are set to be one type of shape associated with one icon.

Alternatively, the terminal user may set the shape information by using at least one of the parameter setting GUI 911 and the icon selection GUI 912 so that the shapes of the cross-sections of the pipe at at least two of the plurality of points P through which the pipe passes are different types of shapes. Note that a state in which the shapes of the cross-sections of the pipe at at least two points P are different types of shapes may mean a state in which the shape of the cross-section of the pipe at a first point P is set to be a first type of shape associated with a first icon and the shape of the cross-section of the pipe at a second point P is set to be a second type of shape associated with a second icon. For example, the terminal user may set the shape of the cross-section of the pipe at the first point P (for example, any one of the start point Po, the intermediate point P1, the intermediate point P2, and the end point Pe) among the plurality of points P through which the pipe passes to be a first shape (for example, a rectangular shape) and set the shape of the cross-section of the pipe at the second point P (for example, other one of the start point Po, the intermediate point P1, the intermediate point P2, and the end point Pe) to be a second shape (for example, a circular shape) that is different from the first shape. In this case, the shape of the cross-section of the pipe changes from the first shape to the second shape between the first point P and the second point P. Therefore, the output screen 92 may also display the additive build model of the pipe in which the shape of the cross-section changes from the first shape to the second shape between the first point P and the second point P. For example, in a case where the shape information is set so that the shape of the cross-section of the pipe at the first point P is the first shape and then the shape information is set so that the shape of the cross-section of the pipe at the second point P is the second shape, a model part of the additive build model, which is displayed on the output screen 92, between the first point P and the second point P may be updated. More specifically, for example, in a case where the value of the parameter is set so that the shape of the cross-section of the pipe at the first is the first shape and then the value of the parameter is set so that the shape of the cross-section of the pipe at the second point P is the second shape, the model part of the additive build model, which is displayed on the output screen 92, between the first point P and the second point P (especially, the shape of this model part) may be updated depending on the setting of the value of the parameter that designates the shape of the pipe at the second point P2. For example, in a case where the icon is selected so that the shape of the cross-section of the pipe at the first is the first shape and then the icon is selected so that the shape of the cross-section of the pipe at the second point P is the second shape, the model part of the additive build model, which is displayed on the output screen 92, between the first point P and the second point P (especially, the shape of this model part) may be updated depending on the selection of the icon to set the shape of the pipe at the second point P. However, not only in a case where the shapes of the cross-sections of the pipe at at least two of the plurality of points P are different types of shapes but also in a case where the shape information is set so that the shape of the cross-section of the pipe at the first point P is the first shape and then the shape information is set so that the shape of the cross-section of the pipe at the second point P is the second shape, the model part of the additive build model, which is displayed on the output screen 92, between the first point P and the second point P may be updated.

Incidentally, in the example illustrated in FIG. 8, the icon selection GUI 912pi#1 includes the plurality of icons each of which is selectable to collectively set the shapes of the cross-sections of both of the inner surface and the outer surface of at least a part of the pipe to be a specific type of shape. However, the icon selection GUI 912pi#1 may separately include a plurality of icons each of which is selectable to set the shape of the cross-section of the inner surface of at least a part of the pipe to be a specific shape and a plurality of icons each of which is selectable to set the shape of the cross-section of the outer surface of at least a part of the pipe to be a specific shape. In this case, the terminal user may separately set the shape of the cross-section of the inner surface of at least a part of the pipe and the shape of the cross-section of the outer surface of at least a part of the pipe. The terminal user may select the icons so that the shape of the cross-section of the inner surface of at least a part of the pipe is different from the shape of the cross-section of the outer surface of at least a part of the pipe.

As illustrated in FIG. 8, the input screen 91pi may include an icon selection GUI 912pi (hereinafter, it is referred to as an "icon selection GUI 912pi#2") including a plurality of icons each of which is selectable to set a shape of the edge part of the pipe to be a specific type of shape. Note that the shape of the edge part of the pipe may be referred to as the edge part parameter related to the edge part of the pipe. The edge part of the pipe may include, for example, at least one of the start edge part of the pipe and the end edge part of the pipe. The start edge part of the pipe may include a part of the pipe located between the start point Po and a position that is away from the start point Po by a predetermined distance along the direction along which the pipe extends. The end edge part of the pipe may include a part of the pipe located between the end point Pe and a position that is away from the end point Pe by a predetermined distance along the direction along which the pipe extends. For example, FIG. 8 illustrates an example in which the icon selection GUI 912pi#2 includes: an icon 9121#21 that is selectable to set the shape of the edge part of the pipe to be a first shape in which the inner diameter of the pipe between the edge part and a position that is away from the edge part by a predetermined distance gradually decreases toward the edge part and the edge part is a closed edge; an icon 9121#22 that is selectable to set the shape of the edge part of the pipe to be a second shape in which the inner diameter of the pipe between the edge part and a position that is away from the edge part by a predetermined distance gradually decreases toward the edge part but the inner diameter is constant near the edge part, and the edge part is an opened edge; an icon 9121#23 that is selectable to set the shape of the edge part of the pipe to be a third shape in which the inner diameter of the pipe between the edge part and a position that is away from the edge part by a predetermined distance gradually decreases toward the edge part, the edge part is a closed edge, and a threaded projecting part (namely, a part corresponding to an external screw or a screw part) is formed on the edge part; and an icon 9121#24 that is selectable to set the shape of the edge part of the pipe to a fourth shape in which the inner diameter of the pipe between the edge part and a position that is away from the edge part by a predetermined distance gradually decreases toward the edge part but the inner diameter is constant near the edge part, the edge part is an opened edge, and an inner surface of the pipe near the edge part is threaded (namely, the edge part is an internal screw or a screw hole). The terminal user may set the shape of the edge part of the pipe to be the specific shape corresponding to the selected icon by selecting any one of the icons 9121#21 to 9121#24.

Again in FIG. 6, after the shape information is acquired, the interference prediction unit 214 predicts whether or not an interference of the processing head 121 will occur (step S15), in parallel, after, or before the display of the additive build model of the three-dimensional structural object having the shape designated by the above-described shape information (the step S14). Specifically, the interference prediction unit 214 predicts whether or not the interference of the processing head 121 will occur when the processing head 121 is assumed to additively build the three-dimensional structural object having the shape designated by the shape information (the step S15). More specifically, the interference prediction unit 214 predicts, based on the additive build model data generated from the shape information by the data generation unit 213 for displaying the setting GUI 9, whether or not the interference of the processing head 121 will occur when the processing head 121 is assumed to additively build the three-dimensional structural object having the three-dimensional shape represented by the additive build model data (the step S15).

The interference of the processing head 121 may include an interference between the processing head 121 and an interfering object that is an object different from the processing head 121. The interference between the processing head 121 and the interfering object may include a contact between the processing head 121 and the interfering object. The interference between the processing head 121 and the interfering object may include a collision between the processing head 121 and the interfering object.

The interference between the processing head 121 and the interfering object may include an interference between a component of the processing head 121 and the interfering object. For example, the interference between the processing head 121 and the interfering object may include an interference between the irradiation optical system 1211 of the processing head 121 and the interfering object. For example, the interference between the processing head 121 and the interfering object may include an interference between the material nozzle 1212 of the processing head 121 and the interfering object. For example, the interference between the processing head 121 and the interfering object may include an interference between the head housing 1213 of the processing head 121 and the interfering object. In a case where the processing head 121 includes another component, the interference between the processing head 121 and the interfering object may include an interference between the another component of the processing head 121 and the interfering object.

The interfering object may include the three-dimensional structural object that is additively built by the processing head 121. Especially, the interfering object may include the three-dimensional structural object in a build period (a processing period) from a start to and end of the additive building using the processing head 121 (namely, the three-dimensional structural object in the middle of the additive building, and the uncompleted three-dimensional structural object). Incidentally, in the below-described description, the uncompleted three-dimensional structural object in the middle of the additive building is referred to as an uncompleted build object to distinguish it from a completed three-dimensional structural object for which the additive building has been completed for convenience of description. In this case, the interfering object may include the uncompleted build object, and may include the completed three-dimensional structural object. Moreover, the interfering obj ect may include the workpiece W on which the three-dimensional structural object is additionally built. Moreover, the interfering object may include the stage 131 on which the workpiece W is placed. Moreover, the interfering object may include the stage apparatus 13 that includes the stage 131. For example, the interfering obj ect may include a component of the stage apparatus 13. For example, the interfering object may also include the stage driving system 132 of the stage apparatus 13. Moreover, the interfering object may include a member (for example, the housing 16) of the build apparatus 1.

In order to predict whether or not the interference of the processing head 121 will occur, the interference prediction unit 214 may predict an operation of the build apparatus 1 for additively building the three-dimensional structural object having the shape designated by the shape information by a simulation. In this case, the interference prediction unit 214 may predict whether or not the interference of the processing head 121 will occur based on a result of the simulation of the operation of the build apparatus 1. Specifically, the interference prediction unit 214 may predict the operation of the build apparatus 1 in the build period from the start of the build operation of the build apparatus 1 for building the three-dimensional structural object to the end of the build operation of the build apparatus 1 by the simulation. Especially, the interference prediction unit 214 may predict a movement of the processing head 121 and a movement of the interfering object in the build period by the simulation. In this case, the interference prediction unit 214 may predict the movement of the processing head 121 and the movement of the interfering object in the build period by the simulation by predicting the movement of the processing head 121 by the head driving system 122 and the movement of the stage 131 by the stage driving system 132 in the build period. Incidentally, in the below-described description, a period during which the build operation is virtually performed in the simulation is used as the build period.

An operation for predicting the movement of the processing head 121 and the movement of the interfering object by the simulation may include an operation for predicting a movement of a head model HM, which is a three-dimensional model of the processing head 121, and a movement of an interfering object model, which is a three-dimensional model of the interfering object, in a simulation model space. In this case, the interference prediction unit 214 may predict that the processing head 121 and the interfering object interfere with each other at one time point in the build period in a case where the head model HM and the interfering object model interfere with (for example, contact with or collide with) each other at the one time point in the build period in the simulation model space. Namely, the interference prediction unit 214 may predict that the interference between the processing head 121 and the interfering object will occur at the one time point in the build period. On the other hand, the interference prediction unit 214 may predict that the processing head 121 and the interfering object do not interfere with each other at one time point in the build period in a case where the head model HM and the interfering object model do not interfere with each other at the one time point in the build period in the simulation model space. The interference prediction unit 214 may predict that the interference between the processing head 121 and the interfering object will not occur at the one time point in the build period. Alternatively, the interference prediction unit 214 may not predict that the interference between the processing head 121 and the interfering object will occur at the one time point in the build period.

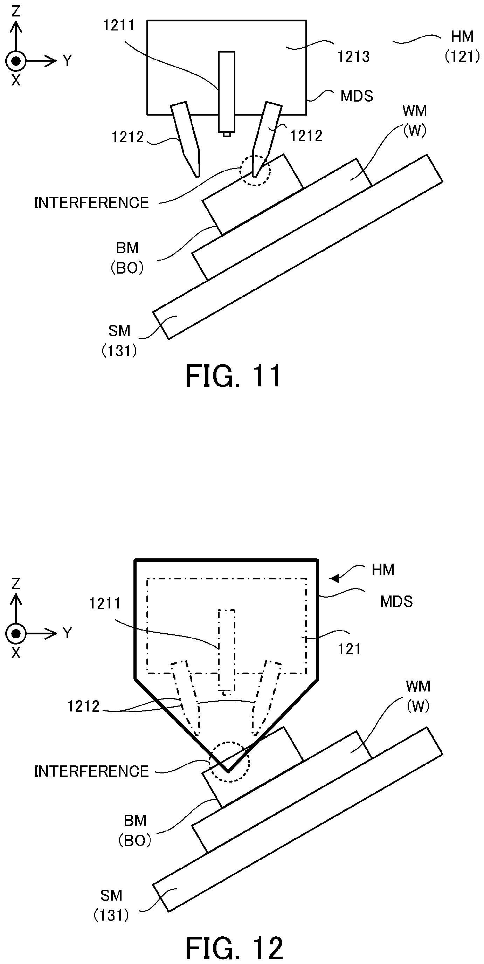

As one example, as illustrated in FIG. 11, the interference prediction unit 214 may predict, in the simulation model space, the movement of the head model HM and the movement of at least one of a stage model SM, which is a three-dimensional model of the stage 131 that is one example of the interfering object, a workpiece model WM, which is a three-dimensional model of the workpiece W that is one example of the interfering object, and an uncompleted build model BM, which is a three-dimensional model of the uncompleted build object BO that is one example of the interfering object. In this case, the interference prediction unit 214 may predict that the processing head 121 and the stage 131 interfere with each other at one time point in the build period in a case where the head model HM and the stage model SM interfere with each other at the one time point in the build period in the simulation model space. The interference prediction unit 214 may predict that the processing head 121 and the workpiece W interfere with each other at one time point in the build period in a case where the head model HM and the workpiece model WM interfere with each other at the one time point in the build period in the simulation model space. The interference prediction unit 214 may predict that the processing head 121 and the uncompleted build object BO interfere with each other at one time point in the build period in a case where the head model HM and the uncompleted build model BM interfere with each other at the one time point in the build period in the simulation model space.

The interference prediction unit 214 may use, as the head model HM, a three-dimensional model having a three-dimensional shape that is faithful to an actual outline (namely, three-dimensional shape) of the processing head 121. Namely, the interference prediction unit 214 may use, as the head model HM, a three-dimensional model having a model surface MDS whose shape is the same as the actual outline (namely, three-dimensional shape) of the processing head 121. Incidentally, FIG. 11 illustrates one example of the head model HM having an outline that is the same as the actual outline (namely, three-dimensional shape) of the processing head 121. Alternatively, the interference prediction unit 214 may use, as the head model HM, a three-dimensional model having a three-dimensional shape that is different from the actual outline of the processing head 121. For example, as illustrated in FIG. 12, the interference prediction unit 214 may use, as the head model HM, a three-dimensional model having the model surface MDS that encompasses the processing head 121. For example, as illustrated in FIG. 12, the interference prediction unit 214 may use, as the head model HM, a three-dimensional model having the model surface MDS at a position that is away from an actual outer surface of the processing head 121 by a certain margin. The margin may be set based on a maximum movable range of the processing head 121. In this case, the interference prediction unit 214 can predict under more stringent condition whether or not the interference of the processing head 121 will occur.

The margin may be set based on a movement range within which the processing head 121 moves to build one structural layer that constitutes the uncompleted build object BO (this movement range may be referred to as a required operating range). The margin may be set for each structural layer. In this case, at least one of a size and a shape of the head model HM (namely, at least one of a size and a shape of the model surface MDS) may change for each structural layer built by the processing head 121. As one example, in a case where the three-dimensional structural object is the pipe, the movement range becomes smaller when a thin part of the pipe is built, while the movement range becomes larger when a thick part of the pipe is built. Therefore, the margin used to generate the head model HM in a case where the thin part of the pipe is built may be smaller than the margin used to generate the head model HM in a case where the thick part of the pipe is built. As a result, the head model HM in the case where the thin part of the pipe is built may be smaller than the head model HM in the case where the thick part of the pipe is built. In this case, the interference prediction unit 214 can predict whether or not the interference of the processing head 121 will occur more precisely. However, the margin may be common to the plurality of structural layers.

The interference prediction unit 214 may predict the movement of the processing head 121 and the movement of the interfering object by using a predetermined movement constraint condition that constrains the movement of the processing head 121 and the movement of the interfering object. The movement constraint condition may include a condition indicating the movements of the processing head 121 and the interfering object that is allowed under a situation where the processing head 121 is assumed to additively build the three-dimensional structural object having the shape designated by the shape information. The movement constraint condition may include a condition indicating the movements of the processing head 121 and the interfering object that is prohibited under the situation where the processing head 121 is assumed to additively build the three-dimensional structural object having the shape designated by the shape information. As one example, the movement constraint condition may include such a condition that the processing head 121 and the interfering object are allowed to move so that a direction along which the uncompleted build object BO is extended by the additive building is parallel to or coincides with the gravity direction (the Z-axis direction). As another example, the movement constraint condition may include such a condition that the processing head 121 and the interfering object are prohibited from moving so that the direction along which the uncompleted build object BO is extended by the additive building intersects or is skew relative to the gravity direction (the Z-axis direction). As another example, the movement constraint condition may include such a condition that the processing head 121 and the interfering object are allowed to move so that the direction along which the uncompleted build object BO is extended by the additive building is parallel to or coincides with a direction of an optical axis of the irradiation optical system 1211. As another example, the movement constraint condition may include such a condition that the processing head 121 and the interfering object are prohibited from moving so that the direction along which the uncompleted build object BO is extended by the additive building intersects or is skew relative to the direction of the optical axis of the irradiation optical system 1211. As another example, the movement constraint condition may include such a condition that the processing head 121 and the interfering object are allowed to move so that the direction along which the uncompleted build object BO is extended by the additive building is parallel to or coincides with a propagating direction of the processing light EL emitted from the irradiation optical system 1211. As another example, the movement constraint condition may include such a condition that the processing head 121 and the interfering object are prohibited from moving so that the direction along which the uncompleted build object BO is extended by the additive building intersects or is skew relative to the propagating direction of the processing light EL emitted from the irradiation optical system 1211. In this case, the interference prediction unit 214 can predict the movement of the processing head 121 and the movement of the interfering object even in a case where the build data for controlling the build apparatus 1 (namely, the build data actually used to control the processing head 121 and the stage 131 to additively build the three-dimensional structural object) is not generated. However, the interference prediction unit 214 may generate the build data for additively building the three-dimensional structural object having the shape designated by the shape information at a timing at which the interference prediction unit 214 predicts whether or not the interference of the processing head 121 will occur, and predict the movement of the processing head 121 and the movement of the interfering object based on the generated build data.

The interference prediction unit 214 may use a mesh model as the head model HM and the interfering object model. In this case, the interference prediction unit 214 may generate the head model HM by converting the three-dimensional model of the processing head 121 into the mesh model, and may generate the interfering object model by converting the three-dimensional model of the interfering object model to the mesh model. The mesh model may be a model including a plurality of surfaces represented by a geometric shape (in the below-described description, each surface is referred to as a unit mesh). As one example, the mesh model may be a model including triangular or rectangular unit meshes. The interference prediction unit 214 may predict whether or not the interference of the processing head 121 will occur by determining whether or not the mesh model that is the head model HM intersects the mesh model that is the interfering object model.

In addition to or instead of predicting whether or not the interference of the processing head 121 will occur, the interference prediction unit 214 may predict an interference time point at which the interference of the processing head 121 is predicted to occur. Specifically, as described above, the interference prediction unit 214 predicts that the processing head 121 and the interfering object will interfere with each other at one time point in the build period in a case where the head model HM and the interfering object model interfere with each other at the one time point in the build period in the simulation model space. In this case, the one time point in the build period at which the head model HM and the interfering object model interfere with each other corresponds to the interference time point. Therefore, the interference prediction unit 214 may predict the interference time point at which the head model HM and the interfering object model interfere with each other, in addition to predicting whether or not the head model HM and the interfering obj ect model interfere with each other.

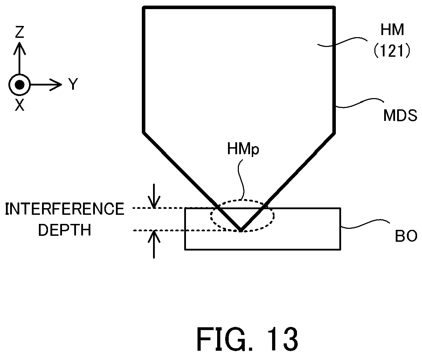

In addition to or instead of predicting whether or not the interference of the processing head 121 will occur, the interference prediction unit 214 may predict an interference depth that indicates a degree of the interference between the processing head 121 and the interfering object. The interference depth may be an index value that increases as the degree of the interference between the processing head 121 and the interfering object increases. For example, the interference depth may be an index value determined based on a size of a model part HMp of the head model HM that interferes with the interfering object model, as illustrated in FIG. 13. In this case, the interference depth may be an index value that increases as the size of the model part HMp of the head model HM that interferes with the interfering object model increases. For example, the interference depth may be an index value determined based on a distance from the surface of the interfering object model (in the example illustrated in FIG. 13, the uncompleted build model BM) to a deepest part of the model part HMp of the head model HM that interferes with the interfering object model. The deepest part of the model part HMp may include a part of the model part HMp that is located at a position farthest from the surface of the interfering object model (in the example illustrated in FIG. 13, the uncompleted build model BM). In this case, the interference depth may be an index value that increases as the distance from the surface of the interfering object model to the deepest part of the model part HMp increases. For example, the interference depth may be an index value determined based on a distance (a size) of the model part HMp of the head model HM that interferes with the interfering object model along a direction orthogonal to the model surface MDS of the head model HM. In this case, the interference depth may be an index value that increases as the distance of the model part HMp along the direction orthogonal to the model surface MDS of the head model HM increases. Incidentally, an operation for predicting the interference depth that indicates the degree of the interference between the processing head 121 and the interfering object may be considered to be included in an operation for predict whether or not the interference of the processing head 121 will occur, because the index value is 0 in a case where the interference of the processing head 121 does not occur.

Again in FIG. 6, the display control unit 211 generates display data for displaying the interference information indicating a predicted result of the interference by the interference prediction unit 214 on the display apparatus 35 of the terminal apparatus 3 (a step S16). Then, the display control unit 211 transmits the generated display data to the terminal apparatus 3 by using the communication apparatus 23 (the step S16). The terminal apparatus 3 receives the display data transmitted from the data generation server 2 (the step S16). The display apparatus 35 of the terminal apparatus 3 displays the interference information based on the display data transmitted from the data generation server 2 (the step S16).

As described above, the display control unit 211 generates the GUI information for displaying the setting GUI 9 on the display apparatus 35. In this case, the display control unit 211 may generate, as the display data for displaying the interference information, the GUI information for displaying the setting GUI 9 including the interference information on the display apparatus 35. The display control unit 211 may generate, as the display data for displaying the interference information, the GUI information for displaying the setting GUI 9 in a part of which the interference information is displayed on the display apparatus 35. Namely, the interference information may be displayed in the setting GUI 9. For example, the interference information may be displayed on the input screen 91 included in the setting GUI 9. For example, the interference information may be displayed on the output screen 92 included in the setting GUI 9. In this case, the GUI information typically includes the interference information.

In the below-described description, an example in which the interference information is displayed on the output screen 92 will be described for convenience of description. In this case, the display control unit 211 may generate the GUI information for displaying the output screen 92 in which the interference information is displayed in addition to or instead of the additive build model originally displayed on the output screen 92. The display control unit 211 may generate the GUI information for displaying the setting GUI 9 that includes the input screen 91 for setting the shape information and the output screen 92 on which the interference information is displayed.

As described above, the interference information indicates the predicted result of the interference between the processing head 121 and the interfering obj ect. In this case, the display control unit 211 may generate the GUI information (namely, the display data) for displaying the interference information together with at least one of the head model HM, which is the three-dimensional model of the processing head 121, and the interfering object model, which is the three-dimensional model of the interfering object. In this case, the GUI information may include the interference information and the three-dimensional model data representing at least one of the head model HM and the interfering object model. Specifically, the display control unit 211 may generate the GUI information for displaying the interference information in a display aspect in which the interference information is associated with at least one of the head model HM and the interfering object model. For example, the display control unit 211 may generate the GUI information for displaying the interference information together with the head model HM. For example, the display control unit 211 may generate the GUI information for displaying interference information in a display aspect in which the interference information is associated with the head model HM. For example, the display control unit 211 may generate the GUI information for displaying the interference information together with the stage model SM, which is the three-dimensional model of the stage 131 that is one example of the interfering object. For example, the display control unit 211 may generate the GUI information for displaying the interference information in a display aspect in which the interference information is associated with the stage model SM. For example, the display control unit 211 may generate the GUI information for displaying the interference information together with the workpiece model WM, which is the three-dimensional model of the workpiece W that is one example of the interfering object. For example, the display control unit 211 may generate the GUI information for displaying the interference information in a display aspect in which the interference information is associated with the workpiece model WM. For example, the display control unit 211 may generate the GUI information for displaying the interference information together with the uncompleted build model BM, which is the three-dimensional model of the uncompleted build object BO that is one example of the interfering object. For example, the display control unit 211 may generate the GUI information for displaying the interference information in a display aspect in which the interference information is associated with the uncompleted build model BM. As a result, the terminal user can intuitively recognize whether or not the interference of the processing head 121 will occur. Incidentally, in the below-described description, an example in which the interference information is displayed together with both the head model HM and the interfering object model for convenience of description. However, the display control unit 211 may generate the GUI information for displaying the interference information independently of the head model HM and the interfering object model. For example, the display control unit 211 may generate the GUI information for displaying the interference information by using at least one of text, numbers and figures.

At least one of the head model HM and the interfering object model displayed on the display apparatus 35 may be a surface model. At least one of the head model HM and the interfering object model displayed on the display apparatus 35 may be a solid model. At least one of the head model HM and the interfering object model displayed on the display apparatus 35 may be a wire frame model. At least one of the head model HM and the interfering object model displayed on the display apparatus 35 may be a transparent model whose interior is visible. The terminal user may set a degree of transparency of the transparent model by using the input apparatus 34.

The head model HM displayed on the display apparatus 35 may be the same as the head model HM used by the above-described interference prediction unit 214 to predict whether or not the interference of the processing head 121 will occur. Alternatively, the head model HM displayed on the display apparatus 35 may be different from the head model HM used by the above-described interference prediction unit 214 to predict whether or not the interference of the processing head 121 will occur. For example, a size of the unit mesh of the head model HM displayed on the display apparatus 35 may be different from a size of the unit mesh of the head model HM used by the above-described interference prediction unit 214. As one example, the size of the unit mesh of the head model HM displayed on the display apparatus 35 may be smaller than the size of the unit mesh of the head model HM used by the above-described interference prediction unit 214. A resolution of the head model HM is higher as the size of the unit mesh is smaller. Therefore, the display apparatus 35 can display the head model HM with a higher resolution. On the other hand, a load of the calculation using the head model HM is lower as the size of the unit mesh is larger. Therefore, the interference prediction unit 214 can predict relatively quickly whether or not the interference of the processing head 121 will occur. The same is true for the interfering object model.

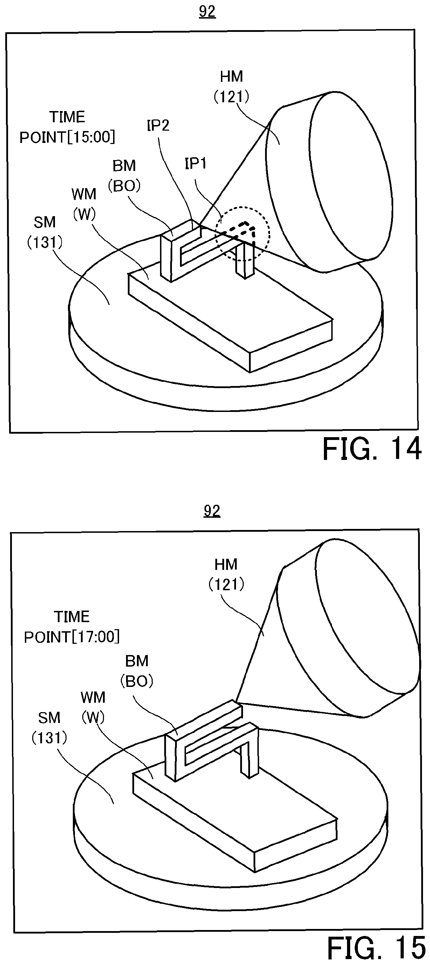

One example of the interference information displayed together with both the head model HM and the interfering object model is illustrated in FIG. 14. As illustrated in FIG. 14, the display control unit 211 may generate the GUI information for displaying the head model HM, the stage model SM, the workpiece model WM, and the uncompleted build model BM at one time point in the build period. As a result, the display apparatus 35 displays the head model HM, the stage model SM, the workpiece model WM, and the uncompleted build model BM at the one time point in the build period.

Here, in a case where the interference information includes information indicating the result of predicting whether or not the interference between the processing head 121 and the interfering object will occur at one time point in the building period, the display control unit 211 may generate the GUI information for displaying the interference information related to the interference that is predicted to occur at one time point together with the head model HM and the interfering object model (in the example illustrated in FIG. 14, the stage model SM, the workpiece model WM and the uncompleted build model BM). For example, as illustrated in FIG. 14, the display control unit 211 may generate the GUI information for displaying the head model HM and the interfering model so that a display aspect of an interference part IP1 in which the head model HM and the interfering object model interfere with each other is different form a display aspect of a non-interference part IP2 in which the head model HM and the interfering object model do not interfere with each other. The display aspect may include at least one of color, brightness, and highlight, for example. FIG. 14 illustrates an example in which the interference information includes information indicating the result of predicting that the interference between the processing head 121 and the uncompleted build object BO will occur at time 15:00, which is one time point in the build period, and the display control unit 211 generates GUI information for displaying the head model HM and the uncompleted build model BM so that the display aspect of the interference part IP1 in which the head model HM and the uncompleted build model BM interfere with each other is different from the display aspect of the non-interference part IP2 in which the head model HM and the uncompleted build model BM do not interfere with each other. As a result, the terminal user can intuitively recognize the position at which the interference of the processing head 121 will occur in the build period.

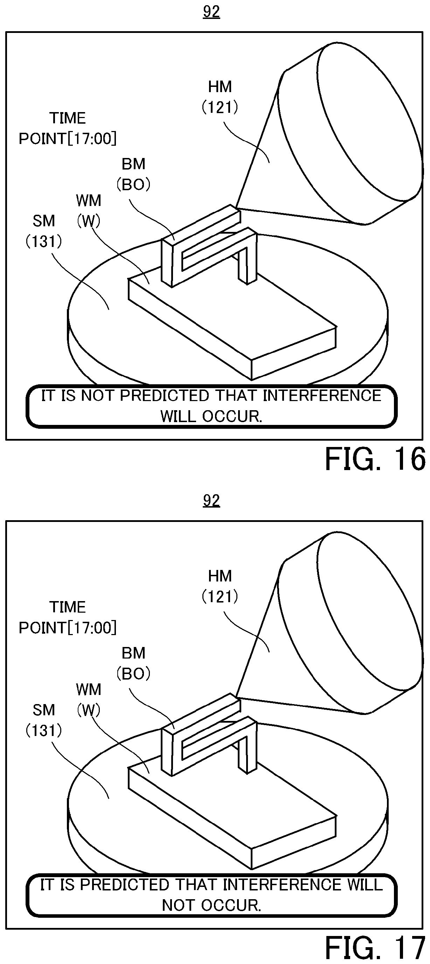

On the other hand, in a case where the interference information includes information indicating the result of predicting that the interference between the processing head 121 and the interfering object will not occur at one time point in the build period, the display control unit 211 may generate the GUI information for displaying the head model HM and the interfering object model (in the example illustrated in FIG. 15, the stage model SM, the workpiece model WM and the uncompleted build model BM) without displaying the interference information indicating that it is predicted that the interference of the processing head 121 will occur at one time point, as illustrated in FIG. 15. Alternatively, as illustrated in FIG. 16, the display control unit 211 may generate the GUI information for displaying the interference information indicating that it is not predicted that the interference of the processing head 121 will occur at the one time point together with the head model HM and the interfering object model at the one time point. Alternatively, as illustrated in FIG. 17, the display control unit 211 may generate the GUI information for displaying the interference information indicating that it is predicted that the interference of the processing head 121 will not occur at the one time point together with the head model HM and the interfering object model at the one time point.

As described above, the interference prediction unit 214 predicts the movement of the head model HM and the movement of the interfering object model in order to predict the movement of the processing head 121 and the movement of the interfering object in the build period. In this case, the display control unit 211 may generate, based on a predicted result of the movements of the processing head 121 and the interfering object by the interference prediction unit 214, the GUI information for displaying a video illustrating the movements of the head model HM and the interfering object model in at least a part of the build period. Alternatively, the display control unit 211 may predict the movements of the head model HM and the interfering object model in at least a part of the build period separately from the prediction of the movements of the processing head 121 and the interfering object model by the interference prediction unit 214, and generate the GUI information for displaying the video illustrating the movements of the head model HM and the interfering object model in at least a part of the build period. In this case, the display apparatus 35 may display the video illustrating the movements of the head model HM and the interfering object model in at least a part of the build period. As a result, the terminal user can intuitively recognize the movements of the processing head 121 and the interfering object that is one of reasons why it is predicted that the interference of the processing head 121 will occur.

Incidentally, when at least one of the head model HM and the interfering object model moves, there is a possibility that the positional relationship (namely, the relative position) between the head model HM and the interfering object model changes. Therefore, the video illustrating the movements of the head model HM and the interfering object model in at least a part of the build period may be considered to be equivalent to the video illustrating the change in the positional relationship between the head model HM and the interfering object model in at least a part of the build period.

In a case where the GUI information for displaying the video illustrating the movements of the head model HM and the interfering object model is generated, the display control unit 211 may generate the GUI information for temporarily stopping playing the video at the interference time point at which it is predicted that the interference will occur. As a result, the terminal user can more reliably recognize that the interference of the processing head 121 is predicted to occur.

The display control unit 211 may generate the GUI information for displaying the interference information together with the head model HM and the interfering object model at a time point designated by the terminal user (in the below-described description, it is referred to as a "designated time point"). For example, in a case where the interference information includes information related to the result of predicting that the interference of the processing head 121 will occur at the designated time point, the display control unit 211 may generate the GUI information for displaying the interference information related to the interference that is predicted to occur at the designated time point together with the head model HM and the interfering object model at the designated time point. For example, in a case where the interference information includes information related to the result of predicting that the interference of the processing head 121 will not occur at the designated time point, the display control unit 211 may generate the GUI information for displaying the head model HM and the interfering object model at the designated time point without displaying the interference information. For example, in a case where the interference information includes information related to the result of predicting that the interference of the processing head 121 will not occur at the designated time point, the display control unit 211 may generate the GUI information for displaying the interference information indicating that it is not predicted that the interference of the processing head 121 will occur at the designated time point together with the head model HM and the interfering object model at the designate time point. For example, in a case where the interference information includes information related to the result of predicting that the interference of the processing head 121 will not occur at the designated time point, the display control unit 211 may generate the GUI information for displaying the interference information indicating that it is predicted that the interference of the processing head 121 will not occur at the designated time point together with the head model HM and the interfering object model at the designate time point.

In order to allow the terminal user to designate the designated time point, the display control unit 211 may generate the GUI information for displaying a progress object 9220 which represents a progress status or an elapsed time since the build apparatus 1 starts the build operation to additively build the three-dimensional structural object in addition and by which the designated time point can be determined. As a result, the terminal user can designate the designated time point relatively easily.

The progress status may be indicated by a progress rate (namely, a percentage). In this case, the interference prediction unit 214 (alternatively, other functional block) may calculate the progress rate based on any information related to the progress of building the three-dimensional structural object (for example, at least one of a volume of the build object, an area size of the build object, a height of the build object, a supplied amount of the build material M, and a build time) in the above-described simulation, and the display control unit 211 may generate the GUI information for displaying the progress rate predicted by the interference prediction unit 214. As one example, in a case where the three-dimensional structural object includes 50 structural layers, the progress rate at a timing at which a 10th structural layer is being built is 10/50 = 0.2 = 20%.

The display control unit 211 may generate the GUI information for displaying the progress object 9220 together with the head model HM and the interfering object model (furthermore, together with the interference information in some cases). In this case, the display apparatus 35 of the terminal apparatus 3 may display the progress object 9220 together with the head model HM and the interfering object model on the output screen 92.

The progress status since the build operation is started may include a progress rate of the build operation in a case where an overall length of the build operation is set to be 100%. Since the plurality of structural layers are additively built to additively build the three-dimensional structural object as described above, the progress status since the building operation is started may include the number of structural layers that have been already built out of the plurality of structural layers. Incidentally, the build operation may include an operation for actually additively building the three-dimensional structural object by emitting the processing light EL and supplying the build material M. In this case, the progress status or the elapsed time since the building operation is started may mean the progress status or the elapsed time since the emission of the processing light EL and the supply of the build material M are started to additively build the three-dimensional structural object. Alternatively, the building operation may include a preliminary operation performed before the operation for emitting the processing light EL and supplying the build material M to additively build the three-dimensional structural object. In this case, the progress status or the elapsed time since the build operation is started may mean the progress status or the elapsed time since the preliminary operation is started.

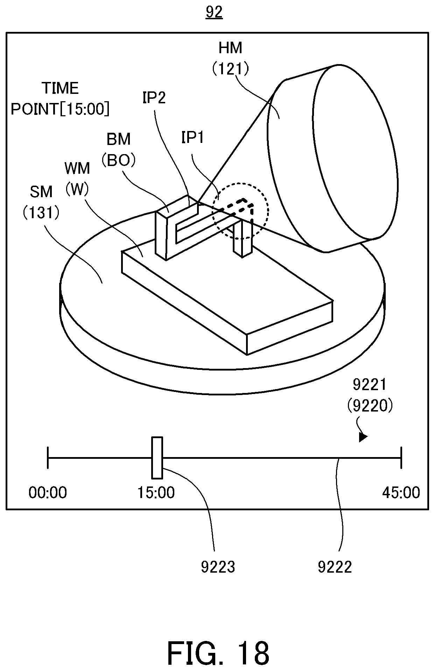

One example of the progress object 9220 is illustrated in FIG. 18. As illustrated in FIG. 18, the display control unit 211 may generate the GUI information for displaying a slide bar (a slider) 9221 that is one example of the progress object 9220. The slide bar 9221 may include a bar body 9222 and a knob 9223. The bar body 9222 is a display object that linearly extends. A start point of the bar body 9222 may correspond to a start point of the building operation to build the three-dimensional structural object, and an end point of the bar body 9222 may correspond to an end point of the building operation to build the three-dimensional structural object. The knob 9223 is a display object that is operable by the terminal user to designate the designated time. The terminal user may designate the time point corresponding to the position of the knob 9223 as the designated time point by moving the knob 9223 along the bar body 9222.

A result of the terminal user's operation using the progress object 9220 is transmitted from the terminal apparatus 3 to the data generation server 2 through the communication network 5. As a result, the display control unit 211 can identify the designated time point designated by the terminal user. In a case where a new time point is designated, the display control unit 211 may newly generate (namely, re-generate) the GUI information for displaying the interference information related to the interference that is predicted to occur at the newly designated time point together with the head model HM and the interfering object model at the newly designated time point. For example, In a case where a first time point is designated as the designated time point, the display control unit 211 generates first GUI information for displaying the interference information related to the interference that is predicted to occur at the first time point together with the head model HM and the interfering object model at the first time point. In a case where a second time point that is different from the first time point is newly designated as the designated time point under this situation, the display control unit 211 may generate second GUI information for displaying the interference information related to the interference that is predicted to occur at the second time point together with the head model HM and the interfering object model at the second time point. As a result, the display apparatus 35 displays the interference information related to the interference that is predicted to occur at the second time point together with the head model HM and the interfering object model at the second time point. As a result, the terminal user can recognize the interference information related to the interference that is predicted to occur at the designated time point together with the head model HM and the interfering object model at the designated time point designated by the terminal user.

In a case where the second time point is newly designated as the designated time point in a situation where the first time point has been designated as the designated time point, the display control unit 211 may generate third GUI information for displaying the interference information related to the interference that is predicted to occur in a period between the first time point and the second time point together with a video illustrating the movements of the head model HM and the interfering object model in the period between the first time point and the second time point. As a result, the display apparatus 35 displays the interference information related to the interference that is predicted to occur in the period between the first time point and the second time point, together with the video illustrating the movements of the head model HM and the interfering object model in the period between the first time point and the second time point. In a case where the second time point is a time point that is later in time than the first time point, the display apparatus 35 may play the video illustrating the movements of the head model HM and the interfering object model in the period between the first time point and the second time point in a forward direction. In a case where the second time point is a time point that is earlier in time than the first time point, the display apparatus 35 may play the video illustrating the movements of the head model HM and the interfering object model in the period of time between the first time point and the second time point in a backward direction. As a result, the terminal user can intuitively recognize the movements of the processing head 121 and the interfering object as one of reasons why it is predicted that the interference of the processing head 121 will occur in the period between the first time point and the second time point, and as a result, the user can intuitively recognize the reason why it is predicted that the interference will occur in the period between the first time point and the second time point.

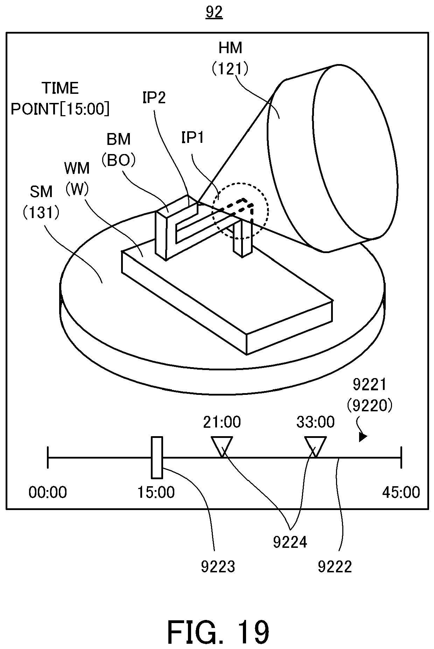

In a case where the interference prediction unit 214 predicts the interference time point at which it is predicted that the interference of the processing head 121 will occur as described above, the interference information includes the information related to the interference time point at which it is predicted that the interference of the processing head 121 will occur. In this case, the display control unit 211 may generate the GUI information for displaying the interference information including the information related to the interference time point. For example, the display control unit 211 may generate the GUI information for displaying the progress object 9220 to which the indicator 9224 indicating the interference time point is added. One example of the indicator 9224 indicating an interference time point is illustrated in FIG. 19. As illustrated in FIG. 19, the indicator 9224 may be added to the bar body 9222 of the slide bar 9221, which is one example of the progress object 9220. Especially, the indicator 9224 may be added to a position that corresponds to the interference time point in the bar body 9222. FIG. 19 illustrates one example of the indicator 9224 in a case where it is predicted that the interference of the processing head 121 will occur at each of the time point at which the elapsed time since the building operation is started is 21 minutes and the time point at which the elapsed time since the building operation is started is 33 minutes.

The terminal user may design the interference time point indicated by the indicator 9224 as the designated point by using the input apparatus 34 to select the indicator 9224. In this case, the display control unit 211 may generate the GUI information for displaying the interference information related to interference that is predicted to occur at the interference time point designated as the designated time point, together with the head model HM and the interfering object model at the interference time point designated as the designated time point. As a result, the terminal user can intuitively recognize the interference time point at which it is predicted that the interference will occur, and can intuitively recognize an aspect of the interference that is predicted to occur at the interference time point.

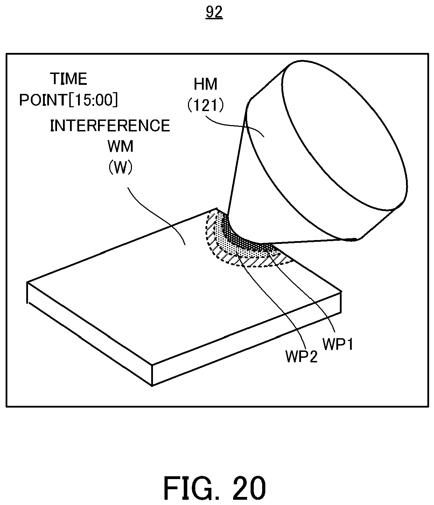

In a case where the interference prediction unit 214 predicts the interference depth as described above, the interference information includes the information related to the interference depth. In this case, the display control unit 211 may generate the GUI information for displaying the interference information including the information related to the interference depth. For example, the display control unit 211 may generate the GUI information for changing a display aspect of the interference information is displayed based on a difference of the interference depth. As one example, in a case where the interference information is displayed together with both the head model HM and the interfering object model as described above, the display control unit 211 may generate the GUI information for changing the display aspect of at least one of the head model HM and the interfering object model based on the difference of the interference depth. For example, a display example for changing the display aspect of at least one of the head model HM and the interfering object model based on the difference of interference depth is illustrated in FIG. 20. As illustrated in FIG. 20, in a case where the interference depth of the interference that is predicted to occur in a first part WP1 of the workpiece model WM (namely, the interfering object model) is different from the interference depth of the interference that is predicted to occur in a second part WP2 of the workpiece model WM, the display control unit 211 may generate the GUI information for changing the display aspect of the first part WP1 and the display aspect of the second part WP2. In this case, the display control unit 211 may be considered to generate the GUI information for changing the display aspect of each part of the workpiece model WM based on the interference depth of each part. The display aspect may include at least one of the color, the brightness, and the highlight, as described above, for example. In this case, the display apparatus 35 may display the head model HM and the interfering object model so that the display aspect of the first part WP1 is different from the display aspect of the second part WP2. Alternatively, in a case where the interference depth of the interference that is predicted to occur in a first part of the head model HM is different from the interference depth of the interference that is predicted to occur in a second part of the head model HM, the display control unit 211 may generate the GUI information for changing the display aspect of the first part of the head model HM and the display aspect of the second part of the head model HM. In this case, the display control unit 211 may be considered to generate the GUI information for changing the display aspect of each part of the head model HM based on the interference depth of each part. As a result, the terminal user can intuitively recognize the degree of the interference (namely, the interference depth) that is predicted to occur in the processing head 121.

As one example, in a case where the color of the interfering object model changes based on the difference of the interference depth, the interference prediction unit 214 may color the unit mesh of the interfering object model that intersects the head model HM in determining whether or not the head model HM intersects the interfering object model. In this case, the display control unit 212 may change the color of the intersected object model so that the color of the unit mesh that has been colored by the interference prediction unit 214 is different from the color of the unit mesh that has not been colored by the interference prediction unit 214. In this case, the intersection of the mesh model included in the head model HM and the mesh model included in the interfering object model is visualized. Note that a part at which the head model HM and the interfering obj ect model do not interfere with each other may be colored.

In a case where the color of at least one of the head model HM and the interfering object model changes based on the difference of the interference depth, a plurality of colors may be used to represent the interference depth. For example, the display control unit 211 may generate the GUI information for representing the difference of the interference depth by using the plurality of colors including a warm color and a cold color. For example, the display control unit 211 may generate the GUI information for representing the difference of the interference depth by using the plurality of colors including red, yellow, green, and blue. Specifically, the display control unit 211 may generate the GUI information in which the color of a certain part becomes closer to the warm color (for example, red) as the interference depth of a certain part increases, while the color of a certain part becomes closer to a cold color (for example, blue) as the interference depth of a certain part decreases. In this case, the GUI information may include information related to a display color.

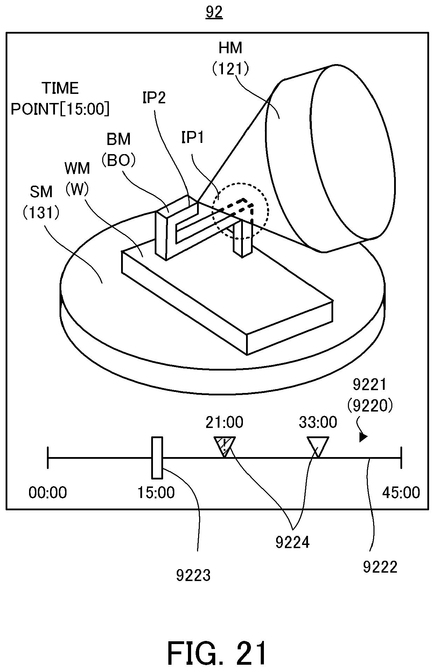

The display control unit 211 may change the display aspect of the indicator 9224 (namely, the indicator 9224 indicating the interference time point), which is described with reference to FIG. 19, based on the degree of the interference (namely, the interference depth) that is predicted to occur at the interference time point indicated by the indicator 9224. Namely, the display control unit 211 may generate the GUI information for changing the display aspect of the indicator 9224 based on the degree of the interference (namely, the interference depth) that is predicted to occur at the interference time point indicated by the indicator 9224. For example, as illustrated in FIG. 21, in a case where the interference depth of the interference that is predicted to occur at a first interference time point indicated by a first indicator 9224 is different from the interference depth of the interference that is predicted to occur at a second interference time point indicated by a second indicator 9224, the display control unit 211 may generate the GUI information for changing the display aspect of the first indicator 9224 and the second indicator 9224. In this case, the display apparatus 35 may display the first and second indicators 9224 so that the display aspect of the first indicator 9224 is different from the display aspect of the second indicator 9224. Even in this case, the terminal user can intuitively recognize the degree of the interference (namely, the interference depth) that is predicted to occur in the processing head 121.

Even in a case where the color of the indicator 9224 changes based on the difference of the interference depth, a plurality of colors may be used to represent the interference depth, similar to a case where the color of at least one of the head model HM and the interfering object model changes based on the difference of the interference depth. For example, the display control unit 211 may generate the GUI information for representing the difference of the interference depth by using the plurality of colors including a warm color and a cold color. For example, the display control unit 211 may generate the GUI information for representing the difference of the interference depth by using the plurality of colors including red, yellow, green, and blue. Specifically, the display control unit 211 may generate the GUI information in which the color of the indicator 9224 indicating a certain interference time point becomes closer to the warm color (for example, red) as the interference depth at a certain interference time point increases, while the color of the indicator 9224 indicating a certain interference time point becomes closer to the cold color (for example, blue) as the interference depth at a certain interference time point decreases.

The display control unit 211 may embed information related to the progress status or the elapsed time into the GUI information for displaying the video. The display control unit 211 may embed information related to a presence or absence of the interference or the interference depth into the GUI information for displaying the video. The display control unit 211 may embed information in which the progress status or the elapsed time is associated with the presence or absence of the interference or the interference depth into the GUI information for displaying the video. The data generation server 2 may store, separately from the GUI information for displaying the video, the information in which the progress status or the elapsed time is associated with the presence or absence of the interference or the interference depth described below. In this case, the information in which the progress status or the elapsed time is associated with the presence or absence of the interference or the interference depth described below may be temporarily stored as a temporary file. When the shape information is re-set as described below, the information in which the progress status or the elapsed time is associated with the presence or absence of the interference or the interference depth stored by the data generation server 2 may be updated. The display control unit 211 may realize the various displays described above based on the information stored by the data generation server 2.

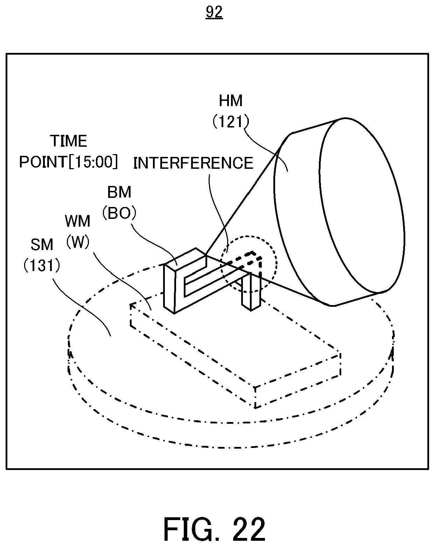

In a case where there are a plurality of interfering objects that may interfere with the processing head 121, the interference information includes predicted result information related to the predicted result of the interference between the processing head 121 and the interfering objects for each of the plurality of interfering objects. In this case, the display control unit 211 may select at least one of the plurality of predicted result information and generate the GUI information for displaying at least one predicted result information that has been selected while not displaying at least one remaining predicted result information that has not been selected. For example, in a case where there is a possibility that the processing head 121 interferes with each of the uncompleted build object BO, the workpiece W, and the stage 131 as described above, the interference information may include first predicted result information related to the predicted result of the interference between the processing head 121 and the uncompleted build object BO, second predicted result information related to the predicted result of the interference between the processing head 121 and the workpiece W, and third predicted result information related to the predicted result of the interference between the processing head 121 and the stage 131. In this case, the display control unit 211 may select at least one of the first to third predicted result information and generate the GUI information for displaying at least one predicted result information that has been selected while not displaying at least one remaining predicted result information that has not been selected. For example, the display control unit 211 may generate the GUI information for displaying at least one predicted result information corresponding to at least one interfering obj ect selected by the terminal user among the first to third predicted result information, while not displaying the predicted result information corresponding to at least one remaining interfering object not selected by the terminal user. For example, in a case where the terminal user selects the uncompleted build object BO as the interfering object for which the interference information is to be displayed, the display control unit 211 may generate the GUI information for displaying the first predicted result information while not displaying the second to third predicted result information, as illustrated in FIG. 22. Moreover, the display control unit 211 may generate the GUI information for displaying the three-dimensional model of at least one interfering object selected by the terminal user while not displaying the three-dimensional model of at least one remaining interfering object not selected by the terminal user, in addition to the predicted result information (namely, the interference information). FIG. 22 illustrates an example in which the uncompleted build model BM of the uncompleted build object BO that has been selected by the terminal user is displayed, while the workpiece model WM of the workpiece W and the stage model SM of the stage 131 that have not been selected by the terminal user are not displayed. In this case, the display apparatus 35 can selectively display the interference information which the terminal user wants to know. Therefore, the display apparatus 35 can simplify the output screen 92 on which the interference information is displayed, while surely displaying the interference information which the terminal user wants to know. Incidentally, the display control unit 211 may generate the GUI information for not displaying the head model HM by the terminal user's selection or non-selection. The terminal user may select to display or not to display each three-dimensional model.

Again in FIG. 6, the terminal user, who has recognized the interference information displayed on the display apparatus 35, may re-perform the operation for setting the shape information on the input screen 91 by using the input apparatus 34 (the step S13). Namely, the terminal user may re-perform an input of the input apparatus 34. Specifically, in a case where the interference information includes the information indicating the predicted result that the interference between the processing head 121 and the interfering object will occur, the build apparatus 1 performs the build operation based on the build data generated based on the shape information that has not been re-set if the shape information is not re-set. However, since it is predicted that the interference between the processing head 121 and the interfering object will occur, there is a high possibility that the interference between the processing head 121 and the interfering object will occur in the build operation. As a result, there is a possibility that the build apparatus 1 cannot properly build the three-dimensional structural object. Therefore, the terminal user may re-set the shape information so that the interference between the processing head 121 and the interfering object will not occur (the step S13).

Note that the terminal user may set information related to at least one of the workpiece model WM and the head model HM by using the input apparatus 34. For example, the terminal user may set information related to a position of at least one of the workpiece model WM and the head model HM by using the input apparatus 34. For example, the terminal user may set information related to a shape of at least one of the workpiece model WM and the head model HM by using the input apparatus 34. In this case, the data generation server 2 can more accurately predict a possibility of properly additively building the three-dimensional structural object. In this case, a value that can be inputted by using the input apparatus 34 may be limited. For example, an input for setting the size (for example, at least one of a height and a width) of the workpiece model WM to a negative value may be restricted.

When the shape information is re-set, the data generation unit 213 may re-generate the additive build model data representing the additive build model based on the re-set shape information (the step S14). Then, the display control unit 211 may re-generate the GUI information related to the setting GUI 9, which includes the output screen 92 on which the additive build model represented by the re-generated additive build model data is displayed (the step S14). Then, the display control unit 211 may transmit the re-generated GUI information to the display apparatus 35 (the step S14). Then, the display apparatus 35 may update the display of the setting GUI 9 including the additive build model based on the re-generated GUI information (the step S14).

The data generation unit 213 may re-generate the additive build model data representing the additive build model based on the re-set shape information, triggered by the re-setting of the shape information by the terminal user. Then, the display control unit 211 may re-generate the GUI information related to the setting GUI 9, which includes the output screen 92 on which the additive build model represented by the re-generated additive build model data is displayed, triggered by the re-generation of the additive build model data. Then, the display control unit 211 may re-transmit the re-generated GUI information to the display apparatus 35, triggered by the re-generation of the GUI information. Then, the display apparatus 35 may update the display of the setting GUI 9 based on the re-transmitted GUI information, triggered by the re-transmission of the GUI information (in other words, triggered by the re-reception of the GUI information by the terminal apparatus 3). In this case, the additive build model displayed on the output screen 92 of the setting GUI 9 is successively updated in accordance with the re-setting of the shape information. Typically, the additive build model displayed on the output screen 92 of the setting GUI 9 is updated in real time in accordance with the re-setting of the shape information. As a result, the terminal user can re-set the shape information while recognizing sequentially (typically in real time) the additive build model having the three-dimensional shape indicated by the shape information re-set by the terminal user.

However, the data generation unit 213 may re-generate the additive build model data representing the additive build model based on the re-set shape information, triggered by an input of a request by the terminal user, the server user, or the build user. The display control unit 211 may re-generate the GUI information related to the setting GUI 9, which includes the output screen 92 on which the additive build model represented by the re-generated additive build model data is displayed, triggered by the input of the request by the terminal user, the server user, or the build user. The display control unit 211 may re-transmit the re-generated GUI information to the display apparatus 35, triggered by the input of the request by the terminal user, the server user, or the build user. The display apparatus 35 may update the display of the setting GUI 9 based on the re-transmitted GUI information, triggered by the input of the request by the terminal user, the server user, or the build user. In this case, the additive build model displayed on the output screen 92 of the setting GUI 9 is successively updated according to the request of the terminal user, the server user, or the build user.

Furthermore, when the shape information is re-set, the interference prediction unit 214 may re-predict whether or not the interference of the processing head 121 will occur based on the additive build model data re-generated by the data generation unit 213 from the shape information (the step S15). Then, the display control unit 211 may re-generate the GUI information for displaying the interference information indicating a re-predicted result of the interference by the interference prediction unit 214 on the display apparatus 35 of the terminal apparatus 3 (the step S16). Then, the display control unit 211 may re-transmit the re-generated GUI information to the display apparatus 35 (the step S16). Then, the display apparatus 35 may update the display of the setting GUI 9 including the interference information based on the re-generated GUI information (the step S16).

The interference prediction unit 214 may re-predict whether or not the interference of the processing head 121 will occur, triggered by the re-setting of the shape information by the terminal user. Then, the display control unit 211 may re-generate the GUI information for displaying the interference information indicating the re-predicted result of the interference by the interference prediction unit 214 on the display apparatus 35 of the terminal apparatus 3, triggered by the re-prediction of whether or not interference of the processing head 121 will occur. Then, the display control unit 211 may re-transmit the re-generated GUI information to the display apparatus 35, triggered by the re-generation of the GUI information. Then, the display apparatus 35 may update the display of the setting GUI 9 including the interference information based on the re-transmitted GUI information, triggered by the re-transmission of the GUI information (in other words, triggered by the re-reception of the GUI information by the terminal apparatus 3). In this case, the interference information (furthermore, the head model HM and the interfering object model) displayed on the output screen 92 of the setting GUI 9 is successively updated in accordance with the re-setting of the shape information. Typically, the interference information (furthermore, the head model HM and the interfering object model) displayed on the output screen 92 of the setting GUI 9 is updated in real time in accordance with the re-setting of the shape information. As a result, the terminal user can re-set the shape information while recognizing sequentially (typically in real time) an influence of the re-setting of the shape information on the interference of the processing head 121.

However, the interference prediction unit 214 may re-predict whether or not the interference of the processing head 121 will occur, triggered by an input of a request by the terminal user, the server user, or the build user. The display control unit 211 may re-generate the GUI information for displaying the interference information indicating the re-predicted result of the interference by the interference prediction unit 214, triggered by the input of the request by the terminal user, the server user, or the build user. The display control unit 211 may re-transmit the re-generated GUI information to the display apparatus 35, triggered by the input of the request by the terminal user, the server user, or the build user. The display apparatus 35 may update the display of the setting GUI 9 including the interference information based on the re-transmitted GUI information, triggered by the input of the request by the terminal user, the server user, or the build user. In this case, the interference information (furthermore, the head model HM and the interfering object model) displayed on the output screen 92 of the setting GUI 9 is successively updated according to the request of the terminal user, the server user, or the build object user.

As described above, the setting GUI 9 includes the input screen 91 for setting the shape information and the output screen 92 for displaying the interference information together with the head model HM and the interfering object model. In this case, the terminal user may re-set the shape information by using the input screen 91, which is displayed alongside the output screen 92, while recognizing the interference information displayed on the output screen 92. Therefore, the terminal user can efficiently re-set the shape information by using the input screen 91 while recognizing the effect of the re-setting of the shape information on the interference of the processing head 121 on the output screen 92.

The terminal user may repeat the re-setting of the shape information until the interference information displayed on the display apparatus 35 indicates that it is predicted that the interference of the processing head 121 will not occur (alternatively, that it is not predicted that the interference of the processing head 121 will occur). Namely, the terminal user may repeat the re-setting of the shape information until the interference information including the information related to the predicted result that the interference of the processing head 121 will occur changes to the interference information including the information related to the predicted result that the interference of the processing head 121 will not occur. When the interference information indicates that it is predicted that the interference of the processing head 121 will not occur due to the re-setting of the shape information, the output screen 92 illustrated in FIG. 15 to FIG. 17 is displayed on the display apparatus 35, and therefore the terminal user can recognize that it is predicted that the interference of the processing head 121 will not occur due to the re-setting of the shape information. Incidentally, when the interference information indicates that it is predicted that the interference of the processing head 121 will not occur due to the re-setting of the shape information, the display control unit 211 may generate the GUI information for displaying a notification screen to notify the terminal user that the interference of the processing head 121, which has been predicted to occur before the shape information is re-set, has been resolved.

On the other hand, depending on a content of the re-setting of the shape information by the terminal user, there is a possibility that the interference information including the information related to the predicted result that the interference of the processing head 121 will not occur changes to the interference information including the information related to the predicted result that the interference of the processing head 121 will occur due to the re-setting of the shape information. Even in this case, the terminal user can recognize that the current shape information results in the prediction that the interference of the processing head 121 will occur by recognizing the interference information displayed on the display apparatus 35. Therefore, the fact remains that the terminal user may repeat the re-setting the shape information until the interference information displayed on the display apparatus 35 indicates that it is predicted that the interference of the processing head 121 will not occur.

Note that the terminal user may not repeat the re-setting of the shape information until the interference information indicates that it is predicted that the interference of the processing head 121 will not occur. For example, the terminal user may not re-set the shape information in a case where the interference information indicates that the interference of the processing head 121 will occur, but the degree of the interference is smaller than an allowable value. For example, the terminal user may repeat the re-setting of the shape information until the interference information indicates that the interference of the processing head 121 occurs, but the degree of the interference is smaller than the allowable value.

In a case where the terminal user sets the shape information, the modification suggestion unit 215 of the data generation server 2 may suggest a re-setting (namely, the modification) of the shape information to the terminal user (a step S17). For example, the modification suggestion unit 215 may suggest to the terminal user a method for re-setting the shape information so that it is predicted that the interference of the processing head 121will not occur. For example, the modification suggestion unit 215 may suggest to the terminal user a method for re-setting the shape information so that it is not predicted that the interference of the processing head 121 will occur. Therefore, the modification suggestion unit 215 may calculate, based on the interference information (furthermore, based on at least one of the head model HM, the interfering object model, and the additive build model data if necessary), the shape of the three-dimensional structural object that prevents the interference of the processing head 121 from occurring. Then, the modification suggestion unit 215 may determine a method for re-setting the shape information so that the shape information indicating the calculated shape is generated, and suggest the determined method to the terminal user. In this case, the terminal user can relatively easily re-set the shape information so that it is predicted that the interference of the processing head 121 will not occur by re-setting the shape information by the method suggested by the modification suggestion unit 215.

As one example, in a case where the three-dimensional structural object is the pipe, for example, a bend angle of the pipe (namely, an angle between two pipe sections that are connected to each other to constitute the pipe and extend in different directions , respectively) has a relatively large effect on the interference of the processing head 121. Typically, there is a higher possibility that the processing head 121 interferes with at least one of the uncompleted build object BO, the workpiece W and the stage 131 as the bending angle of the pipe is lager. Therefore, the modification suggestion unit 215 may suggest to the terminal user a method for re-setting the shape information so that the bend angle of the pipe is decreased.

As described above, the terminal user may set the value of the parameter that designates the shape of the three-dimensional structural object in order to set the shape information. In this case, the modification suggestion unit 215 may suggest a recommended value of the parameter to the terminal user. Namely, the modification suggestion unit 215 may suggest the recommended value of the parameter to the terminal user as the method for re-setting the shape information. For example, the modification suggestion unit 215 may suggest to the terminal user, as the recommended value, a value of the parameter that can achieve a state in which it is predicted that the interference of the processing head 121 will not occur. As one example, in a case where the three-dimensional structural object is the pipe, the modification suggestion unit 215 may suggest at least one of the recommended value of the parameters that designates the position of at least a part of the pipe, the recommended value of the parameters that designates the direction of at least a part of the pipe, the recommended value of the parameters that designates the strength of at least a part of the pipe, the recommended value of the parameters that designates the size of at least a part of the pipe, the recommended value of the parameters that designates the thickness of the wall of at least a part of the pipe, the recommended value of the parameters that designates the angle (the rotational angle) of at least a part of the pipe, the recommended value of the parameters that designates the presence or absence of the branch of at least a part of the pipe, the recommended value of the parameters that designates the presence or absence of the merge of at least a part of the pipe, the recommended value of the parameters that designates the multiple structure of at least a part of the pipe, and the recommended value of the parameters that designates the shape of the edge part of at least a part of the pipe.

The modification suggestion unit 215 may suggest two or more recommended values to the terminal user. In this case, the terminal user may select one of the two or more recommended values by using the input apparatus 34. The terminal user may adopt one of the two or more recommended values as the value of the parameter by using the input apparatus 34.

The modification suggestion unit 215 may suggest, as the recommended value of the parameter, a range that is recommended as the value of the parameter to the terminal user. For example, the modification suggestion unit 215 may suggest, as the recommended value of the parameter, a maximum value and a minimum value that are recommended as the value of the parameter to the terminal user. In this case, the terminal user may re-set the parameter within the range that is recommended as the value of the parameter by using the input apparatus 34.

The modification suggestion unit 215 may suggest a recommended shape of the three-dimensional structural object to the terminal user. Namely, the modification suggestion unit 215 may suggest the recommended shape of the three-dimensional structural object to the terminal user as a method for re-setting the shape information. For example, the modification suggestion unit 215 may suggest to the terminal user, as the recommended shape, a shape of the three-dimensional structural object that can achieve a state in which it is predicted that the interference of the processing head 121 will not occur.

The modification suggestion unit 215 may suggest two or more recommended shapes to the terminal user. In this case, the terminal user may select one of the two or more recommended shapes by using the input apparatus 34. The terminal user may re-set the value of the parameter to achieve one of the two or more recommended shapes by using the input apparatus 34.

Incidentally, the modification suggestion unit 215 may suggest to the terminal user any method for preventing the interference of the processing head 121, in addition to or instead of suggesting the re-setting of the shape information. For example, there is a possibility that the shape of the workpiece W on which the three-dimensional structural object is additionally built has an effect on the interference of the processing head 121. Specifically, in a case where a relatively thin workpiece W is placed on the stage 131, the surface of the workpiece W on which the three-dimensional structural object is additionally built is located at a position that is relatively close to the surface of the stage 131. Therefore, there is a relatively high possibility that the processing head 121, which additively builds the three-dimensional structural object on the surface of the workpiece W, interferes with the surface of the stage 131. On the other hand, in a case where a relatively thick workpiece W is placed on the stage 131, the surface of the workpiece W on which the three-dimensional structural object is additively built is located at a position that is relatively far from the surface of the stage 131. Therefore, there is a relatively low possibility that the processing head 121, which additively builds the three-dimensional structural object on the surface of the workpiece W, interferes with the surface of the stage 131. Therefore, the modification suggestion unit 215 may suggest to the terminal user, as any method for preventing the interference of the processing head 121, a thickness of the workpiece W that can achieve a state in which it is predicted that the interference of the processing head 121 will not occur.

The modification suggestion unit 215 may suggest the re-setting of the shape information to the terminal user by displaying a suggestion object 93, which is a display object for suggesting the re-setting of the shape information to the terminal user, on the display apparatus 35 of the terminal apparatus 3. In this case, the display control unit 211 may generate, under the control of the modification suggestion unit 215, the display data for displaying the suggestion object 93 for suggesting the re-setting of the shape information to the terminal user. Then, the display control unit 211 may transmit the generated display data to the terminal apparatus 3 by using the communication apparatus 23. The terminal apparatus 3 may receive the display data transmitted from the data generation server 2. The display apparatus 35 of the terminal apparatus 3 may display the suggestion object 93 based on the display data transmitted from the data generation server 2.

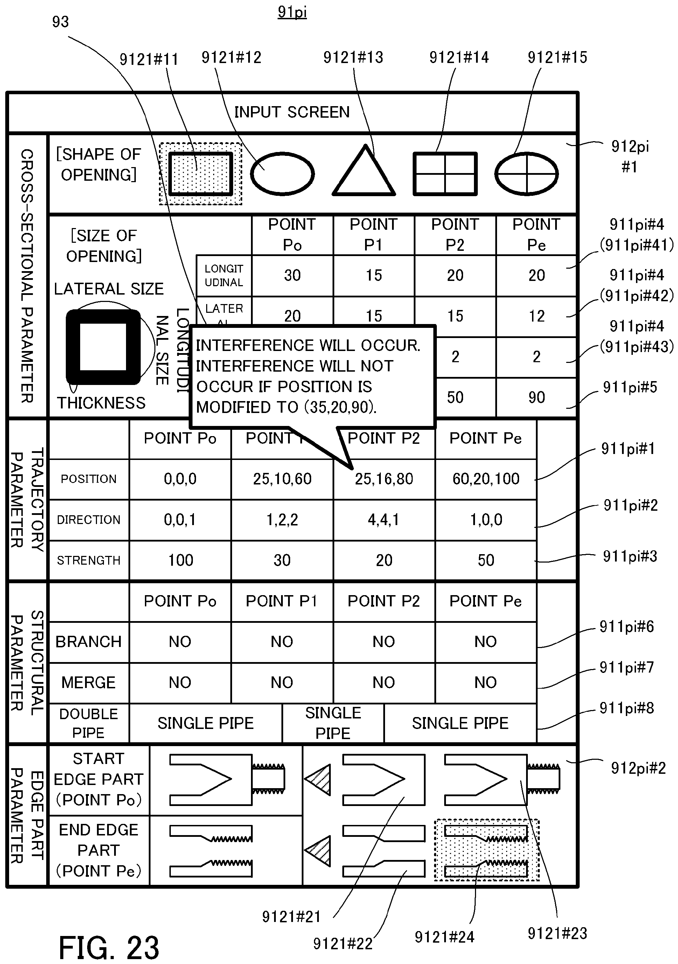

As described above, the display control unit 211 generates the GUI information for displaying the setting GUI 9 on the display apparatus 35. In this case, the display control unit 211 may generate, as the display data for displaying the suggestion object 93, the GUI information for displaying the setting GUI 9 including the suggestion object 93 on the display apparatus 35. Namely, the suggestion object 93 may be displayed in the setting GUI 9. For example, as illustrated in FIG. 23, the suggestion object 93 may be displayed on the input screen 91 included in the setting GUI 9. For example, the suggestion object 93 may be displayed on the output screen 92 included in the setting GUI 9.

Alternatively, the modification suggestion unit 215 may directly re-set (namely, modify) the shape information in addition to or instead of suggesting the re-setting of the shape information to the terminal user. For example, the modification suggestion unit 215 may re-set the shape information so that it is predicted that the interference of the processing head 121 will not occur. In this case, the shape information may be automatically re-set so that it is predicted that the interference of the processing head 121 will not occur, even in a case where the terminal user manually re-sets the shape information.

Again in FIG. 6, the data generation unit 213 of the data generation server 2 determines whether or not the operation for setting (alternatively, re-setting, the same may be applied to the below-described description) the shape information by using the setting GUI 9 is completed (a step S18). For example, the data generation unit 213 may determine that the operation for setting the shape information by using the setting GUI 9 is completed in a case where the terminal user instructs by using the input apparatus 34 of the terminal apparatus 3 that the operation for setting the shape information is completed.

As a result of the determination at the step S 18, in a case where it is determined that the operation for setting the shape information by using the setting GUI 9 is not completed (the step S18: No), the operation for setting the shape information by using the setting GUI 9 is continued. Namely, the build system SYS continues the operation from the step S13 to the step S17.

On the other hand, in a case where it is determined that the operation for setting the shape information by using the setting GUI 9 is completed (the step S18: Yes), the data generation unit 213 generates, based on the latest shape information acquired by the information acquisition unit 212 at the step S13, the three-dimensional model data representing the three-dimensional model of the three-dimensional structure having the shape designated by the shape information set by the terminal user (namely, the additive build model data representing the additive build model) (a step S19). In a case where the shape information has been re-set, the data generation unit 213 generates the additive build model data based on the latest shape information re-set by the terminal user.

A format of the three-dimensional model data may be any format. For example, the data generation unit 213 may generate the additive build model data that conforms to a STL (Standard Triangulated Language) file format. For example, the data generation unit 213 may generate the additive build model data that conforms to a STEP (Standard for Exchange of Product Model Data) file format. For example, the data generation unit 213 may generate the additive build model data that conforms to a IGES (Initial Graphics Exchange Specification) file format. For example, the data generation unit 213 may generate the additive build model data that conforms to a DWG file format. For example, the data generation unit 213 may generate the additive build model data that conforms to a DXF (Drawing Exchange Format) file format. For example, the data generation unit 213 may generate the additive build model data that conforms to a VRML (Virtual Reality Modeling Language) file format. For example, the data generation unit 213 may generate the additive build model data that conforms to a ISO 10303 file format.

Incidentally, the additive build model data is generated to display the additive build model on the display apparatus 35 of the terminal apparatus 3 as described above (see the step S14 in FIG. 6). In this case, in a case where the additive build model data generated to display the additive build model on the display apparatus 35 of the terminal apparatus 3 at the step S14 represents the additive build model based on the latest shape information, the data generation unit 213 may not newly generate the additive build model data at the step S19.

The data generation unit 213 may store the generated additive build model data in the storage apparatus 22. Alternatively, the data generation unit 213 may store the shape information used to generate the additive build model data (namely, the shape information such as the parameter and so on set by the terminal user) in the storage apparatus 22, in addition to or instead of the generated additive build model data. In a case where the storage apparatus 22 stores the shape information, the data generation unit 213 may generate the additive build model data based on the shape information stored in the storage apparatus 22. The data generation unit 213 may re-generate (namely, restore), based on the shape information stored in the storage apparatus 22, the additive build model data that has already been generated. The data generation unit 213 may generate, based on the restored additive build model data, new additive build model data representing a new three-dimensional structural object obtained by adding a new part (for example, a screw part or the like) to the three-dimensional structural object represented by the restored additive build model data. Namely, the data generation unit 213 may modify the restored additive build model data.

Moreover, the data generation unit 213 may store the set shape information in the storage apparatus 22 after it is determined that the operation for setting the shape information by using the setting GUI 9 is completed. Moreover, the data generation unit 213 may store the shape information that has been set up to that point (the shape information in the process of being set) in the storage apparatus 22 before it is determined that the operation for setting the shape information by using the setting GUI 9 is completed. For example, the data generation unit 213 may store the shape information that has been set up to that point (the shape information in the process of being set) in the storage apparatus 22 in a case where the terminal user wishes to temporarily suspend the operation of setting the shape information by using the setting GUI 9 although the operation for setting the shape information by using the setting GUI 9 is not completed. In this case, when the terminal user resumes setting the shape information, the display control unit 211 may display, on the display apparatus 35, the setting GUI 9 used by the terminal user to set the shape information from the continuation based on the shape information in the process of being set.

Then, the data generation unit 213 transmits the latest additive build model data generated at the step S19 (alternatively, the step S14) to the build apparatus 1 by using the communication apparatus 23. Incidentally, the data generation unit 213 may transmit the additive build model data to the build apparatus 1 based on an instruction of the server user (alternatively, the terminal user or the build user). Alternatively, the data generation unit 213 may automatically transmit the additive build model data to the build apparatus 1 without waiting for the instruction of the server user (alternatively, the terminal user or the build user). The control apparatus 17 of the build apparatus 1 receives (acquires) the additive build model data transmitted from the data generation server 2 by using the communication apparatus 18.

Incidentally, in a situation where the interference prediction unit 214 still predicts that the interference of the processing head 121 will occur, the data generation unit 213 may not transmit the additive build model data to the build apparatus 1. Alternatively, the data generation unit 213 may transmit, to the build apparatus 1, the additive build model data to which data indicating that it is predicted that the interference of the processing head 121 will occur is added. For example, the data generation unit 213 may transmit, to the build apparatus 1, the additive build model data to which an interference flag indicating that it is predicted that the interference of the processing head 121 will occur is added. For example, the data generation unit 213 may transmit, to the build apparatus 1, the additive build model data having a data name (a file name) to which a text "interference NG" indicating that it is predicted that the interference of the processing head 121 will occur is added.

Then, the control apparatus 17 generates, based on the additive build model data, the build data that specifies a detail of the operation of the build apparatus 1 (a step S20). Specifically, the control apparatus 17 generates, based on the additive build model data, the build data that specifies the detail of the operation of the build apparatus 1 to additively build the three-dimensional structural object represented by the additive build model data (namely, the three-dimensional structural object having the shape designated by the shape information set by the terminal user). Namely, the control apparatus 17 generates, based on the additive build model data, the build data that operates the build apparatus 1 to additively build the three-dimensional structural object represented by the additive build model data.

The build data may include path information indicating a relative movement trajectory of the processing head 121 relative to the stage 131. The irradiation position of the processing light EL from the irradiation optical system 1211 and a supply position of the build material M from the material nozzle 1212 move relative to the stage 131 due to the relative movement of the processing head 121 relative to the stage 131. Therefore, the path information may be considered to indicate a relative movement trajectory of each of the irradiation position of the processing light EL and the supply position of the build material M relative to the stage 131.

Incidentally, the additive build model data may be re-generated in a case where the shape information is re-set as described above (see the step S14 in Fig. 6). In a case where the additive build model data is re-generated in this manner, the control apparatus 17 generates the build data based on the re-generated additive build model data (namely, the latest additive build model data based on the latest shape information).

Then, the control apparatus 17 controls the operation of the build apparatus 1 to additively build the three-dimensional structural object (namely, the three-dimensional structural object having the shape set by the terminal user) based on the build data generated at the step S20 (a step S21). As a result, the three-dimensional structural object having the shape set by the terminal user is built.

### (3) Technical Effect of Build System SYS

As described above, in the build system SYS in the present example embodiment, the terminal user can generate the additive build model data by setting the value of the parameter and / or selecting the icon that designates the shape of the three-dimensional structural object. Namely, the terminal user can generate the additive build model data without using a software that requires a high level of expertise, such as a 3D CAD (Computer Aided Design) software. Namely, the data generation server 2 can appropriately assist the user to generate the additive build model data by providing the setting GUI 9 to the terminal user.

Furthermore, the display apparatus 35 can display the interference information including the information related to the predicted result of whether or not the interference of the processing head 121 will occur. In this case, the terminal user can re-set the shape information while recognizing the interference information displayed on the display apparatus 35. Therefore, the terminal user can appropriately recognize whether or not the shape information set by the terminal user himself results in the interference of the processing head 121. Therefore, the terminal user can appropriately set the shape information so that the interference of the processing head 121 will not occur.

Furthermore, the display apparatus 35 can display the interference information including the information related to the predicted result of whether or not the interference of the processing head 121 will occur at the designated time point designated by the terminal user. Therefore, the terminal user can appropriately recognize whether or not there is a possibility that the interference of the processing head 121 will occur at a certain time point. Therefore, the terminal user can appropriately set the shape information so that the interference of the processing head 121 will not occur at a certain time point.

### (4) Modified Example

Next, a modified example of the build system SYS will be described.

### (4-1) First Modified Example

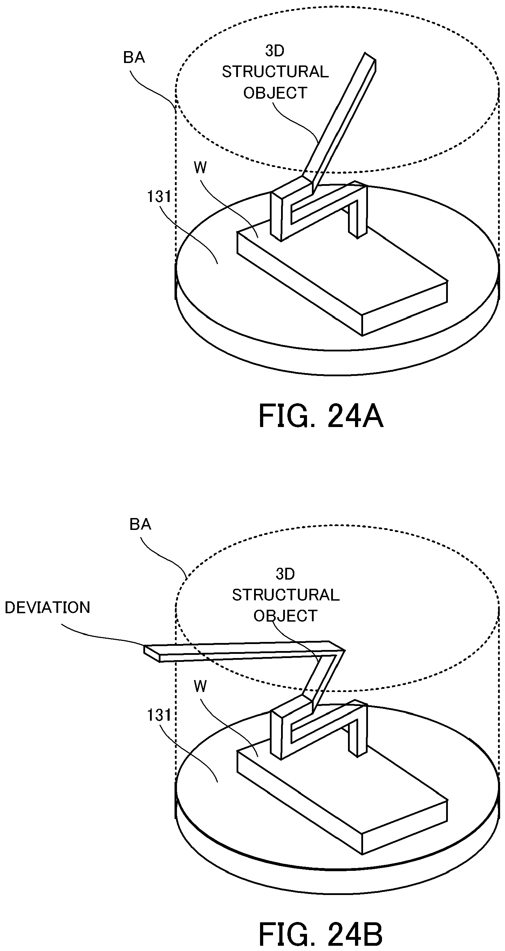

In a first modified example, the data generation server 2 may determine whether or not the additively-built three-dimensional structural object is within a range of a processing space BA when the processing head 121 is assumed to additively builds the three-dimensional structural object having the shape designated by the shape information set by the terminal user. One example of a positional relationship between the three-dimensional structural object and the processing space BA is illustrated in FIG. 24A and FIG. 24B. FIG. 24A illustrates one example of the three-dimensional structural object that is within the processing space BA. On the other hand, FIG. 24B illustrates one example of the three-dimensional structural object that is not within (namely, deviates from) the processing space BA.

The processing space BA is a space that is set in advance as the space in which the processing head 121 should perform the additive building. For example, the processing space BA may include a space above the stage 131 because the additive building is performed on the workpiece W placed on the stage 131. For example, , the processing space BA may include a space between the stage 131 and the processing head 121 because the additive building is performed between the stage 131 and the processing head 121.

The data generation server 2 may generate the display data (for example, the GUI information) for displaying the range of the processing space BA together with the additive build model (namely, the three-dimensional model of the three-dimensional structural object) displayed at the step S14 in FIG. 6. In this case, the terminal user can intuitively recognize whether or not the three-dimensional structural object having the shape designated by the shape information set by the terminal user can be additively built in the processing space BA.

In a case where it is determined that the three-dimensional structural object is not within the processing space BA, the terminal user may perform the operation for re-setting the shape information on the input screen 91 by using the input apparatus 34 again. For example, the terminal user may re-set the shape information so that the three-dimensional structural object is within the processing space BA.

Incidentally, in a situation where it is still determined that the three-dimensional structural object is not within the processing space BA, the data generation unit 213 may not transmit the additive build model data to the build apparatus 1. Alternatively, the data generation unit 213 may transmit, to the build apparatus 1, the additive build model data to which data indicating that the three-dimensional structural object is not within the processing space BA is added. For example, the data generation unit 213 may transmit, to the build apparatus 1, the additive build model data to which a processing range NG flag indicating that the three-dimensional structural object is not within the processing space BA is added. For example, the data generation unit 213 may transmit, to the build apparatus 1, the additive build model data having a data name (a file name) to which a text "processing range NG" indicating that the three-dimensional structural obj ect is not within the processing space BA is added.

### (4-2) Other Modified Example

In the above-described description, the data generation server 2 generates the additive build model data based on the shape information, and predicts based on the additive build model data whether or not the interference of the processing head 121 will occur. However, an interference prediction apparatus that is different from the data generation server 2 may predict based on the additive build model data whether or not the interference of the processing head 121 will occur. In this case, the data generation server 2 may transmit the generated additive build model data to the interference prediction apparatus, and the interference prediction apparatus may predict based on the additive build model data transmitted from the data generation server 2 whether or not the interference of the processing head 121 will occur. The interference predictor may be included in the control apparatus 17 of the build apparatus 1. The interference prediction apparatus may be an apparatus that is different from the build apparatus 1. Incidentally, in a case where the data generation server 2 does not predict whether or not the interference of the processing head 121 will occur, the data generation server 2 may not include the interference prediction unit 214.

In the above-described description, the control apparatus 17 of the build apparatus 1 generates the build data based on the additive build model data. However, a build data generation apparatus that is different from the control apparatus 17 of the build apparatus 1 may generate the build data based on the additive build model data. In this case, the data generation server 2 may transmits the generated additive build model data to the build data generation apparatus, and the build data generation apparatus may generate the build data based on the additive build model data transmitted from the data generation server 2. The build data generation apparatus may be implemented in the calculation apparatus 21 of the data generation server 2. The build data generation apparatus may be an apparatus that is different from the data generation server 2. The build data generation apparatus may be an apparatus that is referred to as a so-called slicer.

In the above-described description, the data generation server 2 suggests the re-setting (namely, the modification) of the shape information to the terminal user. However, the data generation server 2 may not suggest the re-setting of the shape information to the terminal user. In this case, the data generation server 2 may not include the modification suggestion unit 215. Alternatively, a modification suggestion apparatus that is different from the data generation server 2 may suggest the re-setting (namely, the modification) of the shape information to the terminal user.

In the above-described description, the build apparatus 1 melts the build material M by irradiating the build material M with the processing light EL. However, the build apparatus 1 may melts the build material M by irradiating the build material M with any energy beam. At least one of a charged particle beam, an electromagnetic wave and the like is one example of any energy beam. At least one of an electron beam, an ion beam and the like is one example of the charged particle beam.

In the above-described description, the build apparatus 1 builds the three-dimensional structural object by performing the additive manufacturing based on the Laser Metal Deposition. However, the build apparatus 1 may build the three-dimensional structural object by performing the additive manufacturing based on another method by which the three-dimensional structural object is formable. Alternatively, the build apparatus 1 may build the three-dimensional structural object by performing a removal processing, in addition to or instead of performing the additive manufacturing. The build apparatus 1 may build the three-dimensional structural object by performing a machining processing, in addition to or instead of performing at least one of the additive manufacturing and the removal processing.

In the above-described description, the build apparatus 1 includes the processing head 121 that additively builds the three-dimensional structural object by performing the additive manufacturing on the workpiece W. However, the build apparatus 1 may include a measurement head for measuring a measurement target object (for example, at least one of the workpiece W and the build object) in addition to or instead of the processing head 121. In this case, the data generation server 2 may predict whether or not an interference between the measurement head and the interfering object will occur when the measurement head measures the measurement target obj ect, in a same manner as a case where it predicts whether or not the interference between the processing head 121 and the interfering object will occur when the processing head 121 performs the additive manufacturing on the workpiece W. In order to measure the measurement targe object, the measurement head may include a measurement apparatus. A measurement apparatus that is configured to measure a characteristic (for example, at least one of a position and a shape) of the measurement target object is one example of the measurement apparatus. The measurement apparatus may include at least one of a two-dimensional imaging apparatus, a three-dimensional imaging apparatus, a displacement meter, a laser light source, and a beam light source, for example.

### (9) Supplementary Note

Regarding the above described example embodiment, below described Supplementary notes are further disclosed.

### [Supplementary Note 1]

A data generation method for generating data related to a display of an interference between a measurement head and a second object that is predicted to occur when the measurement head measures a first object, wherein
the data generation method includes generating display data for displaying a three-dimensional model representing the second object on a display apparatus based on model data representing a three-dimensional shape of the first object,
the display data includes interference depth information indicating a degree of the interference between the measurement head and the second object.

### [Supplementary Note 2]

A display apparatus that is configured to:
receive model data that represents a three-dimensional shape of an object additively built on a placement apparatus by using a build head and that is generated based on an input of an input apparatus;
display a three-dimensional model representing the object based on the received model data; and
re-display the three-dimensional model based on the input,
wherein
the three-dimensional model related to the object includes a three-dimensional model of a build object before the additive building of the object is completed,
the display includes a display of interference information indicating an interference between the build head and at least one of the build object and the placement apparatus,
when a re-input of the input apparatus is performed, the three-dimensional model is re-generated based on the re-input, and the interference information is updated based on the re-input.

### [Supplementary Note 3]

A display apparatus that is configured to:
receive model data that represents a three-dimensional shape of an object additively built on a placement apparatus by using a build head and that is generated based on an input of an input apparatus;
display a three-dimensional model representing the object based on the received model data; and
re-display the three-dimensional model based on the input,
wherein
the three-dimensional model related to the object includes a three-dimensional model of a build object before the additive building of the object is completed,
the display includes a display of interference information indicating an interference between the build head and at least one of the object and the placement apparatus,
the display apparatus displays a three-dimensional model representing the object at a designated point between a start point and an end point of the building together with the interference information that is predicted to occur at the designated point.

### [Supplementary Note 4]

A display apparatus that displays data related to an interference between a processing head and a second object that is predicted to occur when the processing head processes a first object, wherein
the display apparatus displays a three-dimensional model representing the second object based on model data representing a three-dimensional shape of the first object,
the display includes a display of interference depth information indicating a degree of the interference between the processing head and the second object.

### [Supplementary Note 5]

A display apparatus that displays data related to an interference between a processing head and a second object that is predicted to occur when the processing head processes a first object, wherein
the display apparatus displays a three-dimensional model representing the second object based on model data representing a three-dimensional shape of the first object,
the display includes a display of interference information indicating the interference between the processing head and the second object,
the display apparatus displays a three-dimensional model representing the object at a designated point in a period from a start point to an end point of the processing together with the interference information of the interference that is predicted to occur at the designated point.

### [Supplementary Note 6]

A display apparatus that displays data related to an interference between a processing head and a second object that is predicted to occur when the processing head processes a first object, wherein
the display apparatus is configured to:
receive model data that represents a three-dimensional shape of the first object and that is generated based on a parameter which is set based on an input of an input apparatus and which designates a shape of the first object; and
display a three-dimensional model representing the second object based on the model data,
the display includes a display of interference information indicating the interference between the processing head and the second object,
the display includes a display of a display screen including a parameter display screen on which the parameter is displayable and an output screen on which the interference information is displayable.

### [Supplementary Note 7]

A display apparatus that displays data related to an interference between a processing head and a second object that is predicted to occur when the processing head processes a first object, wherein
the display apparatus is configured to:
receive model data that represents a three-dimensional shape of the first object and that is generated based on a parameter which is set based on an input of an input apparatus and which designates a shape of the first object; and
display a three-dimensional model representing the second object based on model data representing a three-dimensional shape of the first object,
the display includes a display of interference information indicating the interference between the processing head and the second object,
the display includes a display for displaying a display object for suggesting a re-input to a user together with the interference information.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a data generation method, a build method, a processing method, a data generation apparatus, a computer program, a recording medium, a display method, and a display apparatus, each of which involves such changes, is also intended to be within the technical scope of the present invention.

### Description of Reference Codes

- SYS: build system
- 1: build apparatus
- 121: processing head
- 131: stage
- 2: data generation server
- 21: calculation apparatus
- 211: display control unit
- 212: information acquisition unit
- 213: data generation unit
- 214: interference prediction unit
- 215: modification suggestion unit
- 3: terminal apparatus
- 311: display control unit
- 312: information acquisition unit
- 9: setting GUI
- 91: input screen
- 92: output screen
- EL: processing light
- W: workpiece
- BO: uncompleted build object
- HM: head model
- WM: workpiece model
- SM: stage model

## Claims

1. A data generation method comprising:
generating, based on an input of an input apparatus, model data representing a three-dimensional shape of an object that is additively built on a placement apparatus by using a build head;
generating, based on the generated model data, display data for displaying a three-dimensional model related to the object on a display apparatus; and
generating, based on the model data, build data for additively building the object,
wherein
the three-dimensional model related to the object includes a three-dimensional model of a build object before the additive building of the object is completed,
the display data includes interference information indicating an interference between the build head and at least one of the build object and the placement apparatus,
when a re-input of the input apparatus is performed, the model data and the display data are re-generated based on the re-input,
the interference information is updated based on the re-input.

2. The data generation method according to claim 1, wherein
regarding the additive building of the object, the interference information includes:
first interference information indicating that the interference occurs in a case where it is predicted that the interference occurs; and
second interference information indicating that the interference does not occur in a case where it is not predicted that the interference occurs,
the update of the interference information includes updating the first interference information to the second interference information.

3. The data generation method according to claim 1 or 2, wherein
the interference information includes interference depth information indicating a degree of the interference between the build head and at least one of the build object and the placement apparatus.

4. The data generation method according to claim 3, wherein
the display data includes data for changing a display aspect of the interference depth information based on a difference of the degree of the interference.

5. The data generation method according to claim 4, wherein
in a case where the degree of the interference that is predicted to occur at a first part of at least one of the build object and the placement apparatus is different from the degree of the interference that is predicted to occur at a second part of at least one of the build object and the placement apparatus, the display data includes data for changing the display aspect of the interference depth information displayed together with a model part of the three-dimensional model corresponding to the first part and the display aspect of the interference depth information displayed together with a model part of the three-dimensional model corresponding to the second part.

6. The data generation method according to claim 4 or 5, wherein
the display data includes data for displaying the interference depth information together with the three-dimensional model by changing, based on the degree of the interference that is predicted to occur at each part of at least one of the build object and the placement apparatus, a display aspect of a model part of the three-dimensional model, which is displayed on the display apparatus, corresponding to the each part.

7. The data generation method according to any one of claims 4 to 6, wherein
the display aspect includes a display color.

8. The data generation method according to any one of claims 1 to 7, wherein
the generating the display data includes generating display data for displaying, on the display apparatus, the three-dimensional model representing the build object at a designated point in a period from a start point to an end point of the additive building together with the interference information of the interference that is predicted to occur at the designated point.

9. The data generation method according to claim 8, wherein
the display data includes display data for displaying, on the display apparatus, a progress object which represents a progress from a start of the building or a time from the start of the building and by which the designated point can be determined,
the generating the display data includes generating display data for displaying, on the display apparatus, the progress object and the three-dimensional model representing the build object at the designated point together with the interference information of the interference that is predicted to occur at the designated point.

10. The data generation method according to claim 9, wherein
the interference information includes interference time point information related to an interference time point at which it is predicted that the interference between the build head and at least one of the build object and the placement apparatus occurs in the period,
an indicator indicating the interference time point is added to the progress object.

11. The data generation method according to claim 10, wherein
in a case where the indicator is selected, the generating the display data includes generating the display data for displaying the three-dimensional model representing the build object at the interference time point indicated by the selected indicator and the interference information related to the interference that is predicted to occur at the selected interference time point.

12. The data generation method according to claim 10 or 11, wherein
the display data includes data for changing a display aspect of the indicator based on a degree of the interference that is predicted to occur at the interference time point.

13. The data generation method according to any one of claims 8 to 12, wherein
in a case where a second point that is different from a first point is newly determined as the designated point in a situation where the first point is determined as the designated point and the display data for displaying the three-dimensional model representing the build object at the first point and the interference information related to the interference that is predicted to occur at the first point is generated, the generating the display data includes re-generating the display data for displaying the three-dimensional model representing the build object and the interference information related to the interference that is predicted between the first point and the second point.

14. The data generation method according to any one of claims 8 to 13, wherein
in a case where a second point that is different from a first point is newly determined as the designated point in a situation where the first point is determined as the designated point and the display data for displaying the three-dimensional model representing the build object at the first point and the interference information related to the interference that is predicted to occur at the first point is generated, the generating the display data includes re-generating the display data for displaying the three-dimensional model representing the build object at the second point and the interference information related to the interference that is predicted to occur at the second point.

15. The data generation method according to any one of claims 1 to 14, wherein
the display data includes display data for displaying, on the display apparatus, a display screen that includes: a parameter display screen on which a parameter that is set based on the input of the input apparatus and that designates a shape of the object is displayable; and an output screen on which the interference information is displayable together with the three-dimensional model of the build obj ect.

16. The data generation method according to claim 15, wherein
in a case where the parameter is re-set based on the input of the input apparatus, the generating the model data includes re-generating the model data based on the re-set parameter,
in a case where the model data is re-generated, the generating the display data includes updating the interference information and re-generating the display data for displaying the display screen including the output screen on which the updated interference information is displayable.

17. The data generation method according to claim 15 or 16, wherein
the generating the model data includes re-generating, triggered by a re-setting of the parameter based on the input of the input apparatus, the model data based on the re-set parameter,
the generating the display data includes updating, triggered by the re-generation of the model data, the interference information and re-generating the display data for displaying the display screen including the output screen on which the updated interference information is displayable.

18. The data generation method according to any one of claims 15 to 17 further comprising:
outputting the display data to the display apparatus; and
displaying the interference information based on the display data by the display apparatus.

19. The data generation method according to claim 18, wherein
in a case where the display data is re-generated, the outputting the display data includes re-outputting the re-generated display data to the display apparatus,
in a case where the display data is re-outputted, the displaying the interference information includes displaying the interference information based on the re-outputted display data.

20. The data generation method according to claim 18 or 19, wherein
the outputting the display data includes re-outputting, triggered by a re-generation of the display data, the re-generated display data to the display apparatus,
the displaying the interference information includes displaying, triggered by the re-output of the display data, the interference information based on the re-outputted display data.

21. The data generation method according to any one of claims 1 to 20, wherein
the display data includes generating display data for displaying, on the display apparatus, a display object that suggest the re-input to a user together with the interference information.

22. The data generation method according to claim 21, wherein
the display data includes data for displaying the display screen including the display object and a parameter display screen on which a parameter that is set based on the input of the input apparatus and that designates a shape of the object is displayable.

23. The data generation method according to claim 21 or 22, wherein
the display data includes data for displaying the display screen including the display object and an output screen on which the three-dimensional model representing the build object is displayable.

24. The data generation method according to any one of claims 21 to 23, wherein
the display object includes a display object for suggesting, to the user, at least one of a recommended value of a parameter, which is set based on the input of the input apparatus and which designates a shape of the object, and a recommended shape of the object after the additive building.

25. The data generation method according to claim 24, wherein
the recommended value includes a value related to a trajectory parameter of the parameter.

26. A data generation method comprising:
generating, based on an input of an input apparatus, model data representing a three-dimensional shape of an object that is additively built on a placement apparatus by using a build head;
generating, based on the generated model data, display data for displaying a three-dimensional model related to the object on a display apparatus; and
generating, based on the model data, build data for additively building the object,
wherein
the three-dimensional model related to the object includes a three-dimensional model of a build object before the additive building of the object is completed,
the display data includes interference information indicating an interference between the build head and at least one of the build object and the placement apparatus,
the generating the display data includes generating display data for displaying, on the display apparatus, the three-dimensional model representing the build object at a designated point in a period from a start point to an end point of the additive building together with the interference information of the interference that is predicted to occur at the designated point.

27. The data generation method according to claim 26, wherein
the interference information includes interference depth information indicating a degree of the interference between the build head and at least one of the build object and the placement apparatus.

28. The data generation method according to claim 27, wherein
the display data includes data for changing a display aspect of the interference depth information based on a difference of the degree of the interference.

29. The data generation method according to claim 28, wherein
in a case where the degree of the interference that is predicted to occur at a first part of at least one of the build object and the placement apparatus is different from the degree of the interference that is predicted to occur at a second part of at least one of the build object and the placement apparatus, the display data includes data for changing the display aspect of the interference depth information displayed together with a model part of the three-dimensional model corresponding to the first part and the display aspect of the interference depth information displayed together with a model part of the three-dimensional model corresponding to the second part.

30. The data generation method according to claim 28 or 29, wherein
the display data includes data for displaying the interference depth information together with the three-dimensional model by changing, based on the degree of the interference that is predicted to occur at each part of at least one of the build object and the placement apparatus, a display aspect of a model part of the three-dimensional model, which is displayed on the display apparatus, corresponding to the each part.

31. The data generation method according to any one of claims 28 to 30, wherein
the display aspect includes a display color.

32. The data generation method according to any one of claims 26 to 31, wherein
the display data includes display data for displaying, on the display apparatus, a progress object which represents a progress from a start of the building or a time from the start of the building and by which the designated point can be determined,
the generating the display data includes generating display data for displaying, on the display apparatus, the progress object and the three-dimensional model representing the build object at the designated point together with the interference information of the interference that is predicted to occur at the designated point.

33. The data generation method according to claim 32, wherein
the interference information includes interference time point information related to an interference time point at which it is predicted that the interference between the build head and at least one of the build object and the placement apparatus occurs in the period,
an indicator indicating the interference time point is added to the progress object.

34. The data generation method according to claim 33, wherein
in a case where the indicator is selected, the generating the display data includes generating the display data for displaying the three-dimensional model representing the build object at the interference time point indicated by the selected indicator and the interference information related to the interference that is predicted to occur at the selected interference time point.

35. The data generation method according to claim 33 or 34, wherein
the display data includes data for changing a display aspect of the indicator based on a degree of the interference that is predicted to occur at the interference time point.

36. The data generation method according to any one of claims 26 to 35, wherein
in a case where a second point that is different from a first point is newly determined as the designated point in a situation where the first point is determined as the designated point and the display data for displaying the three-dimensional model representing the build object at the first point and the interference information related to the interference that is predicted to occur at the first point is generated, the generating the display data includes re-generating the display data for displaying the three-dimensional model representing the build object and the interference information related to the interference that is predicted between the first point and the second point.

37. The data generation method according to any one of claims 26 to 36, wherein
in a case where a second point that is different from a first point is newly determined as the designated point in a situation where the first point is determined as the designated point and the display data for displaying the three-dimensional model representing the build object at the first point and the interference information related to the interference that is predicted to occur at the first point is generated, the generating the display data includes re-generating the display data for displaying the three-dimensional model representing the build object at the second point and the interference information related to the interference that is predicted to occur at the second point.

38. The data generation method according to any one of claims 26 to 37, wherein
the display data includes display data for displaying, on the display apparatus, a display screen that includes: a parameter display screen on which a parameter that is set based on the input of the input apparatus and that designates a shape of the object is displayable; and an output screen on which the interference information is displayable.

39. The data generation method according to claim 38, wherein
in a case where the parameter is re-set based on the input of the input apparatus, the generating the model data includes re-generating the model data based on the re-set parameter,
in a case where the model data is re-generated, the generating the display data includes updating the interference information and re-generating the display data for displaying the display screen including the output screen on which the updated interference information is displayable.

40. The data generation method according to claim 38 or 39, wherein
the generating the model data includes re-generating, triggered by a re-setting of the parameter based on the input of the input apparatus, the model data based on the re-set parameter,
the generating the display data includes updating, triggered by the re-generation of the model data, the interference information and re-generating the display data for displaying the display screen including the output screen on which the updated interference information is displayable.

41. The data generation method according to any one of claims 38 to 40 further comprising:
outputting the display data to the display apparatus; and
displaying the interference information based on the display data by the display apparatus.

42. The data generation method according to claim 41, wherein
in a case where the display data is re-generated, the outputting the display data includes re-outputting the re-generated display data to the display apparatus,
in a case where the display data is re-outputted, the displaying the interference information includes displaying the interference information based on the re-outputted display data.

43. The data generation method according to claim 41 or 42, wherein
the outputting the display data includes re-outputting, triggered by a re-generation of the display data, the re-generated display data to the display apparatus,
the displaying the interference information includes displaying, triggered by the re-output of the display data, the interference information based on the re-outputted display data.

44. The data generation method according to any one of claims 1 to 43, wherein
the interference includes a plurality of interferences including the interference between the build head and the build object and the interference between the build head and the placement apparatus,
the generating the display data includes generating display data for displaying, on the display apparatus, the interference information indicating at least one selected from the plurality of interferences.

45. The data generation method according to any one of claims 1 to 44 comprising outputting the display data to the display apparatus.

46. The data generation method according to any one of claims 1 to 45, wherein
the building of the object is performed while changing a positional relationship between the build head and the build object.

47. The data generation method according to any one of claims 1 to 46, wherein
the build object before the additive building of the object is completed is a build object in the middle of the additive building from a start to an end of the additive building using the build head.

48. The data generation method according to any one of claims 1 to 47, wherein
a base member is placed on the placement apparatus,
the build object is additively built on the base member,
the display data includes display data for displaying a three-dimensional model of the base member,
the interference information includes information indicating an interference between the build head and the base member.

49. The data generation method according to any one of claims 1 to 48, wherein
the display data includes display data for displaying, on the display apparatus, a three-dimensional model representing the build head and a three-dimensional model representing the placement apparatus.

50. The data generation method according to any one of claims 1 to 25, wherein
the generating the build data includes generating build data for additively building the object based on the re-generated model data.

51. A build method for building the object by a build apparatus using the data generation method according to any one of claims 1 to 50.

52. A data generation method for generating data related to a display of an interference between a processing head and a second object that is predicted to occur when the processing head processes a first object, wherein
the data generation method includes generating display data for displaying a three-dimensional model representing the second object on a display apparatus based on model data representing a three-dimensional shape of the first object,
the display data includes, as interference information, interference depth information indicating a degree of the interference between the processing head and the second object.

53. The data generation method according to claim 54, wherein
the display data includes data for changing a display aspect of the interference depth information based on a difference of the degree of the interference.

54. The data generation method according to claim 53, wherein
in a case where the degree of the interference that is predicted to occur at a first part of the second object is different from the degree of the interference that is predicted to occur at a second part of the second object, the display data includes data for changing the display aspect of the interference depth information displayed together with a model part of the three-dimensional model corresponding to the first part and the display aspect of the interference depth information displayed together with a model part of the three-dimensional model corresponding to the second part.

55. The data generation method according to claim 53 or 54, wherein
the display data includes data for displaying the interference depth information together with the three-dimensional model by changing, based on the degree of the interference that is predicted to occur at each part of the second object, a display aspect of the each part displayed on the display apparatus.

56. The data generation method according to any one of claims 53 to 55, wherein
the display aspect includes a display color.

57. The data generation method according to any one of claims 52 to 56, wherein
the interference depth information includes information indicating an interference between a measurement head and the second object that is predicted to occur when the measurement head for measuring the first object measures the first object.

58. A data generation method for generating data related to a display of an interference between a processing head and a second object that is predicted to occur when the processing head processes a first object, wherein
the data generation method includes generating display data for displaying a three-dimensional model representing the second object on a display apparatus based on model data representing a three-dimensional shape of the first object,
the display data includes interference information indicating the interference between the processing head and the second object,
the generating the display data includes generating display data for displaying, on the display apparatus, the three-dimensional model representing the second object at a designated point in a period from a start point to an end point of the processing together with the interference information of the interference that is predicted to occur at the designated point.

59. The data generation method according to claim 58, wherein
the display data includes display data for displaying, on the display apparatus, a progress object which represents a progress from a start of the building or a time from the start of the building and by which the designated point can be determined,
the generating the display data includes generating display data for displaying, on the display apparatus, the progress object and the three-dimensional model representing the second object at the designated point together with the interference information of the interference that is predicted to occur at the designated point.

60. The data generation method according to claim 59, wherein
the interference information includes interference time point information related to an interference time point at which it is predicted that the interference between the processing head and the second object occurs in the period,
an indicator indicating the interference time point is added to the progress object.

61. The data generation method according to claim 60, wherein
in a case where the indicator is selected, the generating the display data includes generating the display data for displaying the three-dimensional model representing the second object at the interference time point indicated by the selected indicator and the interference information related to the interference that is predicted to occur at the selected interference time point.

62. The data generation method according to claim 60 or 61, wherein
the display data includes data for changing a display aspect of the indicator based on a degree of the interference that is predicted to occur at the interference time point.

63. The data generation method according to any one of claims 58 to 62, wherein
in a case where a second point that is different from a first point is newly determined as the designated point in a situation where the first point is determined as the designated point and the display data for displaying the three-dimensional models representing the processing head and the second object at the first point and the interference information related to the interference that is predicted to occur at the first point is generated, the generating the display data includes re-generating the display data for displaying the three-dimensional model representing the second object and the interference information related to the interference that is predicted between the first point and the second point.

64. The data generation method according to any one of claims 58 to 63, wherein
in a case where a second point that is different from a first point is newly determined as the designated point in a situation where the first point is determined as the designated point and the display data for displaying the three-dimensional models representing the processing head and the second object at the first point and the interference information related to the interference that is predicted to occur at the first point is generated, the generating the display data includes re-generating the display data for displaying the three-dimensional models representing the processing head and the second obj ect at the second point and the interference information related to the interference that is predicted to occur at the second point.

65. A data generation method for generating data related to a display of an interference between a processing head and a second object that is predicted to occur when the processing head processes a first object, wherein
the data generation method includes:
setting a parameter designating a shape of the first object based on an input of an input apparatus;
generating model data representing a three-dimensional shape of the first object based on the parameter; and
generating display data for displaying a three-dimensional model representing the second object on a display apparatus based on the model data representing the three-dimensional shape of the first object,
the display data includes interference information related to the interference between the processing head and the second object,
the generating the display data includes generating display data for displaying, on the display apparatus, a display screen including a parameter display screen on which the parameter is displayable and an output screen on which the interference information is displayable.

66. The data generation method according to claim 65, wherein
in a case where the parameter is re-set based on the input of the input apparatus, the generating the model data includes re-generating the model data based on the re-set parameter,
in a case where the model data is re-generated, the generating the display data includes updating the interference information and re-generating the display data for displaying the display screen including the output screen on which the updated interference information is displayable.

67. The data generation method according to claim 65 or 66, wherein
the generating the model data includes re-generating, triggered by a re-setting of the parameter based on the input of the input apparatus, the model data based on the re-set parameter,
the generating the display data includes updating, triggered by the re-generation of the model data, the interference information and re-generating the display data for displaying the display screen including the output screen on which the updated interference information is displayable.

68. The data generation method according to any one of claims 65 to 67 further comprising:
outputting the display data to the display apparatus; and
displaying the interference information based on the display data by the display apparatus.

69. The data generation method according to claim 68, wherein
in a case where the display data is re-generated, the outputting the display data includes re-outputting the re-generated display data to the display apparatus,
in a case where the display data is re-outputted, the displaying the interference information includes displaying the interference information based on the re-outputted display data.

70. The data generation method according to claim 68 or 69, wherein
the outputting the display data includes re-outputting, triggered by a re-generation of the display data, the re-generated display data to the display apparatus,
the displaying the interference information includes displaying, triggered by the re-output of the display data, the interference information based on the re-outputted display data.

71. A data generation method for generating data related to a display of an interference between a processing head and a second object that is predicted to occur when the processing head processes a first object, wherein
the data generation method includes:
setting a parameter designating a shape of the first object based on an input of an input apparatus;
generating model data representing a three-dimensional shape of the first object based on the parameter; and
generating display data for displaying a three-dimensional model representing the second object on a display apparatus based on the model data representing the three-dimensional shape of the first object,
the display data includes interference information indicating the interference between the processing head and the second object,
the data generation method includes generating display data for displaying, on the display apparatus, a display object for suggesting a re-setting of the parameter to a user together with the interference information.

72. The data generation method according to claim 71, wherein
the display data includes data for displaying the display screen including the display object and a parameter display screen on which the parameter is displayable.

73. The data generation method according to claim 71 or 72, wherein
the display data includes data for displaying the display screen including the display object and an output screen on which three-dimensional models representing the processing head and the second object are displayable.

74. The data generation method according to any one of claims 71 to 73, wherein
the display object includes a display object for suggesting, to the user, at least one of a recommended value of the parameter and a recommended shape of the first object after the processing.

75. The data generation method according to claim 74, wherein
the recommended value includes a value related to a trajectory parameter of the parameter.

76. The data generation method according to any one of claims 52 to 75 further comprising generating the model data based on a parameter that is set based on an input of an input apparatus and that designates a shape of the first object after the processing, wherein
generating the interference information includes generating the interference information based on the generated model data.

77. The data generation method according to any one of claims 52 to 76 comprising generating a plurality of pieces of interference information each of which indicates a degree of an interference between the processing head and respective one of a plurality of different second objects that is predicted to occur when the processing head processes the first object, wherein
the generating the display data includes: selecting, from the plurality of pieces of interference information, at least one piece of interference information corresponding to at least one second object of the plurality of second objects; and generating the display data for displaying the selected at least one piece of interference information.

78. The data generation method according to any one of claims 52 to 77 further comprising outputting the display data to the display apparatus

79. The data generation method according to any one of claims 52 to 78, wherein
the processing of the first object is performed while changing a positional relationship between the processing head and the first object.

80. The data generation method according to any one of claims 52 to 79, wherein
the first object is a processing target object that is currently being processed or that has been already processed.

81. The data generation method according to any one of claims 52 to 80, wherein
the second object includes at least one of the first object and a placement apparatus on which the first object is placed, a positional relationship between the placement apparatus and the processing head is changeable.

82. The data generation method according to any one of claims 52 to 81, wherein
the display data includes data for displaying a three-dimensional model representing the processing head and a three-dimensional model representing the second object together.

83. The data generation method according to any one of claims 52 to 82, wherein
the processing head builds a build object by performing an additive manufacturing on the first object,
the second object includes at least a part of the build object.

84. A processing method for processing the object by a processing apparatus using the data generation method according to any one of claims 52 to 83.

85. A data generation method comprising:
generating, based on an input of an input apparatus, model data representing a three-dimensional shape of an object that is processed on a placement apparatus by using a processing head;
generating, based on the generated model data, display data for displaying a three-dimensional model related to the object on a display apparatus; and
generating, based on the model data, processing data for processing the object,
wherein
the three-dimensional model related to the object includes a three-dimensional model of a processed object before the processing of the object is completed,
the display data includes interference information indicating an interference between the processing head and at least one of the processed object and the placement apparatus,
when a re-input of the input apparatus is performed, the model data and the display data are re-generated based on the re-input,
the interference information is updated based on the re-input.

86. A data generation method comprising:
generating, based on an input of an input apparatus, model data representing a three-dimensional shape of an object that is processed on a placement apparatus by using a processing head;
generating, based on the generated model data, display data for displaying a three-dimensional model related to the object on a display apparatus; and
generating, based on the model data, processing data for processing the object,
wherein
the three-dimensional model related to the object includes a three-dimensional model of a processed object before the processing of the object is completed,
the display data includes interference information indicating an interference between the processing head and at least one of the processed object and the placement apparatus,
the generating the display data includes generating display data for displaying, on the display apparatus, the three-dimensional model representing the processed object at a designated point in a period from a start point to an end point of the processing together with the interference information of the interference that is predicted to occur at the designated point.

87. A data generation apparatus configured to:
generate, based on an input of an input apparatus, model data representing a three-dimensional shape of an object that is additively built on a placement apparatus by using a build head;
generate, based on the generated model data, display data for displaying a three-dimensional model related to the object on a display apparatus; and
generate, based on the model data, build data for additively building the object,
wherein
the three-dimensional model related to the object includes a three-dimensional model of a build object before the additive building of the object is completed,
the display data includes interference information indicating an interference between the build head and at least one of the build object and the placement apparatus,
when a re-input of the input apparatus is performed, the model data and the display data are re-generated based on the re-input,
the interference information is updated based on the re-input.

88. A data generation apparatus configured to:
generate, based on an input of an input apparatus, model data representing a three-dimensional shape of an object that is additively built on a placement apparatus by using a build head;
generate, based on the generated model data, display data for displaying a three-dimensional model related to the object on a display apparatus; and
generate, based on the model data, build data for additively building the object,
wherein
the three-dimensional model related to the object includes a three-dimensional model of a build object before the additive building of the object is completed,
the display data includes interference information indicating an interference between the build head and at least one of the build object and the placement apparatus,
the data generation apparatus includes generating display data for displaying, on the display apparatus, the three-dimensional model representing the build object at a designated point in a period from a start point to an end point of the additive building together with the interference information of the interference that is predicted to occur at the designated point.

89. A data generation apparatus configured to generate data related to a display of an interference between a processing head and a second object that is predicted to occur when the processing head processes a first object, wherein
the data generation apparatus generates display data for displaying a three-dimensional model representing the second object on a display apparatus based on model data representing a three-dimensional shape of the first object,
the display data includes interference depth information indicating a degree of the interference between the processing head and the second object.

90. A data generation apparatus configured to generate data related to a display of an interference between a processing head and a second object that is predicted to occur when the processing head processes a first object, wherein
the data generation apparatus generates display data for displaying a three-dimensional model representing the second object on a display apparatus based on model data representing a three-dimensional shape of the first object,
the display data includes interference information indicating the interference between the processing head and the second object,
the data generation apparatus generates display data for displaying, on the display apparatus, the three-dimensional model representing the object at a designated point in a period from a start point to an end point of the processing together with the interference information of the interference that is predicted to occur at the designated point.

91. A data generation apparatus configured to generate data related to a display of an interference between a processing head and a second object that is predicted to occur when the processing head processes a first object, wherein
the data generation apparatus is configured to:
set a parameter designating a shape of the first object based on an input of an input apparatus;
generate model data representing a three-dimensional shape of the first object based on the parameter; and
generate display data for displaying a three-dimensional model representing the second object on a display apparatus based on the model data representing the three-dimensional shape of the first object,
the display data includes interference information related to the interference between the processing head and the second object,
the data generation apparatus generates display data for displaying, on the display apparatus, a display screen including a parameter display screen on which the parameter is displayable and an output screen on which the interference information is displayable.

92. A data generation apparatus configured to generate data related to a display of an interference between a processing head and a second object that is predicted to occur when the processing head processes a first object, wherein
the data generation apparatus is configured to:
set a parameter designating a shape of the first object based on an input of an input apparatus;
generate model data representing a three-dimensional shape of the first object based on the parameter; and
generate display data for displaying a three-dimensional model representing the second object on a display apparatus based on the model data representing the three-dimensional shape of the first object,
the display data includes interference information indicating the interference between the processing head and the second object,
the data generation apparatus generates display data for displaying, on the display apparatus, a display object for suggesting a re-setting of the parameter to a user together with the interference information.

93. A computer program that allows a computer to perform the data generation method according to any one of claims 1 to 50, 52 to 83, and 85 to 86.

94. A recording medium on which the computer program according to claim 93 is recorded.

95. A display method comprising:
generating display data based on model data representing a three-dimensional shape of an object that is additively built on a placement apparatus by using a build head, model data of the build head, and model data of the placement apparatus; and
displaying, based on the display data, a three-dimensional model related to the object, a three-dimensional model of the build head, and a three-dimensional model of the placement apparatus on a display apparatus, wherein
the three-dimensional model related to the object includes a three-dimensional model of a build object before the additive building of the object is completed,
the display method displays, on the display apparatus, interference information indicating an interference between the build head and at least one of the build object and the placement apparatus together with the three-dimensional model of the build object, the three-dimensional model of the build head, and the three-dimensional model of the placement apparatus.

96. The display method according to claim 95, wherein
a display by the display apparatus based on the display data includes a relative positional change between the three-dimensional model of the build object, the three-dimensional model of the build head, and the three-dimensional model of the placement apparatus in the additive building.
